# EUROPEAN PATENT SPECIFICATION

(11) **EP 2 169 022 B1**
(45) Date of publication and mention of the grant of the patent: **16.11.2011**
(21) Application number: 09170783.6
(22) Date of filing: 21.09.2009
(51) Int. Cl.: C09D 11/10

(54) **Ink composition and inkjet recording method**
Tintenzusammensetzung und Tintenaufzeichnungsverfahren
Composition d'encre et procédé d'enregistrement à jet d'encre

(30) Priority: 29.09.2008 JP 2008250639
(43) Date of publication of application: 31.03.2010
(73) Proprietor: Fujifilm Corporation, Minato-ku Tokyo (JP)
(72) Inventor: Oshima, Yasuhito, Ashigarakami-gun Kanagawa (JP)
(74) Representative: Grünecker, Kinkeldey, Stockmair & Schwanhäusser

(56) References cited:
- EP-A- 1 829 684
- US-A1- 2007 123 601

## Description

The present invention relates to an ink composition suitably used for inkjet recording, and an inkjet recording method.

As image recording methods for forming an image on a recording medium such as paper based on an image data signal, there are an electrophotographic system, sublimation type and melt type thermal transfer systems, an inkjet system, etc. Among them, with regard to the inkjet system, since it can be carried out using inexpensive equipment and an image is formed directly on a recording medium by discharging an ink composition only on a required image area, the ink composition can be used efficiently and the running cost is low. Furthermore, there is little noise and it is excellent as an image recording device.

In recent years, a solvent-free type inkjet recording method in which drawing by inkjet is carried out using an ink composition that is curable by irradiation with radiation such as UV rays (radiation curing type inkjet recording ink composition) and the ink composition is then cured by irradiation with radiation such as UV rays has been attracting attention. In general, compared with an aqueous ink composition containing water as a diluent or a solvent-based ink composition containing an organic solvent as a diluent, an inkjet recording method employing a radiation curing type ink composition makes it possible to draw on a non-absorbing substrate such as glass, metal, or a plastic substrate, and has merits such as a wide substrate application range, excellent scratch resistance and solvent resistance of a drawn image, high sensitivity, excellent productivity and, because it does not contain a volatile solvent, little effect of odor, etc. on the human body and low load on the environment.

With regard to the curing mechanism of actinic radiation-curing inks, they are broadly divided into cationic polymerization and radical polymerization types; compared with the radical polymerization type, the cationic polymerization type has merits such as volume shrinkage at the time of curing being suppressed, high adhesion to a substrate, high curing speed due to the absence of polymerization inhibition by oxygen as in the radical polymerization type, and excellent scratch resistance and solvent resistance of a cured printed material due to little residual monomer, and efforts toward making practical use thereof are actively being carried out.

Cationic polymerization type actinic radiation-curing ink compositions generally comprise as main components a cationically polymerizable monomer (e.g. a vinyl ether compound, an oxirane compound, an oxetane compound, etc.), a compound that generates an acid by the action of actinic radiation (also called a photo-acid generator or cationic photopolymerization initiator), and a colorant.

As such a cationic polymerization type actinic radiation-curing ink composition, for example, JP-A-9-183928 (JP-A denotes a Japanese unexamined patent application publication) discloses a UV-curable resin composition for an inkjet recording method that comprises a cationically polymerizable material and a cationic photopolymerization initiator.

Furthermore, JP-A-2004-91553 discloses an actinic radiation-curable resin composition comprising a polyfunctional oxetane compound having two or more oxetane rings.

JP-A-2007-224227 discloses an ink composition comprising a polyfunctional oxetane compound, a polyfunctional oxirane compound, a highly polar group-containing monofunctional oxetane compound and/or a highly polar group-containing monofunctional oxirane compound, a cationic polymerization initiator, and a colorant.

Moreover, JP-A-2008-1849 discloses an actinic light-curing inkjet ink composition comprising a urethane-modified epoxy resin, a photo-acid generator, a cationically polymerizable monomer, and a pigment.

Conventional cationic polymerization type actinic radiation-curing ink compositions, for example, ink compositions disclosed by JP-A-9-183928, JP-A-2004-91553, JP-A-2007-224227, and JP-A-2008-1849, do not yet have sufficient performance in practice in terms of curing speed, scratch resistance and flexibility of a cured printed material, and dischargeability, which are required for inkjet ink compositions, and there is a demand for further improvement.

It is an object of the present invention to provide an ink composition having excellent dischargeability, curability, scratch resistance, and flexibility, and an inkjet recording method employing the ink composition.

The objects have been attained by means described in <1> or <7> below. They are described together with <2> to <6>, which are preferred embodiments.
<1> An ink composition comprising (A) a cationically polymerizable compound, (B) a compound that generates an acid upon exposure to radiation, and (C) a colorant, the cationically polymerizable compound (A) comprising a polyfunctional oxetane compound having an -NRCO- bond (R denotes a hydrogen atom or a monovalent organic group),
<2> the ink composition according to <1> above, wherein the polyfunctional oxetane compound having an -NRCO- bond has a content of 2 to 30 wt % relative to the total weight of the ink composition,
<3> the ink composition according to <1> or <2> above, wherein the polyfunctional oxetane compound having an -NRCO- bond has a molecular weight of 400 to 100,000,
<4> the ink composition according to any one of <1> to <3> above, wherein it comprises three or more types of cationically polymerizable compounds,
<5> the ink composition according to any one of <1> to <4> above, wherein it comprises one or more types of polyfunctional oxetane compounds having an -NRCO-bond and two or more types of cationically polymerizable compounds other than a polyfunctional oxetane compound having an -NRCO- bond,
<6> the ink composition according to any one of <1> to <5> above, wherein it comprises an amine compound, and
<7> an inkjet recording method comprising (a¹) a step of discharging the ink composition according to any one of <1> to <6> above onto a recording medium and (b¹) a step of curing the ink composition by irradiating the discharged ink composition with actinic radiation.

In accordance with the present invention, there can be provided an ink composition having excellent dischargeability, curability, scratch resistance, and flexibility, and an inkjet recording method employing the ink composition.

### (1) Ink composition

The ink composition (hereinafter, also called simply an 'ink') of the present invention comprises (A) a cationically polymerizable compound, (B) a compound that generates an acid upon exposure to radiation, and (C) a colorant, the cationically polymerizable compound (A) comprising a polyfunctional oxetane compound having an -NRCO- bond (R denotes a hydrogen atom or a monovalent organic group).

The ink composition of the present invention may suitably be used as an inkjet recording ink composition.

The present invention is explained in detail below.

The ink composition of the present invention is an ink composition that can be cured by radiation, and is an oil-based ink composition.

The 'radiation' referred to in the present invention is not particularly limited as long as it is actinic radiation that can provide energy that enables an initiating species to be generated in the ink composition when irradiated, and broadly includes α rays, γ rays, X rays, UV rays, visible light, and an electron beam; among these, UV rays and an electron beam are preferable from the viewpoint of curing sensitivity and the availability of equipment, and UV rays are particularly preferable. The ink composition of the present invention is therefore preferably an ink composition that is curable upon exposure to UV rays as radiation.

With regard to the ink composition of the present invention, it has been found that an ink composition that has excellent curing speed, scratch resistance and flexibility of a cured printed material, and discharge stability and can suitably be used as a radiation curing type inkjet ink composition can be provided by the use of a polyfunctional oxetane compound having an -NRCO- bond as a cationically polymerizable compound.

Although JP-A-2004-91553 and JP-A-2007-224227 describe a carbamoyl group as a substituent that a polyfunctional oxetane compound may have, there is no description of the effects thereof, and no specific compound example is given. (A) Cationically polymerizable compound

The ink composition of the present invention comprises (A) a cationically polymerizable compound.

Furthermore, the cationically polymerizable compound (A) of the ink composition of the present invention comprises at least a polyfunctional oxetane compound having an -NRCO- bond (R denotes a hydrogen atom or a monovalent organic group).

### Polyfunctional oxetane compound having -NRCO- bond (specific polyfunctional oxetane compound)

The ink composition of the present invention comprises a polyfunctional oxetane compound having an -NRCO- bond (also called a 'specific polyfunctional oxetane compound') as a cationically polymerizable compound.

The -NRCO- bond-containing structure is preferably a structure selected from the group consisting of a urethane bond, a urea bond, and an isocyanuric acid structure (isocyanurate group), and more preferably a structure selected from the group consisting of a urethane bond and an isocyanuric acid structure (isocyanurate group).

Furthermore, with regard to the polyfunctional oxetane compound having an - NRCO- bond, it is preferable that at least one of the groups, other than the carbonyl group, that are bonded to the nitrogen atom of the -NRCO- bond is not a hydrogen atom, that is, the group containing the -NRCO- bond is not a carbamoyl group.

The polyfunctional oxetane compound having an -NRCO- bond is preferably a compound represented by Formula (L).

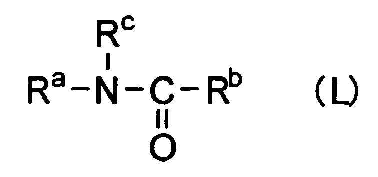

In Formula (L), R^{a}, R^{b}, and R^{c} independently denote a hydrogen atom or a monovalent organic group formed from elements selected from the group consisting of carbon, hydrogen, nitrogen, oxygen, and sulfur (not all of R^{a}, R^{b}, and R^{c} being hydrogen atoms), and any one or two or more of R^{a}, R^{b}, and R^{c} have at least two oxetanyl groups represented by Formula (P) or Formula (Q) as the total for R^{a}, R^{b}, and R^{c}. Furthermore, at least two selected from the group consisting of R^{a}, R^{b}, and R^{c} may be bonded to form a ring.

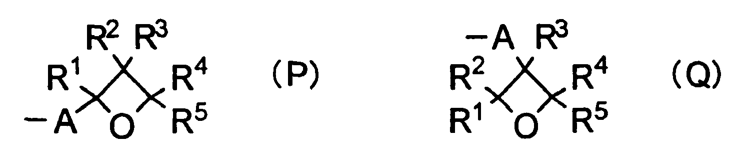

In Formula (P) and Formula (Q), A denotes a single bond or a divalent organic group formed from elements selected from the group consisting of carbon, hydrogen, nitrogen, oxygen, and sulfur, and R¹ to R⁵ independently denote a hydrogen atom or a hydrocarbon group having 1 to 20 carbon atoms. The hydrocarbon group is preferably an alkyl group having 1 to 8 carbon atoms, and more preferably an alkyl group having 1 to 4 carbon atoms.

When R^{a}, R^{b}, or R^{c} is a monovalent organic group formed from elements selected from the group consisting of carbon, hydrogen, nitrogen, oxygen, and sulfur, the total number of atoms forming it is preferably 1 to 20,000 (when it has a substituent represented by Formula (P) or Formula (Q), the number of atoms forming the substituent is included).

When A is a divalent organic group formed from elements selected from the group consisting of carbon, hydrogen, nitrogen, oxygen, and sulfur, the total number of atoms forming it is preferably 1 to 2,000.

The number of oxetanyl groups represented by Formula (P) or Formula (Q) that Formula (L) has is preferably 2 or more, more preferably 2 to 10, yet more preferably 2 to 6, and particularly preferably 2 or 3.

The polyfunctional oxetane compound having an -NRCO- bond is preferably a compound represented by Formula (M) or Formula (N).

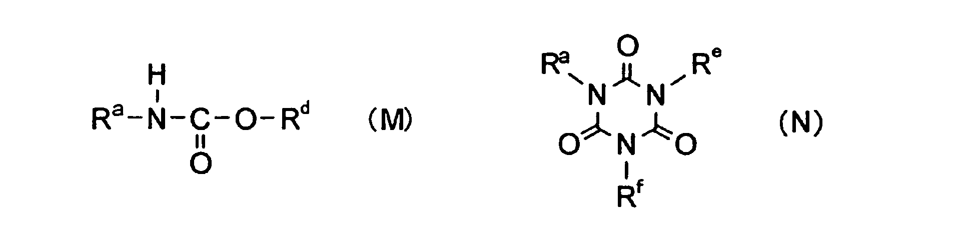

In Formula (M), R^{a} has the same meaning as that of R^{a} and R^{b} in Formula (L), and a preferred range is also the same. Furthermore, in Formula (M), R^{d} denotes a monovalent organic group formed from elements selected from the group consisting of carbon, hydrogen, nitrogen, oxygen, and sulfur.

In Formula (N), R^{a}, R^{e}, and R^{f} independently have the same meaning as that of R^{a} in Formula (L), and a preferred range is also the same.

It is preferable that the -NRCO- bond of the polyfunctional oxetane compound having an -NRCO- bond is not at a terminus of the compound but is located in the interior.

That is, in Formula (L), at least one of R^{a} and R^{c}, and R^{b}, are independently a monovalent organic group having a total number of atoms of 1 to 20,000 and being formed from elements selected from the group consisting of carbon, hydrogen, nitrogen, oxygen, and sulfur.

In Formula (M), R^{a} and R^{d} are preferably independently a monovalent organic group having a total number of atoms of 1 to 20,000 and formed from elements selected from the group consisting of carbon, hydrogen, nitrogen, oxygen, and sulfur.

Examples of the monovalent or divalent organic group formed from elements selected from the group consisting of carbon, hydrogen, nitrogen, oxygen, and sulfur include organic groups formed by removing one or two hydrogen atoms forming optionally substituted hydrocarbons below (including a hydrogen atom on a substituent).

Examples of the hydrocarbons include aliphatic hydrocarbons and aromatic hydrocarbons.

Preferred examples of the aliphatic hydrocarbons include aliphatic hydrocarbons having 1 to 40 carbon atoms such as methane, ethane, propane, butane, pentane, hexane, heptane, octane, nonane, decane, dodecane, octadecane, cyclopropane, cyclobutane, cyclopentane, cyclohexane, bicyclo[3.2.1]octane, spiro[4.5]decane, adamantane, bornane, norbornane, *cis*- or *trans*-hydrindane, *cis*- or *trans*-decahydronaphthalene, *exo*- or *endo*-tricyclo[5.2.1.0^{2,6}]decane, ethylene, propylene, 1-butene, 1-hexene, 1-heptadecene, 2-butene, 2-hexene, 4-nonene, 7-tetradecene, butadiene, piperylene, 1,9-decadiene, cyclopentene, cyclohexene, cyclooctene, 1,4-cyclohexadiene, 1,5-cyclooctadiene, 1,5,9-cyclododecatriene, 2-bornene, 2-norbornene, *exo*- or *endo*-tricyclo[5.2.1.0^{2,6}]decan-3-ene, octahydronaphthalene, tricyclo[6.2.1.0^{2,7}]undec-4-ene, tetracyclo[6.2.1.1^{3,6}.0^{2,7}]dodec-4-ene, bicyclo[2.2.1]hepta-2,5-diene, 3a,4,7,7a-tetrahydroindene, acetylene, 1-propyne, and 2-hexyne.

Preferred examples of the aromatic hydrocarbons include aromatic hydrocarbons such as benzene, naphthalene, anthracene, phenanthrene, pyrene, acenaphthylene, triphenylene, indene, fluorene, and 1,2,3,4-tetrahydronaphthalene.

Furthermore, the monovalent or divalent organic group formed from elements selected from the group consisting of carbon, hydrogen, nitrogen, oxygen, and sulfur may be an organic group formed by removing one or two hydrogen atoms from a hydrocarbon formed by combining two or more of the above hydrocarbons.

Moreover, one or more of any of the carbon atoms forming such an organic group may be replaced by a hetero atom (group) selected from an oxygen atom, a nitrogen atom, a sulfur atom, and a combination thereof (e.g. -SO- or -SO₂-).

As the substituent, a monovalent non-metallic atomic group excluding a hydrogen atom can be cited; examples thereof include a halogen atom (-F, -Br, -Cl, -I), a hydroxy group, an alkoxy group, an aryloxy group, a mercapto group, an alkylthio group, an arylthio group, an alkyldithio group, an aryldithio group, an amino group, an *N*-alkylamino group, an *N,N*-dialkylamino group, an *N*-arylamino group, an *N,N-*diarylamino group, an *N*-alkyl-*N*-arylamino group, an acyloxy group, a carbamoyloxy group, an *N*-alkylcarbamoyloxy group, an *N*-arylcarbamoyloxy group, an *N,N-*dialkylcarbamoyloxy group, an *N,N*-diarylcarbamoyloxy group, an *N*-alkyl-*N-*arylcarbamoyloxy group, an alkylsulfoxy group, an arylsulfoxy group, an acylthio group, an acylamino group, an *N*-alkylacylamino group, an *N*-arylacylamino group, a ureido group, an *N'*-alkylureido group, an *N*,*N'*-dialkylureido group, an *N'*-arylureido group, an *N',N'*-diarylureido group, an *N'*-alkyl-*N'*-arylureido group, an *N*-alkylureido group, an *N-*arylureido group, an *N*'-alkyl-*N*-alkylureido group, an *N'*-alkyl-*N*-arylureido group, an *N',N'*-dialkyl-*N*-alkylureido group, an *N',N'*-dialkyl-*N*-arylureido group, an *N'*-aryl-*N-*alkylureido group, an *N'*-aryl-*N*-arylureido group, an *N'N*'-diaryl-*N*-alkylureido group, an *N',N*'-diaryl-*N*-arylureido group, an *N'*-alkyl-*N'*-aryl-*N*-alkylureido group, an *N'*-alkyl-*N'-*aryl-*N*-arylureido group, an alkoxycarbonylamino group, an aryloxycarbonylamino group, an *N*-alkyl-*N*-alkoxycarbonylamino group, an *N*-alkyl-*N*-aryloxycarbonylamino group, an *N*-aryl-*N*-alkoxycarbonylamino group, an *N*-aryl-*N*-aryloxycarbonylamino group, a formyl group, an acyl group, a carboxy group and its conjugate base group, an alkoxycarbonyl group, an aryloxycarbonyl group, a carbamoyl group, an *N-*alkylcarbamoyl group, an *N,N*-dialkylcarbamoyl group, an *N*-arylcarbamoyl group, an *N,N*-diarylcarbamoyl group, an *N*-alkyl-*N*-arylcarbamoyl group, an alkylsulfinyl group, an arylsulfinyl group, an alkylsulfonyl group, an arylsulfonyl group, a sulfo group (-SO₃H) and its conjugate base group, an alkoxysulfonyl group, an aryloxysulfonyl group, a sulfinamoyl group, an *N*-alkylsulfinamoyl group, an *N,N*-dialkylsulfinamoyl group, an *N*-arylsulfinamoyl group, an *N,N*-diarylsulfinamoyl group, an *N*-alkyl-*N-*arylsulfinamoyl group, a sulfamoyl group, an *N*-alkylsulfamoyl group, an *N,N-*dialkylsulfamoyl group, an *N*-arylsulfamoyl group, an *N*,*N*-diarylsulfamoyl group, an *N-*alkyl-*N*-arylsulfamoyl group, an *N*-acylsulfamoyl group and its conjugate base group, an *N*-alkylsulfonylsulfamoyl group (-SO₂NHSO₂(alkyl)) and its conjugate base group, an *N*-arylsulfonylsulfamoyl group (-SO₂NHSO₂(aryl)) and its conjugate base group, an *N*-alkylsulfonylcarbamoyl group (-CONHSO₂(alkyl)) and its conjugate base group, an N-arylsulfonylcarbamoyl group (-CONHSO₂(aryl)) and its conjugate base group, an alkoxysilyl group (-Si(Oalkyl)₃), an aryloxysilyl group (-Si(Oaryl)₃), a hydroxysilyl group (-Si(OH)₃) and its conjugate base group, a phosphono group (-PO₃H₂) and its conjugate base group, a dialkylphosphono group (-PO(Oalkyl)₂), a diarylphosphono group (-PO(Oaryl)₂), an alkylarylphosphono group (-PO(Oalkyl)(Oaryl)), a monoalkylphosphono group (-PO(Oalkyl)OH) and its conjugate base group, a monoaryl phosphono group (-PO(Oaryl)OH) and its conjugate base group, a phosphonooxy group (-OPO₃H₂) and its conjugate base group, a dialkylphosphonooxy group (-OPO(Oalkyl)₂), a diarylphosphonooxy group (-OPO(Oaryl)₂), an alkylarylphosphonooxy group (-OPO(Oalkyl)(Oaryl)), a monoalkylphosphonooxy group (-OPO(Oalkyl)OH) and its conjugate base group, a monoarylphosphonooxy group (-OPO(Oaryl)OH) and its conjugate base group, a cyano group, a nitro group, a dialkylboryl group (-B(alkyl)₂), a diarylboryl group (-B(aryl)₂), an alkylarylboryl group (-B(alkyl)(aryl)), a dihydroxyboryl group (-B(OH)₂) and its conjugate base group, an alkylhydroxyboryl group (-B(alkyl)(OH)) and its conjugate base group, an arylhydroxyboryl group (-B(aryl)(OH)) and its conjugate base group, an aryl group, an alkyl group, an alkenyl group, and an alkynyl group.

These substituents may be bonded to each other if this is possible or may be bonded to the hydrocarbon group that is substituted, thus forming a ring, and the substituents may further be substituted.

Preferred examples of the substituents include a halogen atom, an alkoxy group, an aryloxy group, an alkyl group, an alkenyl group, an alkynyl group, and an aryl group.

The polyfunctional oxetane compound having an -NRCO- bond may be synthesized using a conventionally known organic synthetic method. For example, a compound in which two or more oxetane groups are linked via a urethane bond may be synthesized by reacting a hydroxy group-containing oxetane compound such as 3-ethyl-3-hydroxymethyloxetane (ARON OXETANE OXT-101, Toagosei Co., Ltd.) and a compound having two or more isocyanate groups.

Furthermore, in the synthesis of a polyurethane compound obtained from at least one type of diisocyanate compound and at least one type of diol compound, a polyurethane compound having oxetanyl groups at two termini may be synthesized by synthesizing a polyurethane having isocyanate groups at two termini by reacting under conditions such that the isocyanate equivalent weight of the isocyanate compound exceeds the hydroxy group equivalent weight of the diol compound, and subsequently adding a hydroxy group-containing oxetane compound as a reaction terminator so that it reacts with a terminal isocyanate group.

Examples of the diisocyanate compound include an aromatic diisocyanate compound such as 2,4-tolylene diisocyanate, 2,4-tolylene diisocyanate dimer, 2,6-tolylene diisocyanate, *p*-xylylene diisocyanate, *m*-xylylene diisocyanate, 4,4'-diphenylmethane diisocyanate, 1,5-naphthylene diisocyanate, or 3,3'-dimethylbiphenyl 4,4'-diisocyanate, an aliphatic diisocyanate compound such as hexamethylene diisocyanate, trimethylhexamethylene diisocyanate, lysine diisocyanate, or dimer acid diisocyanate, an alicyclic diisocyanate compound such as isophorone diisocyanate, 4,4'-methylene bis(cyclohexylisocyanate), methylcyclohexane 2,4-diisocyanate, methylcyclohexane 2,6-diisocyanate, or 1,3-(isocyanatomethyl)cyclohexane, and a diisocyanate compound such as a reaction product between a diisocyanate and a diol such as an adduct of 1 mol of 1,3-butylene glycol and 2 mol of tolylene diisocyanate.

The diisocyanate compound may be used singly or in a combination of a plurality thereof.

As the diol compound, a polyether diol compound, a polyester diol compound, a polycarbonate diol compound, etc. can be broadly cited.

Examples of the polyether diol compound include diethylene glycol, triethylene glycol, tetraethylene glycol, pentaethylene glycol, hexaethylene glycol, heptaethylene glycol, octaethylene glycol, di-1,2-propylene glycol, tri-1,2-propylene glycol, tetra-1,2-propylene glycol, hexa-1,2-propylene glycol, di-1,3-propylene glycol, tri-1,3-propylene glycol, tetra-1,3-propylene glycol, di-1,3-butylene glycol, tri-1,3-butylene glycol, hexa-1,3-butylene glycol, polyethylene glycol, polypropylene glycol, and a block copolymer of polyethylene glycol and polypropylene glycol.

These polyether diol compounds are commercially available from Sanyo Chemical Industries, Ltd. as PTMG650, PTMG1000, PTMG2000, PTMG3000, Newpol PE-61, Newpol PE-62, Newpol PE-64, Newpol PE-68, Newpol PE-71, Newpol PE-74, Newpol PE-75, Newpol PE-78, Newpol PE-108, Newpol PE-128, Newpol PE-61, Newpol BPE-20, Newpol BPE-20F, Newpol BPE-20NK, Newpol BPE-20T, Newpol BPE-20G, Newpol BPE-40, Newpol BPE-60, Newpol BPE-100, Newpol BPE-180, Newpol BPE-2P, Newpol BPE-23P, Newpol BPE-3P, Newpol BPE-5P, Newpol 50HB-100, Newpol 50HB-260, Newpol 50HB-400, Newpol 50HB-660, Newpol 50HB-2000, Newpol 50HB-5100, etc.

Specific examples of the polyester diol compound and the polycarbonate diol compound include those shown below. n in the specific examples denotes an integer of 2 or greater.

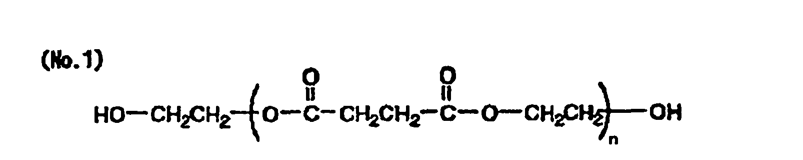

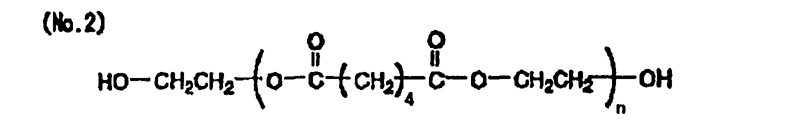

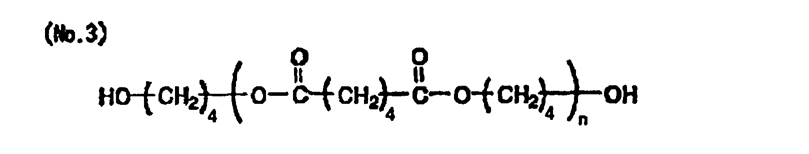

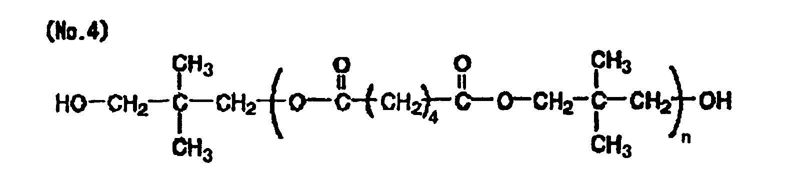

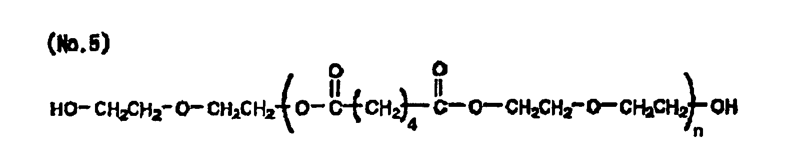

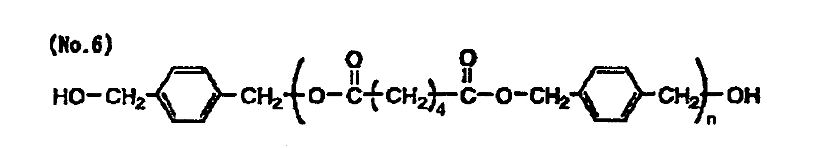

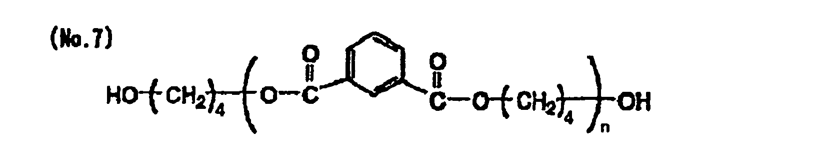

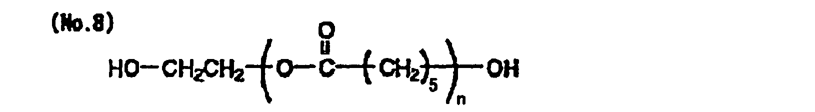

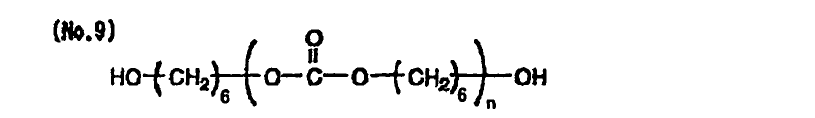

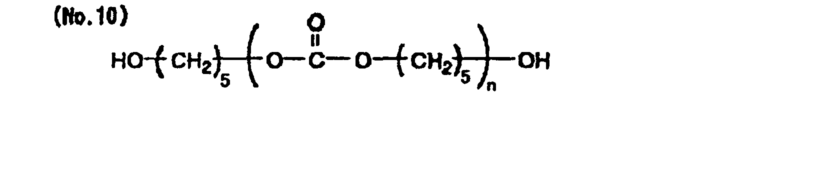

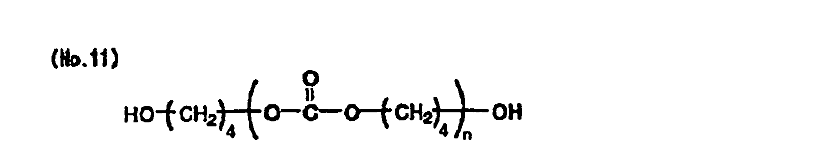

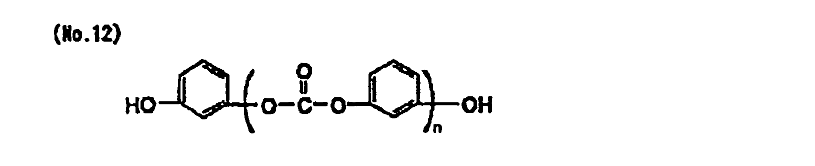

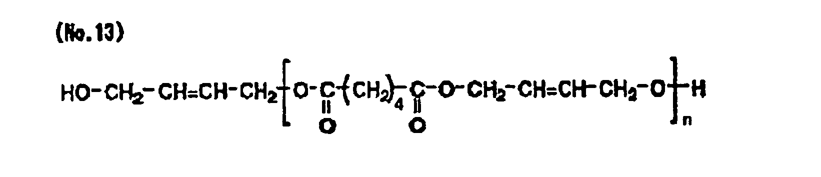

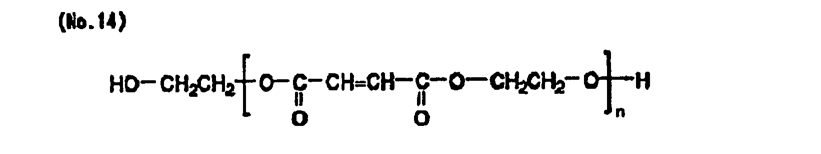

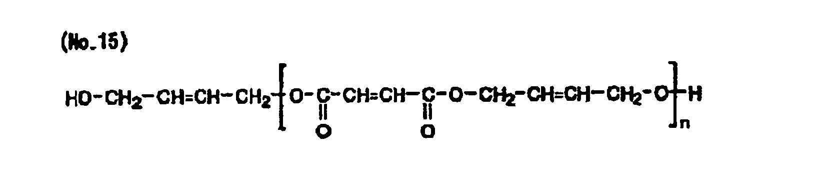

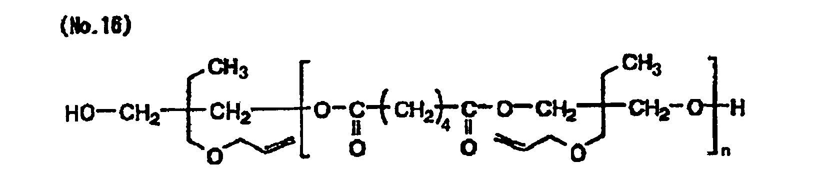

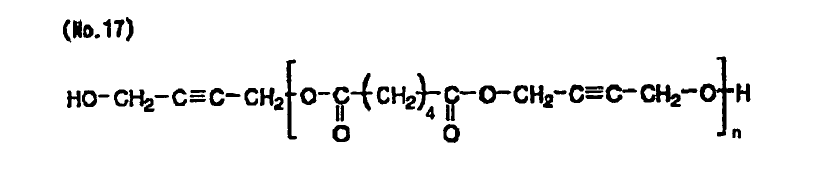

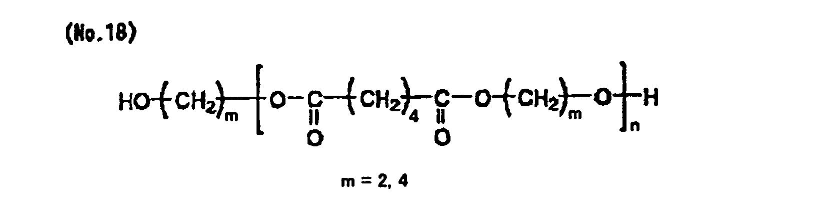

The diol compound may be used singly or in a combination of a plurality thereof.

Furthermore, the polyfunctional oxetane compound having an -NRCO- bond preferably has one or more structures represented by Formula (R) or Formula (S) below as the -NRCO- bond. Moreover, when it has one or more structures represented by Formula (R), it is preferable for it to have two or more structures represented by Formula (R), it is more preferable for it to have 2 or 3 structures, and it is yet more preferable for it to have 2 structures. The structure represented by Formula (S) is also called an 'isocyanuric acid structure' or an 'isocyanurate group'. 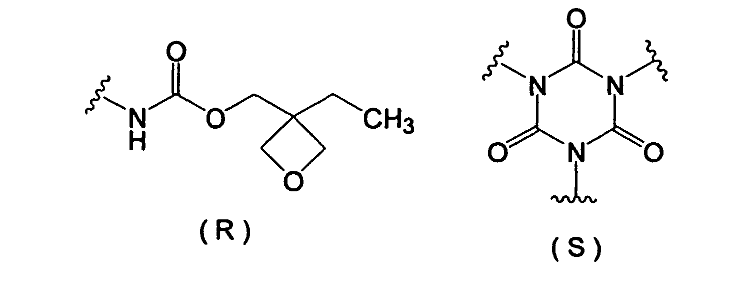 (In the formulae, wavy line portions independently denote a bond portion to another portion.)

Furthermore, the polyfunctional oxetane compound having an -NRCO- bond is preferably a compound represented by Formula (M') below or a compound represented by Formula (N) above, and is more preferably a compound represented by Formula (M") below or a compound represented by Formula (N) above.

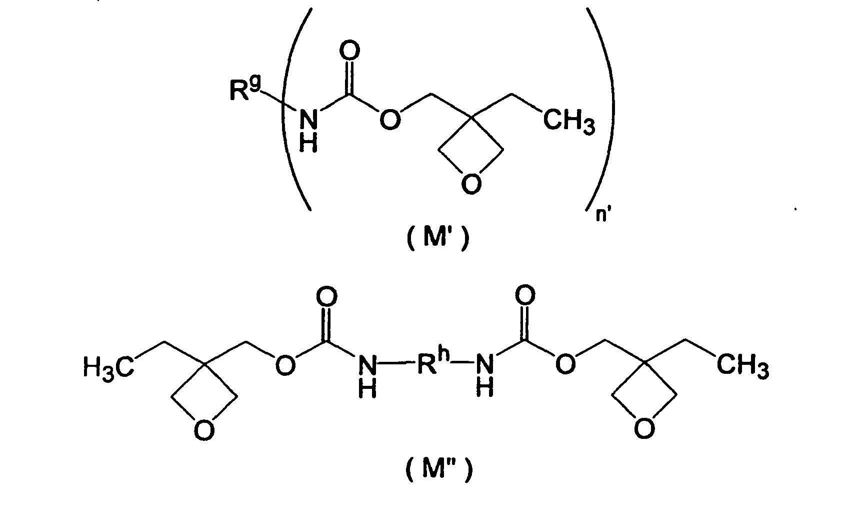

In Formula (M'), R^{g} denotes an n'-valent organic group formed from elements selected from the group consisting of carbon, hydrogen, nitrogen, oxygen, and sulfur, and n' denotes an integer of 2 or more. Furthermore, n' is preferably an integer of 2 to 10, more preferably an integer of 2 to 6, and yet more preferably 2 or 3. Moreover, the total number of atoms in the n'-valent organic group is preferably 1 to 20,000, and more preferably 1 to 2,000.

In Formula (M"), R^{h} denotes a divalent organic group formed from elements selected from the group consisting of carbon, hydrogen, nitrogen, oxygen, and sulfur. The divalent organic group, denoted by R^{h} in Formula (M"), which is formed from elements selected from the group consisting of carbon, hydrogen, nitrogen, oxygen, and sulfur, has the same meaning as that of the divalent organic group, denoted by A in Formula (P) and Formula (Q), which is formed from elements selected from the group consisting of carbon, hydrogen, nitrogen, oxygen, and sulfur, and a preferred range is also the same.

Furthermore, the polyfunctional oxetane compound having an -NRCO- bond is preferably a compound that does not contain an ether bond other than the ether bond contained in the oxetane ring. Moreover, the polyfunctional oxetane compound having an -NRCO- bond is preferably a compound that does not contain an oxygen atom other than the ether bond contained in the oxetane ring, a urethane bond, a urea bond, an ester bond, and an amide bond, and is more preferably a compound that does not contain an oxygen atom other than the ether bond contained in the oxetane ring, a urethane bond, and an ester bond.

The molecular weight of the polyfunctional oxetane compound having an - NRCO- bond is preferably 300 to 100,000, more preferably 400 to 100,000, yet more preferably 400 to 50,000, particularly preferably 500 to 50,000, yet further preferably 1,000 to 30,000, and most preferably 5,000 to 20,000. When in the above-mentioned range, dischargeability, curability, scratch resistance, and flexibility are excellent.

Furthermore, the molecular weight of the polyfunctional oxetane compound having an -NRCO- bond is preferably less than 1,000.

The molecular weight of the polyfunctional oxetane compound having an - NRCO- bond may be a weight-average molecular weight (on a polystyrene basis measured by a gel permeation chromatography method).

The content of the polyfunctional oxetane compound having an -NRCO- bond, relative to the total weight of the ink composition, is preferably 2 to 30 wt %, more preferably 2 to 25 wt %, yet more preferably 2 to 20 wt %, particularly preferably 5 to 15 wt %, and most preferably 5 to 12 wt %. When in the above-mentioned range, dischargeability, curability, scratch resistance, and flexibility are excellent.

### Cationically polymerizable compound other than polyfunctional oxetane compound having -NRCO- bond

The ink composition of the present invention preferably comprises as a cationically polymerizable compound a cationically polymerizable compound other than a polyfunctional oxetane compound having an -NRCO- bond.

Furthermore, the ink composition of the present invention preferably comprises two or more types of cationically polymerizable compounds, more preferably three or more types of cationically polymerizable compounds, yet more preferably one or more types of polyfunctional oxetane compound having an -NRCO- bond and two or more types of cationically polymerizable compounds other than a polyfunctional oxetane compound having an -NRCO- bond, and particularly preferably one type of polyfunctional oxetane compound having an -NRCO- bond and three to five types of cationically polymerizable compounds other than a polyfunctional oxetane compound having an -NRCO- bond.

With regard to the cationically polymerizable compound used in the present invention, known cationically polymerizable compounds such as a compound having an oxirane ring (hereinafter, 'the oxirane ring' is also called an 'epoxy ring') (hereinafter, 'the compounds having as oxiran ring' is also called an 'oxirane compound' or a 'epoxy compound'), a compound having an oxetane ring (hereinafter, also called as a oxetane compound), and a vinyl compound can be used with no particular limitations.

The cationically polymerizable compound used in the present invention is not particularly limited as long as it is a compound that undergoes a polymerization reaction by virtue of a cationic polymerization initiating species generated by the cationic polymerization initiator, which will be described later, and is cured, and various types of cationically polymerizable monomers known as photo-cationically polymerizable monomers may be used. Examples of the cationically polymerizable monomer include epoxy compounds, vinyl ether compounds, oxetane compounds described in JP-A-6-9714, JP-A-2001-31892, JP-A-2001-40068, JP-A-2001-55507, JP-A-2001-310938, JP-A-2001-310937, JP-A-2001-220526, etc.

As the cationically polymerizable compound, for example, a cationically polymerizable type photocuring resin is known, and in recent years cationically photopolymerizable type photocuring resins sensitized to a visible light wavelength region of 400 nm or longer have been disclosed in, for example, JP-A-6-43633 and JP-A-8-324137.

Examples of the epoxy compounds include aromatic epoxides, alicyclic epoxides and aliphatic epoxides.

Examples of the aromatic epoxide include di- or polyglycidyl ethers produced by a reaction between epichlorohydrin and a polyhydric phenol having at least one aromatic nucleus or an alkylene oxide adduct thereof; specific examples include di- or polyglycidyl ethers of bisphenol A or an alkylene oxide adduct thereof, di- or polyglycidyl ethers of hydrogenated bisphenol A or an alkylene oxide adduct thereof, and novolac type epoxy resins. Examples of the alkylene oxide above include ethylene oxide and propylene oxide.

Examples of the alicyclic epoxides include cyclohexene oxide- and cyclopentene oxide-containing compounds obtained by epoxidizing a compound having at least one cycloalkane ring such as a cyclohexene ring or a cyclopentene ring with an appropriate oxidizing agent such as hydrogen peroxide or a peracid.

Examples of the aliphatic epoxides include di- or polyglycidyl ethers of an aliphatic polyhydric alcohol or an alkylene oxide adduct thereof, and representative examples thereof include diglycidyl ethers of an alkylene glycol such as the diglycidyl ether of ethylene glycol, the diglycidyl ether of propylene glycol, and the diglycidyl ether of 1,6-hexanediol, polyglycidyl ethers of a polyhydric alcohol such as the di- or triglycidyl ether of glycerol or an alkylene oxide adduct thereof, and diglycidyl ethers of a polyalkylene glycol such as the diglycidyl ether of polyethylene glycol or an alkylene oxide adduct thereof and the diglycidyl ether of polypropylene glycol or an alkylene oxide adduct thereof. Examples of the alkylene oxide above include ethylene oxide and propylene oxide.

Examples of monofunctional and polyfunctional epoxy compounds that can be used in the invention are listed in detail.

Examples of monofunctional epoxy compounds used in the present invention include phenyl glycidyl ether, *p*-*tert*-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and 4-vinyl cyclohexene oxide.

Furthermore, examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexenylmethyl-3',4'-epoxycyclohexenecarboxylate, 2-(3,4-epoxycyclohexyl-5,5-spiro-3,4-epoxy)cyclohexane-meta-dioxane, bis(3,4-epoxycyclohexylmethyl) adipate, vinylcyclohexene dioxide, 4-vinylepoxycyclohexane, bis(3,4-epoxy-6-methylcyclohexylmethyl) adipate, 3,4-epoxy-6-methylcyclohexenyl 3',4'-epoxy-6'-methylcyclohexenecarboxylate, methylenebis(3,4-epoxycyclohexane), dicyclopentadiene diepoxide, the di(3,4-epoxycyclohexylmethyl) ether of ethylene glycol, ethylene bis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

Examples of monofunctional vinyl ethers and polyfunctional vinyl ethers are described in detail below.

Specific examples of monofunctional vinyl ethers include methyl vinyl ether, ethyl vinyl ether, n-propyl vinyl ether, iso-propyl vinyl ether, n-butyl vinyl ether, iso-butyl vinyl ether, t-butyl vinyl ether, 2-ethylhexyl vinyl ether, n-nonyl vinyl ether, dodecyl vinyl ether, lauryl vinyl ether, octadecyl vinyl ether, cyclohexyl vinyl ether, 2-ethylhexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, diethylene glycol monovinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Furthermore, examples of polyfunctional vinyl ethers include divinyl ethers such as ethylene glycol divinyl ether, diethylene glycol divinyl ether, triethylene glycol divinyl ether, polyethylene glycol divinyl ether, propylene glycol divinyl ether, dipropylene glycol divinyl ether, butylene glycol divinyl ether, hexanediol divinyl ether, cyclohexane dimethanol divinyl ether, bisphenol A alkylene oxide divinyl ether, and bisphenol F alkylene oxide divinyl ether; and polyfunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, an ethylene oxide adduct of trimethylolpropane trivinyl ether, a propylene oxide adduct of trimethylolpropane trivinyl ether, an ethylene oxide adduct of ditrimethylolpropane tetravinyl ether, a propylene oxide adduct of ditrimethylolpropane tetravinyl ether, an ethylene oxide adduct of pentaerythritol tetravinyl ether, a propylene oxide adduct of pentaerythritol tetravinyl ether, an ethylene oxide adduct of dipentaerythritol hexavinyl ether, and a propylene oxide adduct of dipentaerythritol hexavinyl ether.

As the vinyl ether compound, the di- or tri-vinyl ether compounds are preferable from the viewpoint of curability, adhesion to a recording medium, surface hardness of the image formed, etc., and the divinyl ether compounds are particularly preferable.

The oxetane compound in the present invention means a compound having an oxetane ring, and may be selected freely from known oxetane compounds such as those described in JP-A-2001-220526, JP-A-2001-310937, and JP-A-2003-341217.

As the compound having an oxetane ring that can be used in the ink composition of the present invention, a compound having 1 to 4 oxetane rings in the structure is preferable. In accordance with use of such a compound, it becomes easy to maintain the viscosity of the ink composition in a range that gives good handling properties and, furthermore, the cured ink composition can be given high adhesion to the recording medium, which is preferable.

Examples of compounds having 1 to 2 oxetane rings in the molecule include compounds represented by Formulae (1) to (3) below.

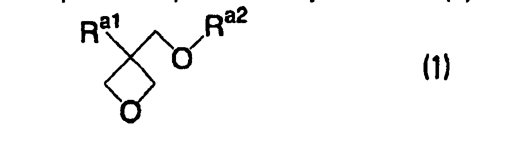

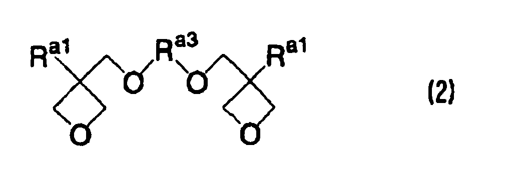

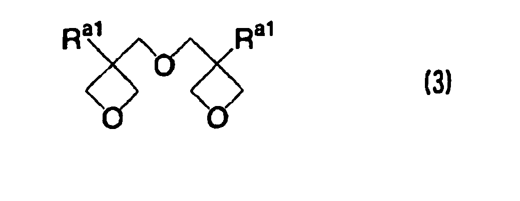

R^{a1} denotes a hydrogen atom, an alkyl group having 1 to 6 carbons, a fluoroalkyl group having 1 to 6 carbons, an allyl group, an aryl group, a furyl group, or a thienyl group. When there are two R^{a1} in the molecule, they may be identical to or different from each other.

Examples of the alkyl group include a methyl group, an ethyl group, a propyl group, and a butyl group, and preferred examples of the fluoroalkyl group include those obtained by substituting any of the hydrogen atoms of the above alkyl groups with a fluorine atom.

R^{a2} denotes a hydrogen atom, an alkyl group having 1 to 6 carbons, an alkenyl group having 2 to 6 carbons, a group having an aromatic ring, an alkylcarbonyl group having 2 to 6 carbons, an alkoxycarbonyl group having 2 to 6 carbons, or an *N-*alkylcarbamoyl group having 2 to 6 carbons. Examples of the alkyl group include a methyl group, an ethyl group, a propyl group, and a butyl group, examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group, and examples of the group having an aromatic ring include a phenyl group, a benzyl group, a fluorobenzyl group, a methoxybenzyl group, and a phenoxyethyl group. Examples of the alkylcarbonyl group include an ethylcarbonyl group, a propylcarbonyl group, and a butylcarbonyl group, examples of the alkoxycarbonyl group include an ethoxycarbonyl group, a propoxycarbonyl group, and a butoxycarbonyl group, and examples of the *N*-alkylcarbamoyl group include an ethylcarbamoyl group, a propylcarbamoyl group, a butylcarbamoyl group, and a pentylcarbamoyl group. R^{a2} may have a substituent, and examples of a substituent include an alkyl group having 1 to 6 carbon atoms and a fluorine atom.

R^{a3} denotes a linear or branched alkylene group, a linear or branched poly(alkyleneoxy) group, a linear or branched unsaturated hydrocarbon group, a carbonyl group, a carbonyl group-containing alkylene group, a carboxyl group-containing alkylene group, a carbamoyl group-containing alkylene group, or a group shown below. Examples of the alkylene group include an ethylene group, a propylene group, and a butylene group, and examples of the poly(alkyleneoxy) group include a poly(ethyleneoxy) group and a poly(propyleneoxy) group. Examples of the unsaturated hydrocarbon group include a propenylene group, a methylpropenylene group, and a butenylene group.

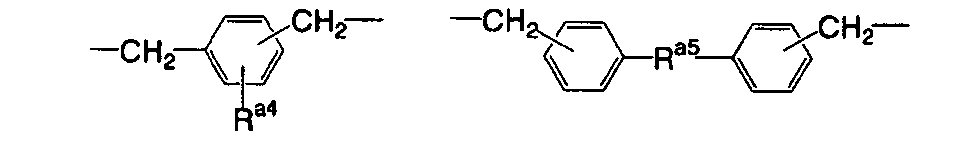

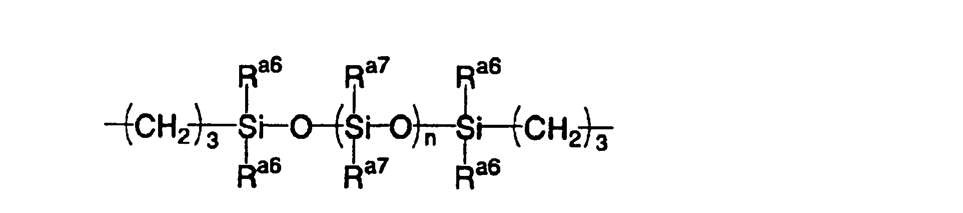

When R^{a3} is the above-mentioned polyvalent group, R^{a4} denotes a hydrogen atom, an alkyl group having 1 to 4 carbons, an alkoxy group having 1 to 4 carbons, a halogen atom, a nitro group, a cyano group, a mercapto group, a lower alkylcarboxyl group, a carboxyl group, or a carbamoyl group.

R^{a5} denotes an oxygen atom, a sulfur atom, a methylene group, NH, SO, SO₂, C(CF₃)₂, or, C(CH₃)₂.

R^{a6} denotes an alkyl group having 1 to 4 carbons or an aryl group, and n is an integer of 0 to 2,000. R^{a7} denotes an alkyl group having 1 to 4 carbons, an aryl group, or a monovalent group having the structure below. In the formula, R^{a8} denotes an alkyl group having 1 to 4 carbons or an aryl group, and m is an integer of 0 to 100.

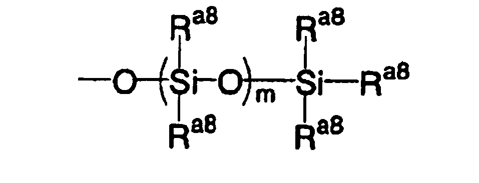

Examples of the compound represented by Formula (1) include 3-ethyl-3-hydroxymethyloxetane (OXT-101: manufactured by Toagosei Co., Ltd.), 3-ethyl-3-(2-ethylhexyloxymethyl)oxetane (OXT-212: manufactured by Toagosei Co., Ltd.), and 3-ethyl-3-phenoxymethyloxetane (OXT-211: manufactured by Toagosei Co., Ltd.). Examples of the compound represented by Formula (2) include 1,4-bis[(3-ethyl-3-oxetanylmethoxy)methyl]benzene (OXT-121: manufactured by Toagosei Co., Ltd.). Examples of the compound represented by Formula (3) include bis(3-ethyl-3-oxetanylmethyl) ether (OXT-221: manufactured by Toagosei Co., Ltd.).

Examples of the compound having 3 to 4 oxetane rings in the molecule include compounds represented by Formula (4) below.

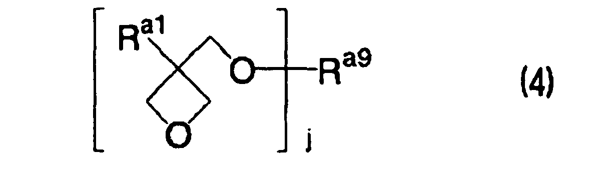

In Formula (4), R^{a1} denotes the same as in Formula (1) above. Furthermore, examples of R^{a9}, which is a polyvalent linking group, include a branched alkylene group having 1 to 12 carbons such as a group represented by A to C below, a branched poly(alkyleneoxy) group such as a group represented by D below, and a branched polysiloxane group such as a group represented by E below. j is 3 or 4.

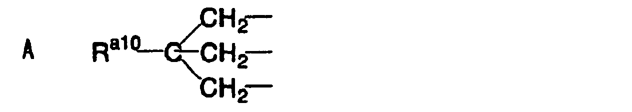

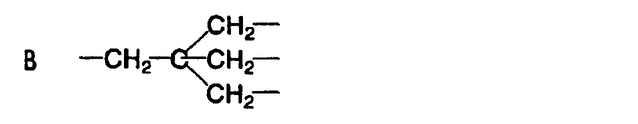

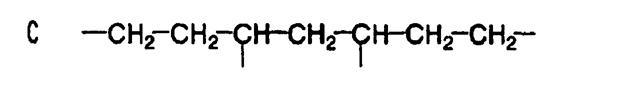

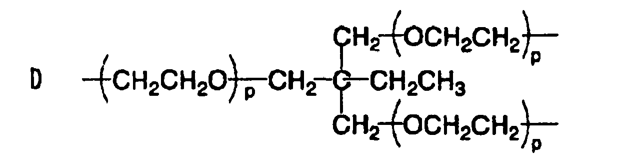

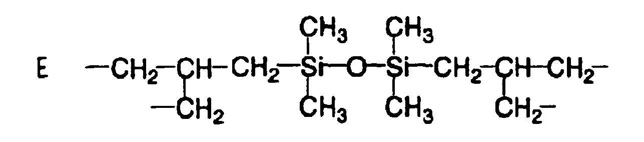

In the above A, R^{a10} denotes a methyl group, an ethyl group, or a propyl group. Furthermore, in the above D, p is an integer of 1 to 10.

Moreover, as another embodiment of the oxetane compound that can be suitably used in the present invention, a compound having an oxetane ring on a side chain, represented by Formula (5) below, can be cited.

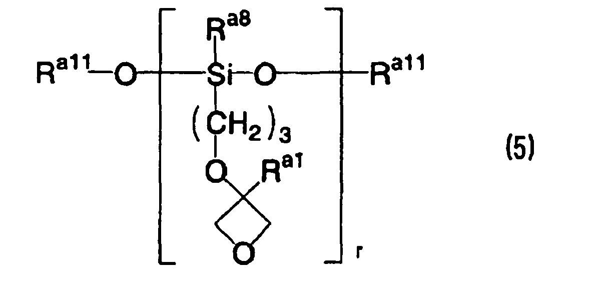

In Formula (5), R^{a1} and R^{a8} denote the same as in the above-mentioned formulae. R^{a11} is an alkyl group having 1 to 4 carbons such as a methyl group, an ethyl group, a propyl group, or a butyl group, or a trialkylsilyl group, and r is 1 to 4.

Such compounds having an oxetane ring are described in detail in paragraph Nos. 0021 to 0084 of JP-A-2003-341217 above, and the compounds described here may be suitably used in the present invention.

The oxetane compounds described in JP-A-2004-91556 can be used in the present invention. The details are described in paragraph Nos. 0022 to 0058.

Among the oxetane compounds used in the present invention, from the viewpoint of ink composition viscosity and adhesion, it is preferable to use a compound having one oxetane ring.

The content of the cationically polymerizable compound (the total content of polyfunctional oxetane compound having an -NRCO- bond and other cationic polymerizable compound) in the ink composition is preferably in the range of 10 to 95 wt % relative to the total solids content of the composition, more preferably 30 to 90 wt %, and yet more preferably 50 to 85 wt %. When the content of the cationically polymerizable compound in the ink composition is in the above-described range, an ink composition having an excellent curability can be obtained.

It is preferable that the content of the cationically polymerized compound in a pigment dispersion and the amount of the cationically polymerized compound added afterward are appropriately adjusted so that the content of the cationically polymerized compound in the ink composition is in the above-described range.

### (B) Compound that generates an acid when exposed to radiation

The ink composition of the present invention comprises the compound that generates an acid when exposed to radiation (hereafter also called 'the photo-acid generator' or 'cationic polymerization initiator'). As the photo-acid generator used in the present invention, a cationic photopolymerization photoinitiator or a compound that generates an acid when exposed to light used in a microresist, etc. (ultraviolet light at 400 to 200 nm, far ultraviolet light, particularly preferably, g-line, h-line, i-line, KrF excimer laser light), ArF excimer laser light, an electron beam, X rays, a molecular beam, or an ion beam, may be used by appropriately selecting therefrom.

Examples of such a polymerization initiator (preferably a photo-acid generator) include onium salt compounds such as diazonium salts, phosphonium salts, sulfonium salts, and iodonium salts, and sulfonate compounds such as imidosulfonates, oxime sulfonates, diazodisulfones, disulfones, and o-nitrobenzylsulfonates, which generate an acid by decomposition when exposed to radiation.

Other specific examples of the compound that generates an acid when exposed to actinic light or radiation, which can be used in the present invention, include diazonium salts disclosed in, for instance, S. I. Schlesinger, Photogr. Sci. Eng., 1974, 18:387 and T. S. Bal et al., Polymer, 1980, 21:423; ammonium salts disclosed in, for instance, US Pat. Nos. 4,069,055, 4,069,056, Re 27,992, and JP-A-3-140140; phosphonium salts disclosed in, for instance, D. C. Necker et al., Macromolecules, 1984, 17:2468, C. S. Wen et al., Proc. Conf. Rad. Curing ASIA, p.478, Tokyo, Oct. (1988) and US Pat. Nos. 4,069,055 and 4,069,056; iodonium salts disclosed in, for instance, J. V. Crivello et al., Macromolecules, 10 (6), 1307 (1977), Chem. Eng. News, November 28, p. 31 (1988), European Patent Nos. 104,143, 339,049 and 410,201 and JP-A-2-150848 and JP-A-2-296514;
sulfonium salts disclosed in, for instance, J. V. Crivello et al., Polymer J., 1985, 17:73, J. V. Crivello et al., J. Org. Chem., 1978, 43:3055, W.R. Watt et al., J. Polymer Sci., Polymer Chem. Ed., 1984, 22:1789, J. V. Crivello et al., Polymer Bull., 1985, 14:279, J. V. Crivello et al., Macromolecules, 14(5), 1141 (1981), J. V. Crivello et al., J. Polymer Sci., Polymer Chem. Ed., 1979, 17:2877, European Patent Nos. 370,693, 161,811, 410,201, 339,049, 233,567, 297,443 and 297,442, US Pat. Nos. 3,902,114, 4,933,377, 4,760,013, 4,734,444 and 2,833,827 and German Patent Nos. 2,904,626, 3,604,580 and 3,604,581, JP-A-7-28237, and JP-A-8-27102;
selenonium salts disclosed in, for instance, J. V. Crivello et al., Macromolecules, 10(6), 1307 (1977) and J. V. Crivello et al., J. Polymer Sci., Polymer Chem. Ed., 1979, 17:1047; onium salts such as arsonium salts disclosed in, for instance, C. S. Wen et al., The Proc. Conf. Rad. Curing ASIA, p.478, Tokyo, Oct. (1988); organic halogen-containing compounds disclosed in, for instance, US Pat. No. 3,905,815, JP-B-46-4605, JP-A-48-36281, JP-A-55-32070, JP-A-60-239736, JP-A-61-169835, JP-A-61-169837, JP-A-62-58241, JP-A-62-212401, JP-A-63-70243 and JP-A-63-298339; organometallic/organic halogen-containing compounds disclosed in, for instance, K. Meier et al., J. Rad. Curing, 13(4), 26 (1986), T. P. Gill et al., Inorg. Chem., 1980, 19:3007, D. Astruc, Acc. Chem. Res., 19(12), 377 (1896) and JP-A-2-161445;
photo-acid generators comprising *o*-nitrobenzyl type protecting group disclosed in, for instance, S. Hayase et al., J. Polymer Sci., 1987, 25:753, E. Reichmanis et al., J. Polymer Sci., Polymer Chem. Ed., 1985, 23:1, Q. Q. Zhu et al., J. Photochem., 36, 85, 39, 317 (1987), B. Amit et al., Tetrahedron Lett., (24), 2205 (1973), D. H. R. Barton et al., J. Chem. Soc., 3571 (1965), P. M. Collins et al., J. Chem. Soc., Perkin 1, 1695 (1975), M. Rudinstein et al., Tetrahedron Lett., (17), 1445 (1975), J. W. Walker et al., J. Am. Chem. Soc., 110, 7170 (1988), S.C. Busman et al., J. Imaging Technol., 11 (4), 191 (1985), H. M. Houlihan et al., Macromolecules, 21, 2001 (1988), P.M. Collins et al., J. Chem. Soc., Chem. Commun., 532 (1972), S. Hayase et al., Macromolecules, 18, 1799 (1985), E. Reichmanis et al., J. Electrochem. Soc., Solid State Sci. Technol., 130(6), F. M. Houlihan et al., Macromolecules, 21, 2001 (1988), European Patent Nos. 0,290,750, 046,083, 156,535, 271,851 and 0,388,343, US Pat. Nos. 3,901,710 and 4,181,531 and JP-A-60-198538 and JP-A-53-133022;
compounds producing sulfonic acids by photolysis which are represented by iminosulfonates described in M. Tunooka et al., Polymer Preprints Japan, 35 (8), G. Berner et al., J. Rad. Curing, 13 (4), W. J. Mijs et al., Coating Technol., 55 (697), 45 (1983), Akzo, H. Adachi et al., Polymer Preprints Japan, 37 (3), European Patents 0,199,672, 84,515, 044,115, 618,564, and 0,101,122, US Pat. Nos. 4,371,605 and 4,431,774, JP-A-64-18143, JP-A-2-245756 and JP-A-3-140109; and disulfone compounds described in JP-A-61-166544 and JP-A-2-71270; and diazoketosulfone and diazodisulfone compounds described in JP-A-3-103854, JP-A-3-103856, and JP-A-4-210960.

Further, compounds in which these photo-acid generating groups or compounds are introduced into their main chains or side chains can be used. Examples of such compounds are described in M. E. Woodhouse et al., J. Am. Chem. Soc., 104, 5586 (1982), S. P. Pappas et al., J. Imaging Sci., 30 (5), 218 (1986), S. Kondo et al., Makromol. Chem., Rapid Commun., 9, 625 (1988), Y. Yamada et al., Makromol. Chem., 152, 153, 163 (1972), J. V. Crivello et al., J. Polymer Sci., Polymer Chem. Ed., 17, 3845 (1979), US Pat. No. 3,849,137, German Patent No. 3,914,407, JP-A-63-26653, JP-A-55-164824, JP-A-62-69263, JP-A-63-146038, JP-A-63-163452, JP-A-62-153853 and JP-A-63-146029. Examples thereof include onium salt compounds such as diazonium salts, ammonium salts, phosphonium salts, iodonium salts, sulfonium salts, selenonium salts, and arsonium salts; organic halogen compounds; organometallic/organohalides; photo-acid generators having an *o-*nitrobenzyl type protecting group; compounds that generate a sulfonic acid by photodecomposition, represented by iminosulfonates; disulfone compounds; diazoketosulfones; and diazodisulfone compounds.

Further, there can also be used compounds that generate an acid with light which are described in V. N. R. Pillai, Synthesis, (1) 1 (1980), A. Abad et al., Tetrahedron Lett., (47), 4555 (1971), D. H. R. Barton et al., J. Chem. Soc., (C), 329 (1970), US Pat. No. 3,779,778 and European Patent No. 126,712.

Preferred examples of the photo-acid generator that can be used in the present invention include compounds represented by Formulae (b1), (b2), and (b3) below.

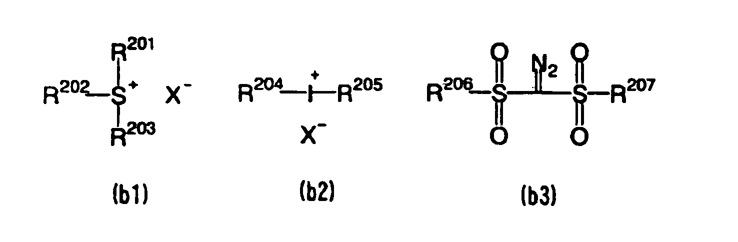

In Formula (b1), R²⁰¹, R²⁰², and R²⁰³ independently denote an organic group.

X⁻ denotes a non-nucleophilic anion; preferred examples thereof include a sulfonic acid anion, a carboxylic acid anion, a bis(alkylsulfonyl)amide anion, a tris(alkylsulfonyl)methide anion, BF₄⁻, PF₆⁻, SbF₆⁻, and groups shown below, and an organic anion having a carbon atom is preferable.

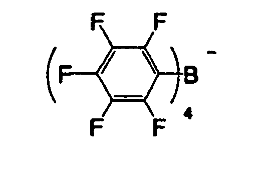

Preferred examples of the organic anion include organic anions represented by the formulae below.

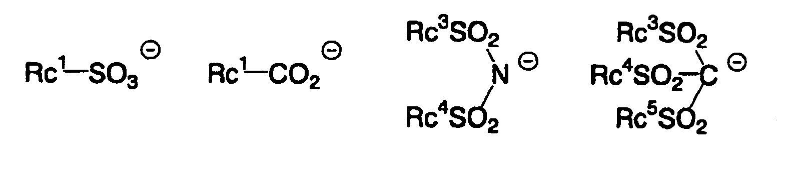

Rc¹ denotes an organic group.

Examples of the organic group denoted by Rc¹ include those having 1 to 30 carbons, and preferred examples thereof include an alkyl group, a cycloalkyl group, an aryl group, and a group formed by connecting a plurality of the above groups via a linking group such as a single bond, -O-, -CO₂-, -S-, -SO₃-, or -SO₂N(Rd¹)-.

Rd¹ denotes a hydrogen atom or an alkyl group.

Rc³, Rc⁴, and Rc⁵ independently denote an organic group.

With regard to the organic groups denoted by Rc³, Rc⁴, and Rc⁵, those cited as preferred examples for the organic group denoted by Rc¹ are cited here, and a perfluoroalkyl group having 1 to 4 carbons is most preferable.

Rc³ and Rc⁴ may be bonded to form a ring.

Examples of a group formed by bonding of Rc³ and Rc⁴ include an alkylene group and an arylene group. It is preferably a perfluoroalkylene group having 2 to 4 carbons.

The most preferred examples of the organic groups denoted by Rc¹, and Rc³ to Rc⁵, include an alkyl group whose 1 position has been substituted with a fluorine atom or a fluoroalkyl group, and a phenyl group substituted with a fluorine atom or a fluoroalkyl group. Introducing a fluorine atom or a fluoroalkyl group increases the acidity of an acid generated on exposure to light, thus improving the sensitivity.

The number of carbons of the organic groups denoted by R²⁰¹, R²⁰², and R²⁰³ is preferably 1 to 30, and more preferably 1 to 20.

Furthermore, two of R²⁰¹ to R²⁰³ may be bonded to form a ring structure, and an oxygen atom, a sulfur atom, an ester bond, an amide bond, or a carbonyl group may be contained in the ring. Examples of the group formed by bonding of two of R²⁰¹ to R²⁰³ include alkylene groups (e.g. a butylene group and a pentylene group).

Specific examples of the organic groups denoted by R²⁰¹, R²⁰², and R²⁰³ are the corresponding groups in compounds (b1-1), (b1-2), and (b1-3), which will be described later.

The photo-acid generator may be a compound having a plurality of structures represented by Formula (b1). For example, it may be a compound having a structure in which at least one of R²⁰¹ to R²⁰³ of a compound represented by Formula (b1) is bonded directly or via a linking group to at least one of R²⁰¹ to R²⁰³ of a compound represented by Formula (b1).

Yet more preferred examples of the component (b1) include compounds (b1-1), (b1-2), and (b1-3), which are explained below.

The compound (b1-1) is an arylsulfonium compound in which at least one of R²⁰¹ to R²⁰³ of the Formula (b1) above is an aryl group, that is, a compound having arylsulfonium as a cation.

With regard to the arylsulfonium compound, all of R²⁰¹ to R²⁰³ may be aryl groups, or some of R²⁰¹ to R²⁰³ may be an aryl group and the rest may be an alkyl group or a cycloalkyl group.

Examples of the arylsulfonium compound include a triarylsulfonium compound, a diarylalkylsulfonium compound, an aryldialkylsulfonium compound, a diarylcycloalkylsulfonium compound, and an aryldicycloalkylsulfonium compound.

With regard to the aryl group of the arylsulfonium compound, an aryl group such as a phenyl group or a naphthyl group and a heteroaryl group such as an indole residue or a pyrrole residue are preferable, and a phenyl group and an indole residue are more preferable. When the aryl sulfonium compound has two or more aryl groups, two or more of the aryl groups may be identical to or different from each other.

The alkyl group that the arylsulfonium compound may have as necessary is preferably a straight-chain or branched alkyl group having 1 to 15 carbons, and examples thereof include a methyl group, an ethyl group, a propyl group, an *n*-butyl group, a *sec*-butyl group, and a *t*-butyl group.

The cycloalkyl group that the arylsulfonium compound may have as necessary is preferably a cycloalkyl group having 3 to 15 carbons, and examples thereof include a cyclopropyl group, a cyclobutyl group, and a cyclohexyl group.

The aryl group, the alkyl group, and the cycloalkyl group denoted by R²⁰¹ to R²⁰³ may have as a substituent an alkyl group (e.g. having 1 to 15 carbons), a cycloalkyl group (e.g. having 3 to 15 carbons), an aryl group (e.g. having 6 to 14 carbons), an alkoxy group (e.g. having 1 to 15 carbons), a halogen atom, a hydroxyl group, or a phenylthio group. Preferred examples of the substituent include a straight-chain or branched alkyl group having 1 to 12 carbons, a cycloalkyl group having 3 to 12 carbons, and a straight-chain, branched, or cyclic alkoxy group having 1 to 12 carbons, and the most preferable examples include an alkyl group having 1 to 4 carbons and an alkoxy group having 1 to 4 carbons. One of R²⁰¹ to R²⁰³ may be substituted or all thereof may be substituted. When R²⁰¹ to R²⁰³ are aryl groups, it is preferable for the substituent to be present at the *p*-position of the aryl group.

The compound (b1-2) is now explained.

The compound (b1-2) is a compound in which R²⁰¹ to R²⁰³ of Formula (b1) independently denote an organic group having no aromatic ring. The aromatic ring referred to here includes an aromatic ring containing a hetero atom.

The organic group having no aromatic ring denoted by R²⁰¹ to R²⁰³ preferably has 1 to 30 carbons, and more preferably 1 to 20 carbons.

R²⁰¹ to R²⁰³ preferably independently denote an alkyl group, a cycloalkyl group, an allyl group, or a vinyl group, more preferably a straight-chain, branched, or cyclic 2-oxoalkyl group or alkoxycarbonylmethyl group, and particularly preferably a straight-chain or branched 2-oxoalkyl group.

The alkyl group denoted by R²⁰¹ to R²⁰³ may be a straight-chain or branched, is preferably a straight-chain or branched alkyl group having 1 to 10 carbons (e.g. a methyl group, an ethyl group, a propyl group, a butyl group, and a pentyl group), and is more preferably a straight-chain or branched 2-oxoalkyl group or an alkoxycarbonylmethyl group.

The cycloalkyl group denoted by R²⁰¹ to R²⁰³ may preferably be a cycloalkyl group having 3 to 10 carbons (a cyclopentyl group, a cyclohexyl group, or a norbornyl group), and a cyclic 2-oxoalkyl group is more preferable.

The straight-chain, branched, or cyclic 2-oxoalkyl group denoted by R²⁰¹ to R²⁰³ may preferably be the above-mentioned alkyl group or cycloalkyl group in which there is >C = O at the 2-position.

Preferred examples of the alkoxy group of the alkoxycarbonylmethyl group denoted by R²⁰¹ to R²⁰³ include an alkoxy group having 1 to 5 carbons (a methoxy group, an ethoxy group, a propoxy group, a butoxy group, and a pentoxy group).

R²⁰¹ to R²⁰³ may further be substituted with a halogen atom, an alkoxy group (e.g. having 1 to 5 carbons), a hydroxyl group, a cyano group, or a nitro group.

The compound (b1-3) referred to is a compound represented by Formula (b1-3) below and is a compound having a phenacylsulfonium salt structure.

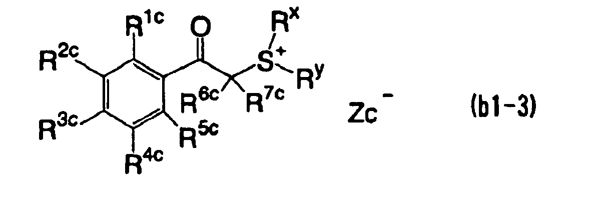

In Formula (b1-3), R^{1c} to R^{5c} independently denote a hydrogen atom, an alkyl group, a cycloalkyl group, an alkoxy group, or a halogen atom.

R^{6c} and R^{7c} independently denote a hydrogen atom, an alkyl group, or a cycloalkyl group.

R^{x} and R^{y} independently denote an alkyl group, a cycloalkyl group, an allyl group, or a vinyl group.

Any two or more of R^{1c} to R^{5c}, R^{6c} and R^{7c}, and R^{x} and R^{y} may be bonded together to form a ring structure.

Zc⁻ denotes a non-nucleophilic anion, and the same examples as those of the non-nucleophilic anion X⁻ in Formula (b1) may be cited.

The alkyl group denoted by R^{1c} to R^{7c} may be either a straight-chain alkyl group or a branched alkyl group, and preferred examples thereof include straight-chain and branched alkyl groups having 1 to 20 carbons, and more preferably 1 to 12 carbons (e.g. a methyl group, an ethyl group, a straight-chain or branched propyl group, a straight-chain or branched butyl group, and a straight-chain or branched pentyl group).

Preferred examples of the cycloalkyl group denoted by R^{1c} to R^{7c} include cycloalkyl groups having 3 to 8 carbons (e.g. a cyclopentyl group and a cyclohexyl group).

The alkoxy group denoted by R^{1c} to R^{5c} may be any of a straight-chain, branched, or cyclic alkoxy group; examples thereof include alkoxy groups having 1 to 10 carbons, and preferably straight-chain or branched alkoxy groups having 1 to 5 carbons (e.g. a methoxy group, an ethoxy group, a straight-chain or branched propoxy group, a straight-chain or branched butoxy group, and a straight-chain or branched pentoxy group), and cyclic alkoxy groups having 3 to 8 carbons (e.g. a cyclopentyloxy group and a cyclohexyloxy group).

Examples of the group formed by bonding any two or more of R^{1c} to R^{5c}, R^{6c} and R^{7c}, and R^{x} and R^{y} include a butylene group and a pentylene group. This cyclic structure may contain an oxygen atom, a sulfur atom, an ester bond, or an amide bond.

It is preferable for any one of R^{1c} to R^{5c} to be a straight-chain or branched alkyl group, a cycloalkyl group, or a straight-chain, branched, or cyclic alkoxy group, and it is more preferable that the sum of the number of carbons of R^{1c} to R^{5c} is 2 to 15. This is preferable since the solvent solubility further improves and the occurrence of particles during storage is suppressed.

Examples of the alkyl groups and the cycloalkyl groups denoted by R^{x} and R^{y} may be the same as those of the alkyl groups and the cycloalkyl groups denoted by R^{1c} to R^{7c}.

R^{x} and R^{y} are preferably 2-oxoalkyl groups or alkoxycarbonylmethyl groups.

Examples of the 2-oxoalkyl group include a group in which the alkyl group or the cycloalkyl group denoted by R^{1c} to R^{5c} has >C = O at the 2-position.

Examples of the alkoxy group of the alkoxycarbonylmethyl group may be the same as those of the alkoxy group denoted by R^{1c} to R^{5c}.

R^{x} and R^{y} are preferably alkyl groups or cycloalkyl groups having 4 or more carbons, more preferably alkyl groups or cycloalkyl groups having 6 or more carbons, and yet more preferably 8 or more carbons.

R²⁰⁴ to R²⁰⁷ in Formulae (b2) and (b3) independently denote an aryl group, an alkyl group, or a cycloalkyl group. X⁻ denotes a non-nucleophilic anion, and examples thereof include those that are the same as the non-nucleophilic anion X⁻ in Formula (b1).

The aryl group denoted by R²⁰⁴ to R²⁰⁷ is preferably a phenyl group or a naphthyl group, and more preferably a phenyl group.

The alkyl group denoted by R²⁰⁴ to R²⁰⁷ may be either a straight-chain or a branched alkyl group, and preferred examples thereof include straight-chain or branched alkyl groups having 1 to 10 carbons (e.g. a methyl group, an ethyl group, a propyl group, a butyl group, and a pentyl group). Preferred examples of the cycloalkyl groups denoted by R²⁰⁴ to R²⁰⁷ include cycloalkyl groups having 3 to 10 carbons (a cyclopentyl group, a cyclohexyl group, and a norbornyl group).

Examples of the substituents that are present on R²⁰⁴ to R²⁰⁷ include an alkyl group (e.g. having 1 to 15 carbons), a cycloalkyl group (e.g. having 3 to 15 carbons), an aryl group (e.g. having 6 to 15 carbons), an alkoxy group (e.g. having 1 to 15 carbons), a halogen atom, a hydroxyl group, and a phenylthio group.

As a compound that generates an acid when exposed to radiation, compounds represented in Fomulae (b4), (b5) and (b6) below can be cited.

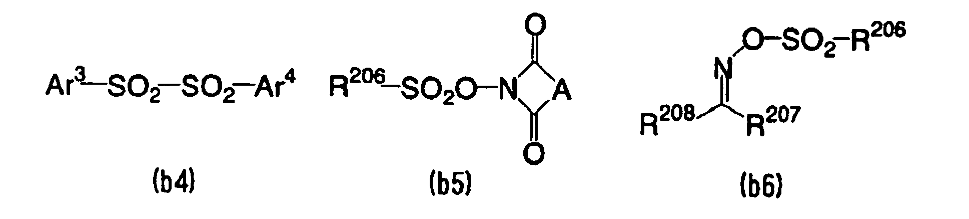

In Formulae (b4) to (b6), Ar³ and Ar⁴ independently denote an aryl group.

R²⁰⁶, R²⁰⁷ and R²⁰⁸ independently denote an alkyl group, a cycloalkyl group, an aryl group, or a cyano group.

A denotes an alkylene group, an alkenylene group, or an arylene group.

Among photo-acid generators, the compounds represented by Formulae (b1) to (b3) are preferable.

The examples of the compound preferably used in the present invention that generates an acid when exposed to radiation ((b-1) to (b-96)) are cited below, but the present invention should not be construed as being limited to these examples.

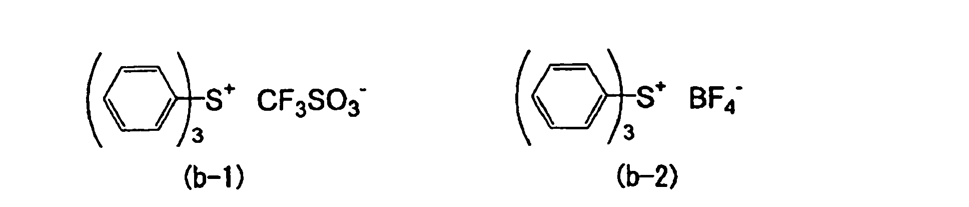

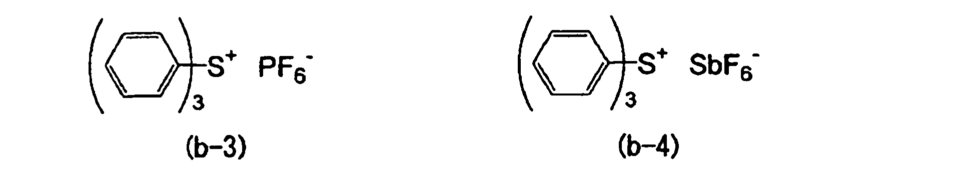

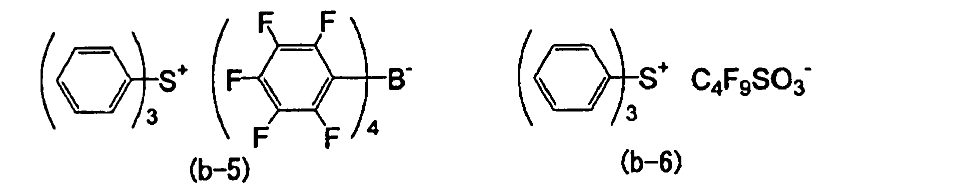

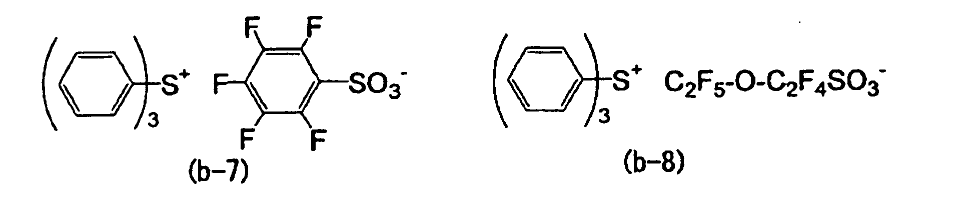

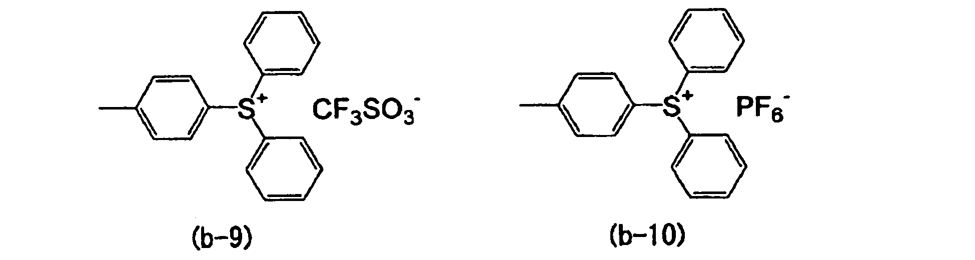

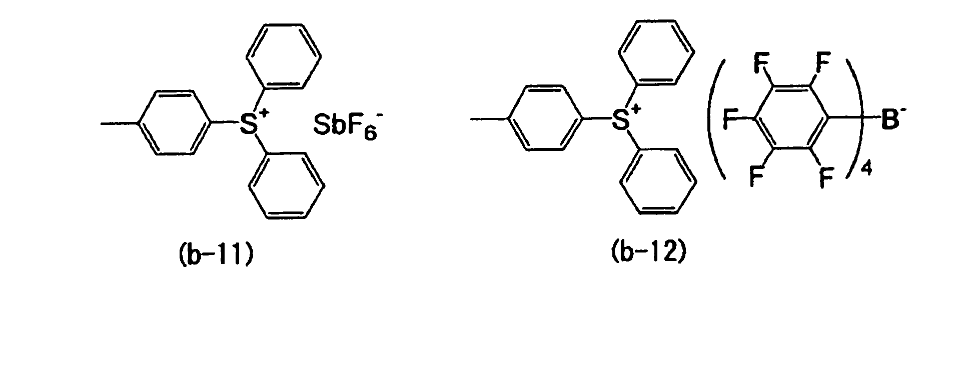

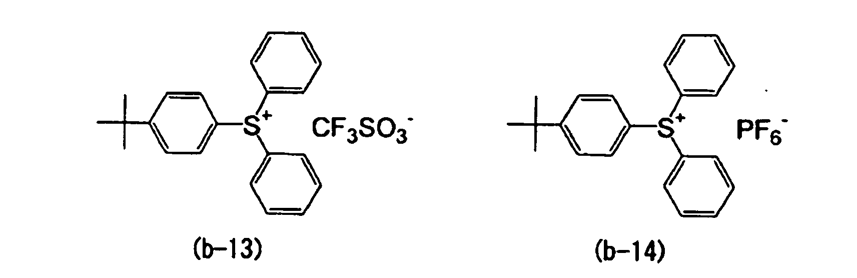

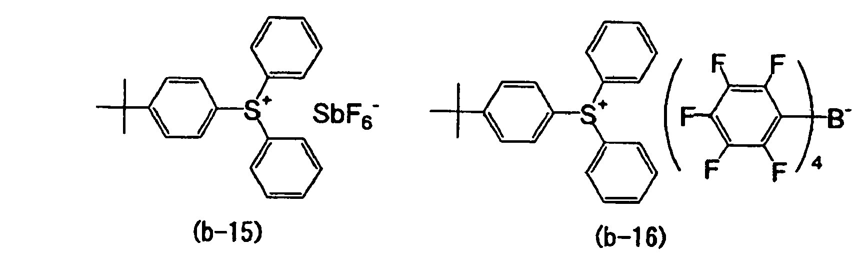

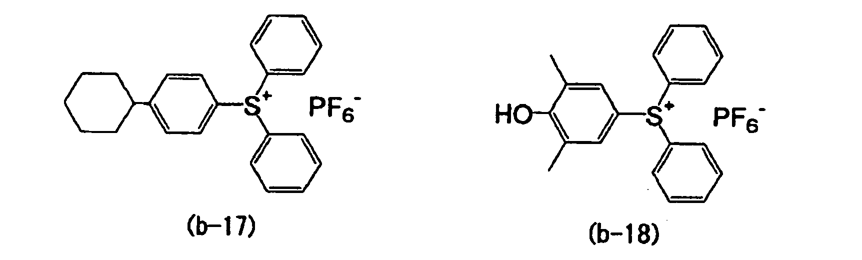

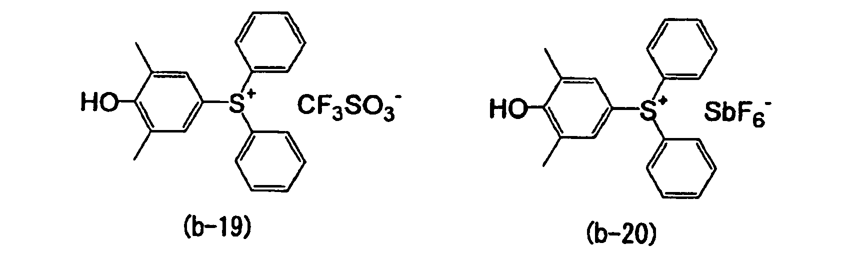

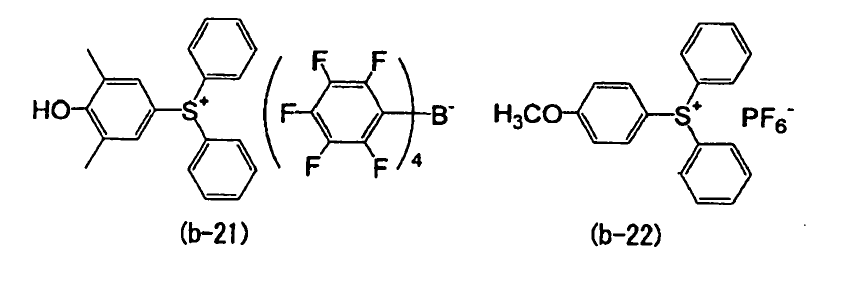

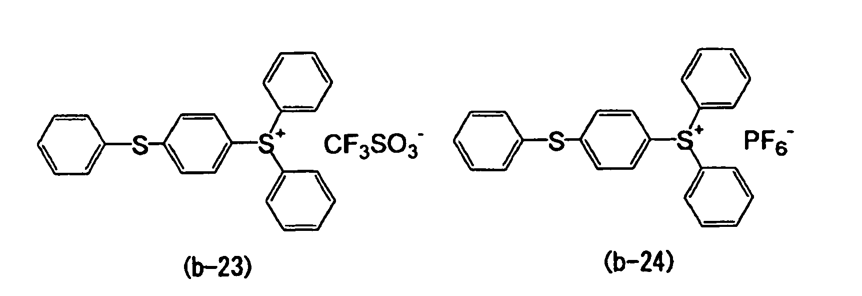

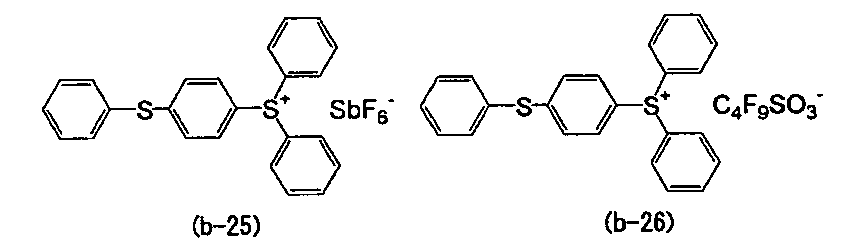

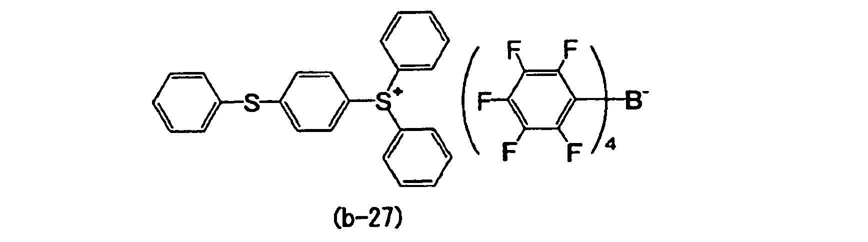

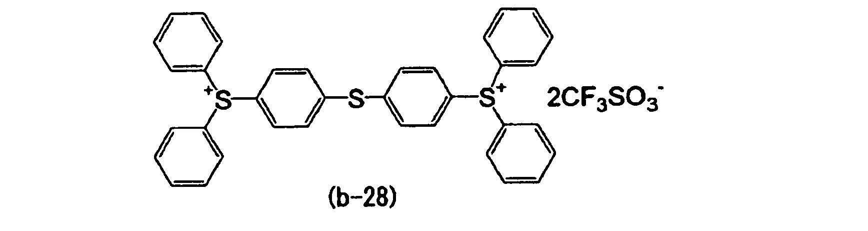

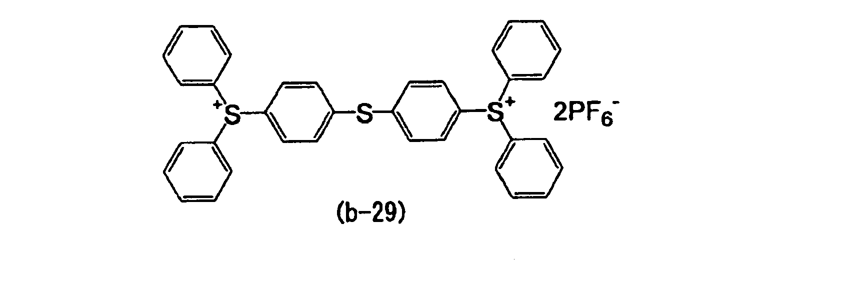

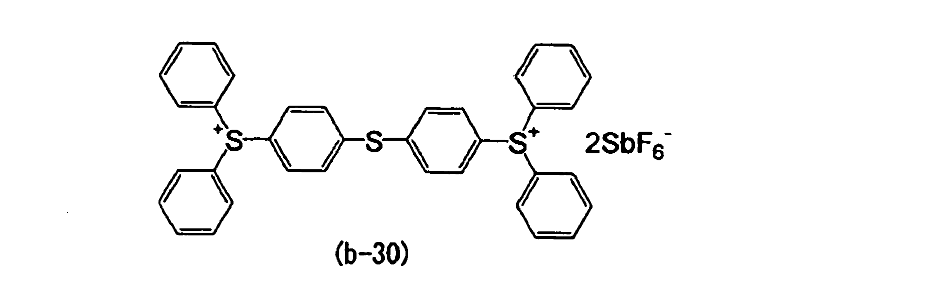

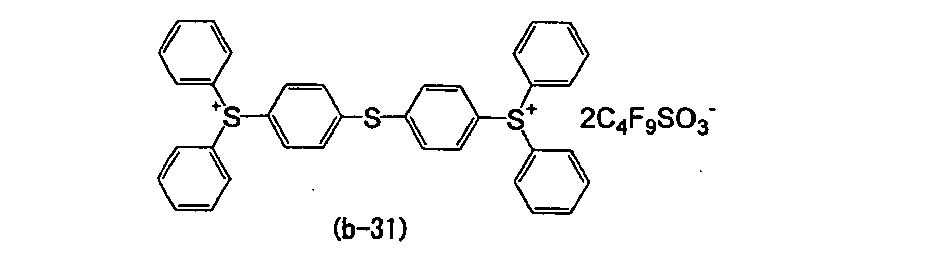

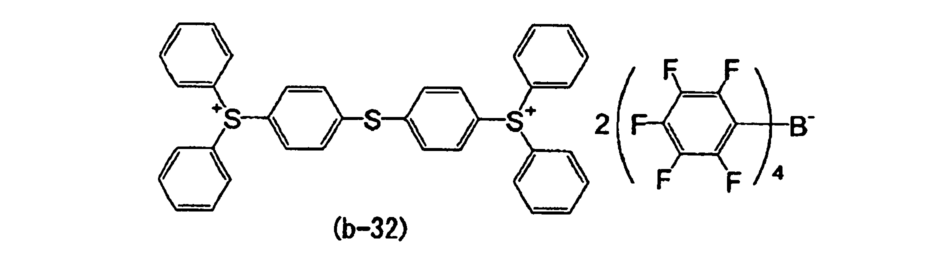

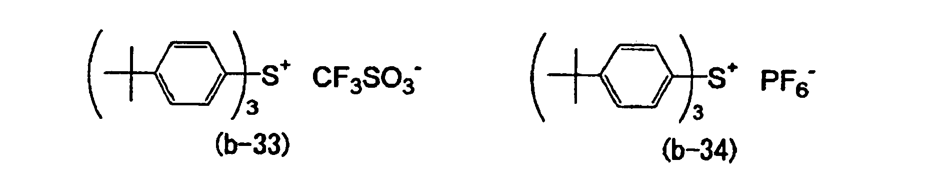

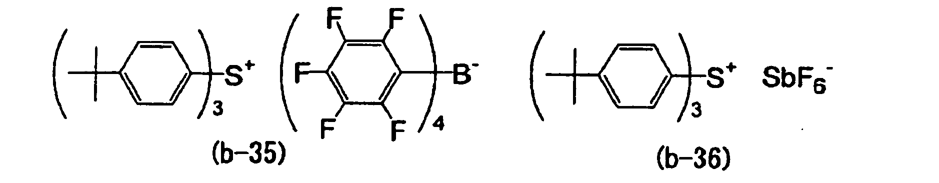

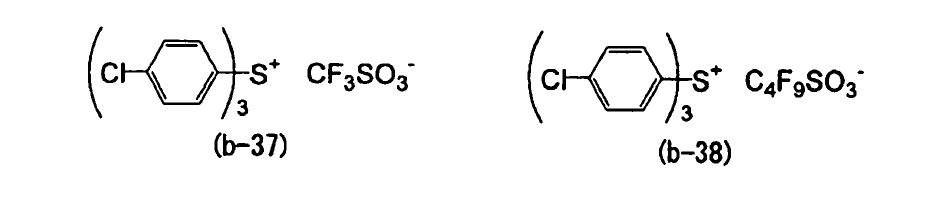

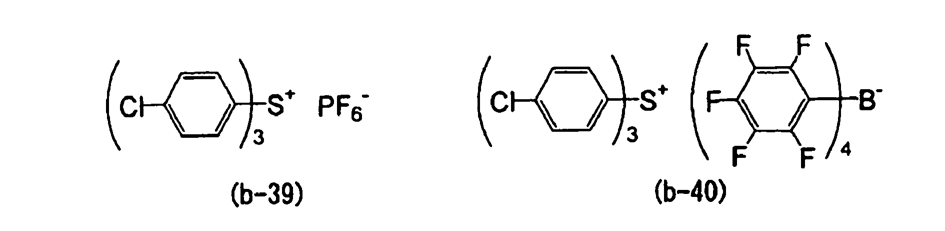

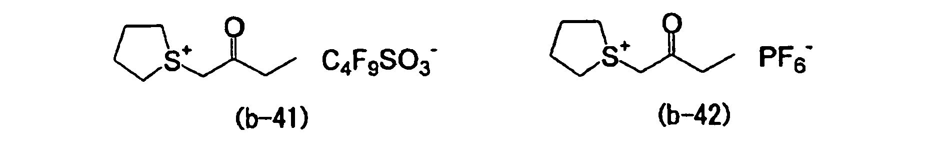

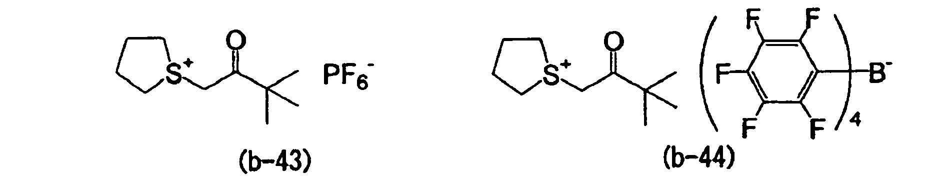

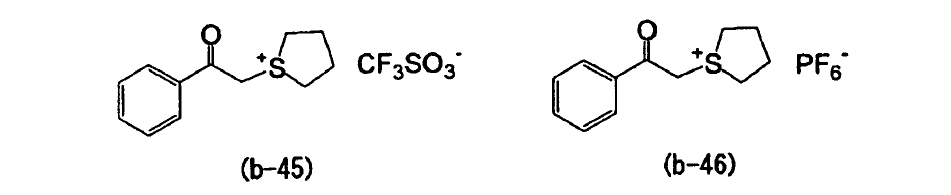

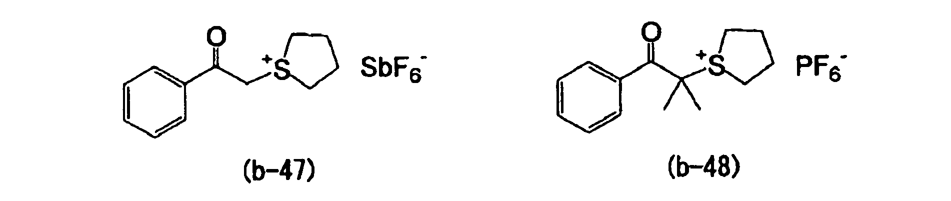

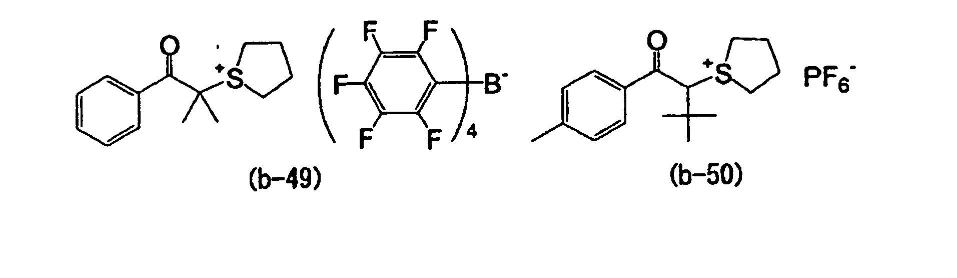

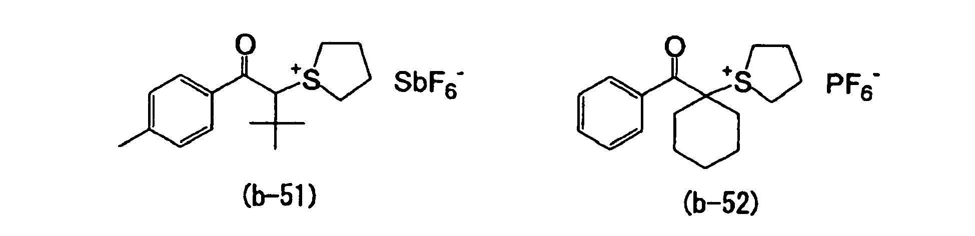

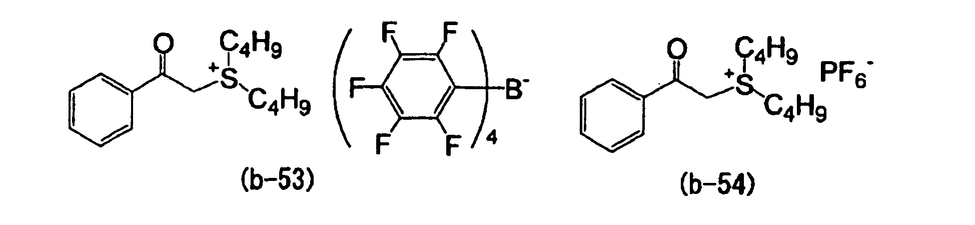

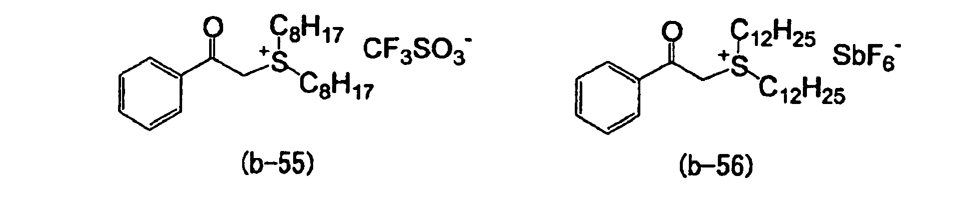

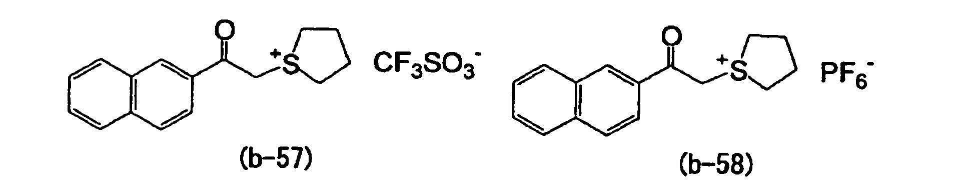

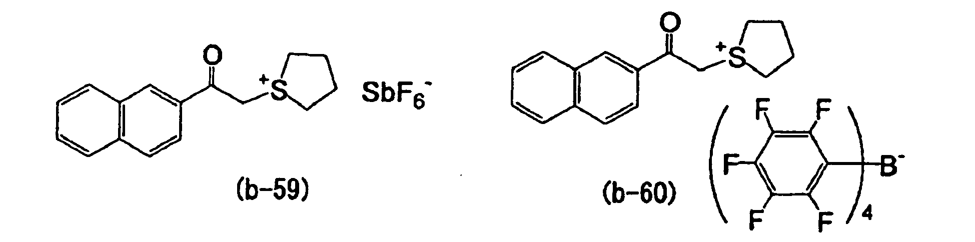

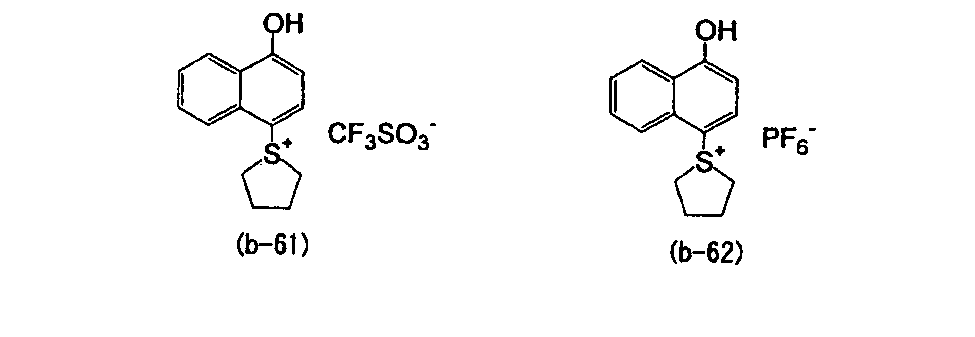

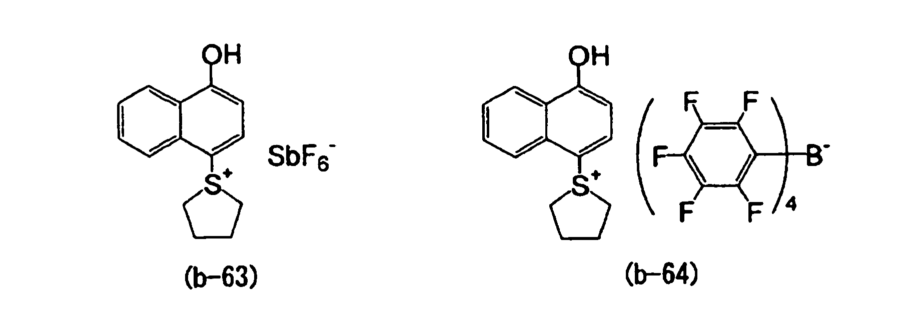

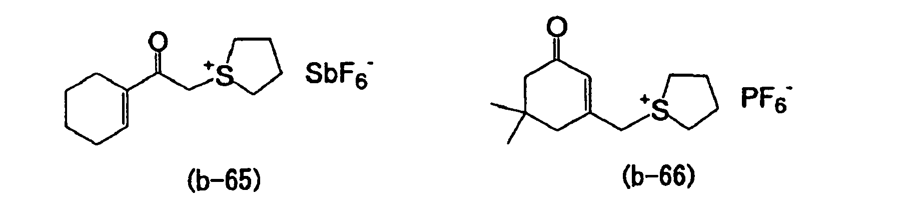

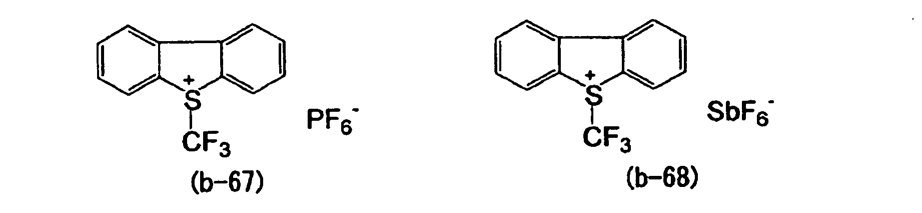

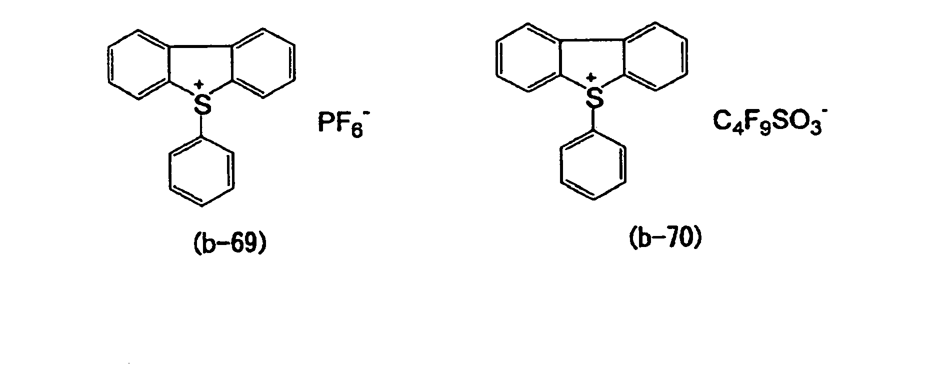

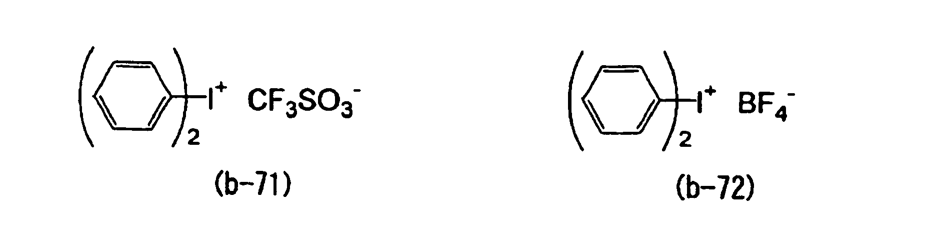

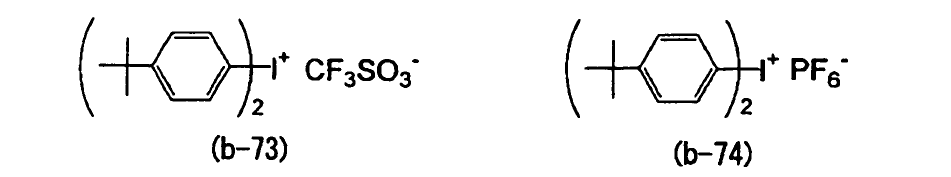

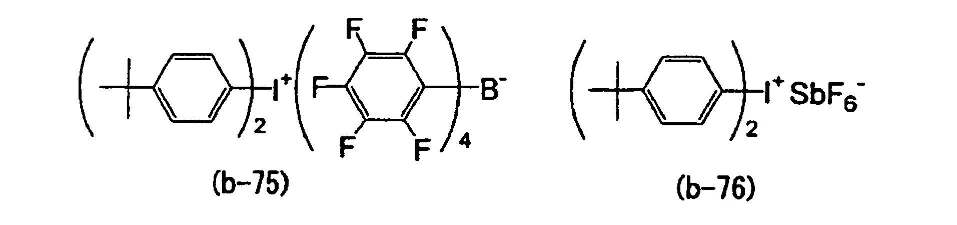

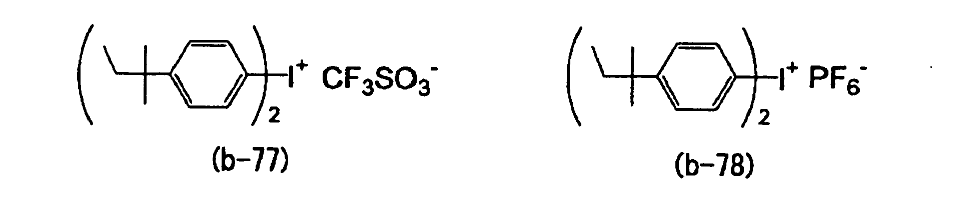

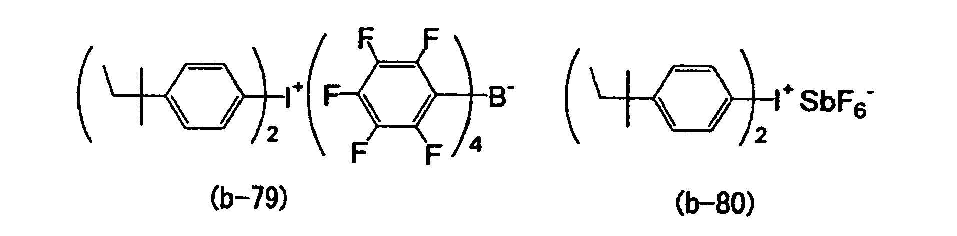

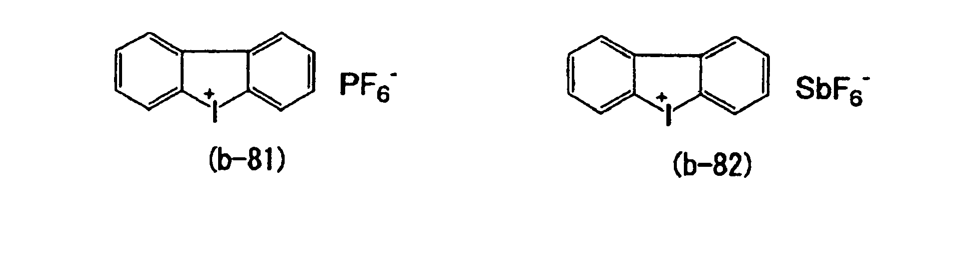

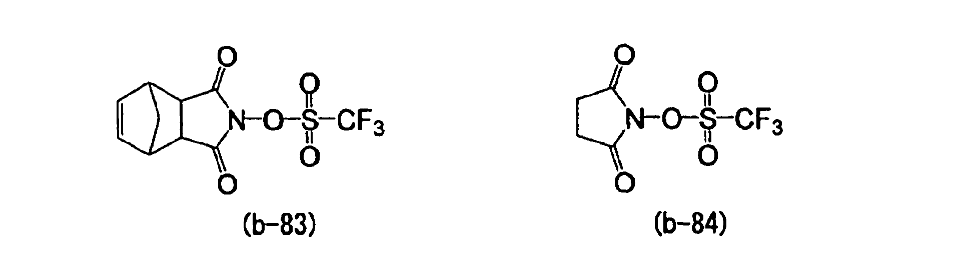

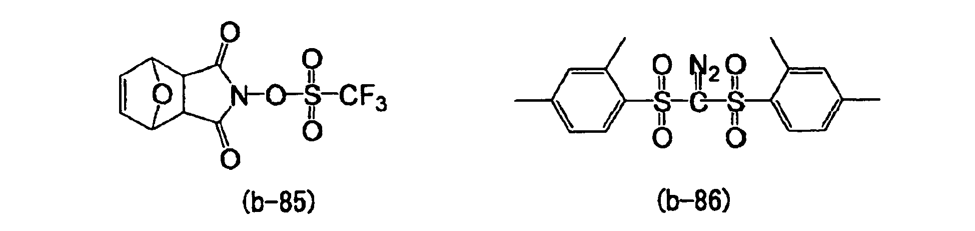

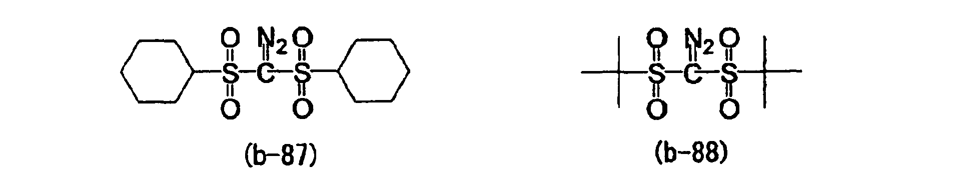

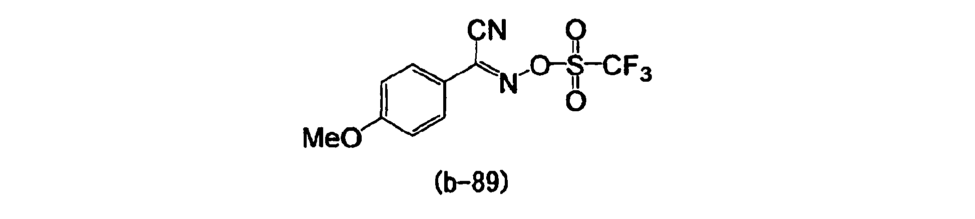

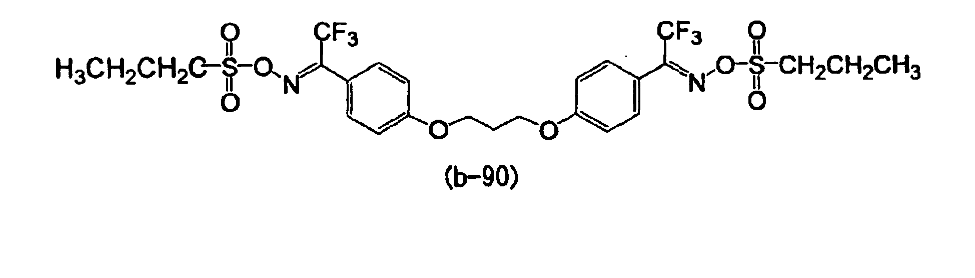

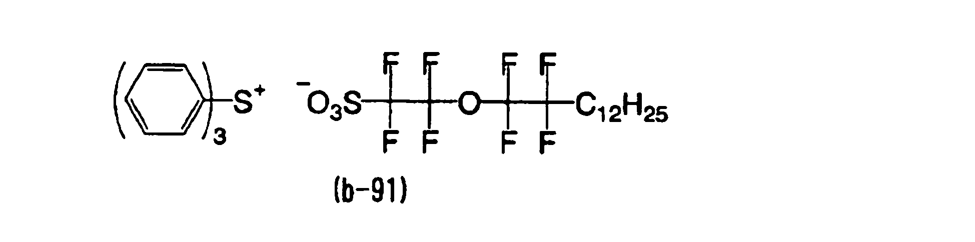

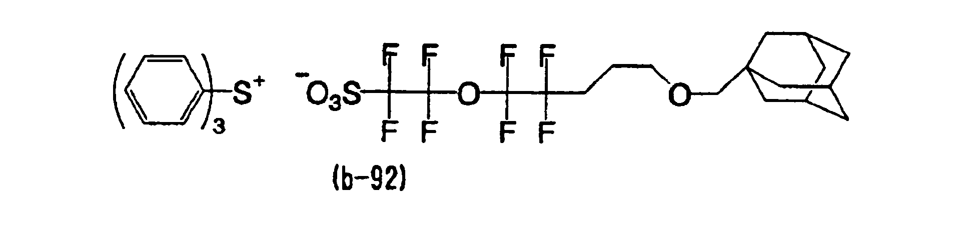

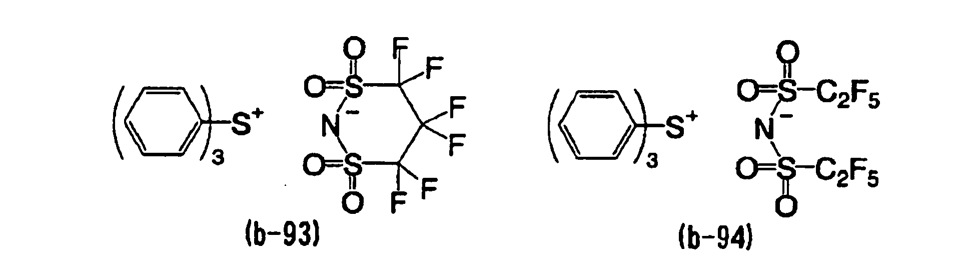

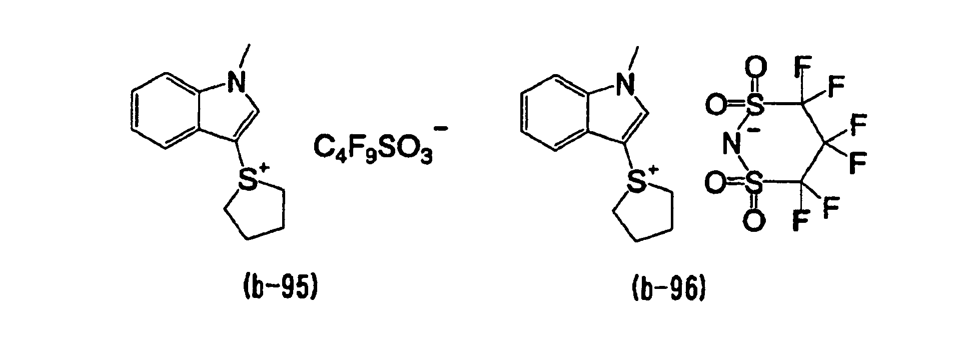

Furthermore, oxazole derivatives and s-triazine derivatives described in Paragraph Nos. 0029 to 0030 of JP-A-2002-122994 may suitably be used.

Onium salt compounds and sulfonate-based compounds cited as examples in Paragraph Nos. 0037 to 0063 of JP-A-2002-122994 may also be suitably used in the present invention.

The photo-acid generator may be used singly or in a combination of two or more types.

The content of the photo-acid generator in the ink composition is preferably 0.1 to 20 wt % on the basis of the total solids content of the ink composition, more preferably 0.5 to 10 wt %, yet more preferably 1 to wt %, and particularly preferably 1 to 7 wt %.

### (C) Colorant

The ink composition of the present invention comprises (C) a colorant.

The colorant that can be used in the present invention is not particularly limited, and may be freely selected from known colorants such as pigments, oil-soluble dyes, aqueous dyes, and disperse dyes. Among them, in terms of excellent weatherability and color reproduction the colorant is preferably a pigment and/or an oil-soluble dye, and more preferably a pigment.

With regard to the colorant that can suitably be used in the ink composition of the present invention, from the viewpoint of preventing the sensitivity of the curing reaction by actinic radiation from being degraded it is preferable to select a compound that does not function as a polymerization inhibitor in a polymerization reaction, which is a curing reaction.

### Pigment

The pigment is not particularly limited and may be selected appropriately according to an intended application; examples thereof include known organic and inorganic pigments, resin particles dyed with a dye, a commercial pigment dispersion, and a surface-treated pigment (e.g. one obtained by dispersing a pigment in water, a liquid organic compound, an insoluble resin, etc. as a dispersion medium or one obtained by treating the surface of a pigment with a resin, a pigment derivative, etc.). Specific examples of the pigment include those described in, for example, 'Ganryo no Jiten' (Dictionary of Pigments) Ed. by Seijirou Ito (2000, Asakura), I Hashimoto 'Yuki Ganryo Handobukku' (Organic Pigment Handbook), (2006, Color Office), W. Herbst, K. Hunger 'Industrial Organic Pigments' (1992, Wiley-VHC), JP-A-2002-12607, JP-A-2002-188025, JP-A-2003-26978, and JP-A-2003-342503.

Examples of the organic pigment and the inorganic pigment include a yellow pigment, a red pigment, a magenta pigment, a blue pigment, a cyan pigment, a green pigment, an orange pigment, a violet pigment, a brown pigment, a black pigment, and a white pigment.

Examples of the yellow pigment include monoazo pigments such as C.I. Pigment Yellow 1, 2, 3, 4, 5, 10, 65, 73, 74, 75, 97, 98, 111, 116, 130, 167, and 205, monoazo lake pigments such as C.I. Pigment Yellow 61, 62, 100, 168, 169, 183, 191, 206, 209, and 212, disazo pigments such as C.I. Pigment Yellow 12, 13, 14, 16, 17, 55, 63, 77, 81, 83, 106, 124, 126, 127, 152, 155, 170, 172, 174, 176, 214, and 219, anthraquinone pigments such as C.I. Pigment Yellow 24, 99, 108, 193, and 199, monoazo pyrazolone pigments such as C.I. Pigment Yellow 60, condensed azo pigments such as C.I. Pigment Yellow 93, 95, 128, and 166, isoindoline pigments such as C.I. Pigment Yellow 109, 110, 139, 173, and 185, benzimidazolone pigments such as C.I. Pigment Yellow 120, 151, 154, 175, 180, 181, and 194, azomethine metal complex pigments such as C.I. Pigment Yellow 117, 129, 150, and 153, quinophthalone pigments such as C.I. Pigment Yellow 138, and quinoxaline pigments such as C.I. Pigment Yellow 213.

Preferred examples of the red or magenta pigment include monoazo lake pigments such as C.I. Pigment Red 193, disazo pigments such as C.I. Pigment Red 38, Naphthol AS pigments such as C.I. Pigment Red 2, 5, 8, 9, 10, 11, 12, 14, 15, 16, 17, 18, 22, 23, 31, 32, 112, 114, 146, 147, 150, 170, 184, 187, 188, 210, 213, 238, 245, 253, 256, 258, 266, 268, and 269, β-naphthol pigments such as C.I. Pigment Red 3, 4, and 6, β-naphthol lake pigments such as C.I. Pigment Red 49, 53, and 68, Naphthol AS lake pigments such as C.I. Pigment Red 237, 239, and 247, pyrazolone pigments such as C.I. Pigment Red 41, BONA lake pigments such as C.I. Pigment Red 48, 52, 57, 58, 63, 64:1, and 200, xanthene lake pigments such as C.I. Pigment Red 81:1, 169, and 172, thioindigo pigments such as C.I. Pigment Red 88, 181, and 279, perylene pigments such as C.I. Pigment Red 123, 149, 178, 179, 190, and 224, condensed azo pigments such as C.I. Pigment Red 144, 166, 214, 220, 221, 242, and 262, anthraquinone pigments such as C.I. Pigment Red 168, 177, 182, 226, and 263, anthraquinone lake pigments such as C.I. Pigment Red 83, benzimidazolone pigments such as C.I. Pigment Red 171, 175, 176, 185, and 208, quinacridone pigments such as C.I. Pigment Red 122, 202 (including a mixture with C.I. Pigment Violet 19), 207, and 209, diketopyrrolopyrrole pigments such as C.I. Pigment Red 254, 255, 264, 270, and 272, and azomethine metal complex pigments such as C.I. Pigment Red 257 and 271.

Preferred examples of the blue or cyan pigment include Naphthol AS pigments such as C.I. Pigment Blue 25 and 26, phthalocyanine pigments such as C.I. Pigment Blue 15, 15:1, 15:2, 15:3, 15:4, 15:6, 16, 17:1, 75, and 79, dye lake pigments such as C.I. Pigment Blue 1, 24:1, 56, 61, and 62, anthraquinone-based pigments such as C.I. Pigment Blue 60, indigo pigments such as C.I. Pigment Blue 63, and dioxazine pigments such as C.I. Pigment Blue 80.

Preferred examples of the green pigment include dye lake pigments such as C.I. Pigment Green 1 and 4, phthalocyanine pigments such as C.I. Pigment Green 7 and 36, and azomethine metal complex pigments such as C.I. Pigment Green 8.

Preferred examples of the orange pigment include monoazo pigments such as C.I. Pigment Orange 1, β-naphthol pigments such as C.I. Pigment Orange 2, 3, and 5, Naphthol AS pigments such as C.I. Pigment Orange 4, 24, 38, and 74, pyrazolone pigments such as C.I. Pigment Orange 13 and 34, benzimidazolone pigments such as C.I. Pigment Orange 36, 60, 62, 64, and 72, disazo pigments such as C.I. Pigment Orange 15 and 16, β-naphthol lake pigments such as C.I. Pigment Orange 17 and 46, naphthalenesulfonic acid lake pigments such as C.I. Pigment Orange 19, perinone pigments such as C.I. Pigment Orange 43, quinacridone pigments such as C.I. Pigment Orange 48 and 49, anthraquinone-based pigments such as C.I. Pigment Orange 51, isoindolinone pigments such as C.I. Pigment Orange 61, isoindoline-based pigments such as C.I. Pigment Orange 66, azomethine metal complex pigments such as C.I. Pigment Orange 68, and diketopyrrolopyrrole pigments such as C.I. Pigment Orange 71, 73, and 81.

Preferred examples of the brown pigment include BONA lake pigments such as C.I. Pigment Brown 5, condensed azo pigments such as C.I. Pigment Brown 23, 41, and 42, and benzimidazolone pigments such as C.I. Pigment Brown 25 and 32.

Preferred examples of the violet pigment include dye lake pigments such as C.I. Pigment Violet 1, 2, 3, and 27, Naphthol AS pigments such as C.I. Pigment Violet 13, 17, 25, and 50, anthraquinone lake pigments such as C.I. Pigment Violet 5:1, quinacridone pigments such as C.I. Pigment Violet 19, dioxazine pigments such as C.I. Pigment Violet 23 and 37, perylene pigments such as C.I. Pigment Violet 29, benzimidazolone pigments such as C.I. Pigment Violet 32, and thioindigo pigments such as C.I. Pigment Violet 38.

Preferred examples of the black pigment include indazine pigments such as C.I. Pigment Black 1, carbon black, which is C.I. Pigment Black 7, graphite, which is C.I. Pigment Black 10, magnetite, which is C.I. Pigment Black 11, anthraquinone pigments such as C.I. Pigment Black 20, and perylene pigments such as C.I. Pigment Black 31 and 32.

Preferred examples of the white pigment include zinc oxide, which is C.I. Pigment White 4, titanium oxide, which is C.I. Pigment White 6, zinc sulfide, which is C.I. Pigment White 7, zirconium oxide (zirconium white), which is C.I. Pigment White 12, calcium carbonate, which is C.I. Pigment White 18, aluminum oxide-silicon oxide (Kaolin clay), which is C.I. Pigment White 19, barium sulfate, which is C.I. Pigment White 21 or 22, aluminum hydroxide (alumina white), which is C.I. Pigment White 23, silicon oxide, which is C.I. Pigment White 27, and calcium silicate, which is C.I. Pigment White 28.

Inorganic particles that are used as a white pigment may be a single substance or composite particles with an oxide of silicon, aluminum, zirconium, titanium, etc., an organic metal compound, or an organic compound.

Among them, the titanium oxide is suitably used since, compared with other white pigments, it has low specific gravity, a large refractive index, high hiding power and coloring power, and excellent durability toward acid, alkali, and other environments. In addition to the titanium oxide, another white pigment (which may be a white pigment other than those described above) may be used in combination.

It is preferable to select the pigment, dispersant, and medium, and set dispersion conditions and filtration conditions such that the average particle size of pigment particles is preferably 0.005 to 0.5 µm, more preferably 0.01 to 0.45 µm, and yet more preferably 0.015 to 0.4 µm. When the average particle size is in the above-mentioned range, it is possible to suppress head nozzle clogging and maintain storage stability, transparency, and curing speed of an ink composition.

### Oil-soluble dye

The oil-soluble dye that can be used in the present invention is explained below.

The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble colorant, and among these the oil-soluble colorant is preferable.

Among the oil-soluble dyes that can be used in the present invention, as a yellow dye, any may be used.

Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other types of dye such as quinophthalone dyes, nitro/nitroso dyes, acridine dyes, and acridinone dyes.

Among the above-mentioned oil-soluble dyes that can be used in the present invention, as a magenta dye, any may be used.

Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, and anthrapyridones; and condensed polycyclic dyes such as dioxazine dyes.

Among the oil-soluble dyes that can be used in the present invention, as a cyan dye, any may be used.

Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit the respective colors of yellow, magenta, and cyan only after a part of the chromophore (chromogenic atomic group) dissociates, and in that case a counter cation may be an inorganic cation such as an alkali metal or ammonium, may be an organic cation such as pyridinium or a quaternary ammonium salt, or may be a polymer cation having the above cations as a partial structure.

Although not limited to the following, preferred specific examples of the oil-soluble dyes include C.I. Solvent Black 3, 7, 27, 29, and 34; C.I. Solvent Yellow 14, 16, 19, 29, 30, 56, 82, 93, and 162; C.I. Solvent Red 1, 3, 8, 18, 24, 27, 43, 49, 51, 72, 73, 109, 122, 132, and 218; C.I. Solvent Violet 3; C.I. Solvent Blue 2, 11, 25, 35, 38, 67, and 70; C.I. Solvent Green 3 and 7; and C.I. Solvent Orange 2.

Particularly preferred examples thereof include NUBIAN BLACK PC-0850, OIL BLACK HBB, OIL YELLOW 129, OIL YELLOW 105, OIL PINK 312, OIL RED 5B, OIL SCARLET 308, VALI FAST BLUE 2606, and OIL BLUE BOS (manufactured by Orient Chemical Industries, Ltd.), AIZEN SPILON BLUE GNH (manufactured by Hodogaya Chemical Co., Ltd.), and NEOPEN YELLOW 075, NEOPEN MAGENTA SE1378, NEOPEN BLUE 808, NEOPEN BLUE FF4012, and NEOPEN CYAN FF4238 (manufactured by BASF).

### Disperse dye

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include C.I. Disperse Yellow 5, 42, 54, 64, 79, 82, 83, 93, 99, 100, 119, 122, 124, 126, 160, 184:1, 186, 198, 199, 201, 204, 224, and 237; C.I. Disperse Orange 13, 29, 31:1, 33, 49, 54, 55, 66, 73, 118, 119, and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. Disperse Green 6;1 and 9.

The colorant that can be used in the present invention may be used singly or in a combination of two or more types.

In the present invention, the content of the colorant may be selected appropriately according to physical properties of the colorant (specific gravity, coloring power, color, etc.) and the color combination for the ink compositions to be used to form a printed material, but from the viewpoint of hiding power and coloring power it is preferably 0.1 to 30 wt %, more preferably 0.5 to 20 wt %, and particularly preferably 1 to 10 wt % relative to the weight of the entire ink composition.

In the present invention, the colorant may be added directly together with other components when preparing an ink composition, but may be added as a pigment dispersion (also called a 'mill base') by adding and dispersing it in advance in a medium such as a commonly used organic solvent (methyl ethyl ketone, toluene, butanol, butyl acetate, etc.) or a liquid such as a cationically polymerizable compound used in the present invention. In order to avoid the problems of degradation of solvent resistance and residual VOC (Volatile Organic Compound) due to the medium when it remains in a cured image, the colorant is preferably added after dispersing it in advance in a cationically polymerizable compound. Furthermore, when taking into consideration workability during formulation, it is preferable to select as the medium used a cationically polymerizable compound having the lowest viscosity.

In the ink composition of the present invention, it is preferable to use a pigment as a colorant, and when it is used it is preferable for the ink composition to contain a dispersant in order to disperse the pigment stably in the ink composition.

The dispersant that can be used in the present invention is preferably a polymeric dispersant. The 'polymeric dispersant' referred to in the present invention means a dispersant having a weight-average molecular weight of 1,000 or greater.

The main chain skeleton of the polymeric dispersant is not particularly limited; examples thereof include a polyurethane skeleton, a polyacrylic skeleton, a polyester skeleton, a polyamide skeleton, a polyimide skeleton, and a polyurea skeleton, and from the viewpoint of storage stability of the ink composition a polyurethane skeleton, a polyacrylic skeleton, and a polyester skeleton are preferable. Furthermore, the structure of the polymeric dispersant is not particularly limited; examples thereof include a random structure, a block structure, a comb-shaped structure, and a star-shaped structure, and similarly from the viewpoint of storage stability a block structure or a comb-shaped structure is preferable.

Examples of the polymeric dispersant include 101, 102, 103, 106, 108, 109, 110, 111, 112, 116, 130, 140, 142, 145, 161, 162, 163, 164, 166, 167, 168, 170, 171, 174, 180, 182, 183, 184, 185, 2000, 2001, 2020, 2050, 2070, 2096, and 2150 of the wetting and dispersing agent DISPERBYK series commercially available from BYK Chemie, 4008, 4009, 4010, 4015, 4020, 4046, 4047, 4050, 4055, 4060, 4080, 4300, 4330, 4340, 4400, 4401, 4402, 4403, 4406, 4800, 5010, 5044, 5054, 5055, 5063, 5064, 5065, 5066, 5070, and 5244 of the EFKA series commercially available from Ciba Specialty Chemicals, 3000, 11200, 13240, 13650, 13940, 16000, 17000, 18000, 20000, 21000, 24000SC, 24000GR, 26000, 28000, 31845, 32000, 32500, 32550, 32600, 33000, 34750, 35100, 35200, 36000, 36600, 37500, 38500, 39000, 53095, 54000, 55000, 56000, and 71000 of the SOLSPERSE series commercially available from the Lubrizol Corporation, 1210, 1220, 1831, 1850, 1860, 2100, 2150, 2200, 7004, KS-260, KS-273N, KS-860, KS-873N, PW-36, DN-900, DA-234, DA-325, DA-375, DA-550, DA-1200, DA-1401, and DA-7301 of the DISPARLON series commercially available from Kusumoto Chemicals, Ltd., PB-711, PB-821, PB-822, PN-411, and PA-111 of the AJISPER series commercially available from Ajinomoto Co., Inc., 104A, 104C, 104E, 104H, 104S, 104BC, 104DPM, 104PA, 104PG-50, 420, 440, DF110D, DF110L, DF37, DF58, DF75, DF210, CT111, CT121, CT131, CT136, GA, TG, and TGE of the SURFINOL series commercially available from Air Products, Inc., STG and E1004 of the OLFINE series commercially available from Nissin Chemical Industry Co., Ltd., 70, 2120, and 2190 of the SN-Sperse series from SAN NOPCO Ltd., the ADEKA COL and ADEKA TOL series commercially available from ADEKA, and the SANNONIC series, the NAROACTY CL series, the EMULMIN series, the Newpol PE series, the IONET M series, the IONET D series, the IONET S series, the IONET T series, and SANSEPARA 100 commercially available from Sanyo Chemical Industries, Ltd.

Among these polymeric dispersants, from the viewpoint of the balance between storage stability and curing speed, the absolute value of the difference between acid value and amine value of a polymeric dispersant is preferably at least 0 mg KOH/g but no greater than 100 mg KOH/g, more preferably at least 0 mg KOH/g but no greater than 60 mg KOH/g, and yet more preferably at least 0 mg KOH/g but no greater than 30 mg KOH/g.

The acid value referred to here means the acid value per g of polymeric dispersant solids content and may be obtained by a potentiometric titration method in accordance with JIS K 0070.

The amine value referred to here means the amine value per g of polymeric dispersant solids content and is a value that is obtained by a potentiometric titration method using a 0.1 N aqueous solution of hydrochloric acid, and is expressed on the basis of the equivalent weight of potassium hydroxide. When a plurality of dispersants is used, it may be expressed as the weight average thereof.

With regard to a preferred amount of dispersant added in the ink composition, when the weight of pigment in the ink composition is P and the weight of polymeric dispersant in the ink composition is D, the ratio by weight (D/P) is preferably 0.01 ≤ D/P ≤ 2.0, more preferably 0.03 ≤ D/P ≤ 1.5, and yet more preferably 0.05 ≤ D/P ≤ 0.6. When in the above-mentioned range, aggregation/sedimentation of the pigment and increase in ink viscosity do not occur, and an ink composition having excellent storage stability, low ink viscosity, and excellent discharge stability is obtained.

When carrying out dispersion, it is also preferable to add, in addition to a dispersant, a dispersion adjuvant, which is generally called a synergist (e.g. 5000, 12000, and 22000 of the SOLSPERSE series commercially available from the Lubrizol Corporation, EFKA6745 commercially available from Ciba Specialty Chemicals, etc.), various types of surfactants, or an antifoaming agent, thus improving the dispersibility and wettability of the pigment.

In the present invention, when a pigment is used as a colorant, it is preferable to mix the pigment with a dispersant and then add it to a cationically polymerizable compound to thus disperse it, or mix a cationically polymerizable compound with a dispersant and then add the pigment thereto to thus disperse it. For dispersion, for example, dispersing equipment such as a ball mill, a bead mill, a sand mill, a salt mill, an attritor, a roll mill, an agitator, a Henschel mixer, a colloidal mill, an ultrasonic homogenizer, a pearl mill, a wet type jet mill, or a paint shaker may be used. Among them, bead mill dispersing equipment is preferable due to excellent dispersing properties.

When carrying out dispersion by means of a bead mill, the use of beads preferably having an average diameter of 0.01 to 3.0 mm, more preferably 0.05 to 1.5 mm, and yet more preferably 0.1 to 1.0 mm enables a pigment dispersion having excellent stability to be obtained.

### (D) Other component

### <Amine compound>

In the present invention, it is preferable to use an amine compound, in addition to the above-mentioned essential components of (A) to (C), for the purpose of trapping the acid generating of the photo-acid generator in a dark reaction, suppressing to increase the viscosity of the ink composition by a dark reaction, and improving storage stability, and for the purpose of trapping the acid generating of the photo-acid generator by leak light, and inhibiting unnecessarily curing the ink composition on a nozzle plate, and improving storage stability.

The amine compound that can be used in the present invention is not particularly limited as long as it is a conventionally known amine compound.

Furthermore, the amine compound may be a compound having one amine site in the molecule or a compound having two or more amine sites in the molecule, and may have a substituent such as an alkyl group, an alkenyl group, an alkynyl group, a halogen atom (-F, -Br, -Cl, -I), a hydroxy group, an alkoxy group, an aryloxy group, an alkylthio group, an arylthio group, an acyl group, an acyloxy group, an alkoxycarbonyl group, or an aryloxycarbonyl group.

From the viewpoint of safety, the amine compound that can be used in the present invention preferably has a boiling point at standard atmospheric pressure of at least 120°C, more preferably at least 150°C, and yet more preferably 180°C.

The molecular weight of the amine compound is preferably in the range of 100 to 1,000, more preferably in the range of 150 to 800, and yet more preferably in the range of 200 to 600.

Furthermore, the amine compound that can be used in the present invention may be any one of primary, secondary, and tertiary amine compounds, and from the viewpoint of suppression of a side reaction with a polymerizable compound and a coloration reaction, it is preferable to use a tertiary amine compound. Moreover, it may be either an aliphatic amine compound or an aromatic amine compound, and from the viewpoint of acid-scavenging ability it is preferably an aliphatic amine compound.

Therefore, an amine compound that is suitably used in the present invention is a tertiary aliphatic amine compound having a molecular weight in the range of 200 to 600 and a boiling point at standard atmospheric pressure of at least 180°C.

Specific examples of the amine compound that can be used in the present invention are listed below, but the present invention is not limited thereto.

Examples thereof include n-hexylamine, n-octylamine, di-n-butylamine, tri-n-hexylamine, cyclohexylamine, dicyclohexylamine, 3-(di-n-butylamino)propylamine, 3-amino-1-phenylbutane, N-t-butylpyrrolidine, 2,6-dimethylpiperidine, decahydroquinoline, decahydroisoquinoline, tropine, 2,2,6,6-tetramethyl-4-piperidone, 1-(2-pyridyl)piperazine, N,N'-dimethylpiperazine, 1,4-diazabicyclo[2.2.2]octane, 4-pyrrolizinopyridine, cumylamine, 3-butoxypropylamine, 3-methylthiopropylamine, bis(3-aminopropyl) ether, N,N-di-n-propylaniline, N,N-bis(3-aminopropyl)methylamine, N-(3-aminopropyl)morpholine, N-benzyl-2-methyl-1,3-propanediamine, hexamethylenetetramine, hexahydro-1,3,5-triphenyl-1,3,5-triazine, 1,4,7-trimethyl-1,4,7-triazacyclononane, 1,4,7,10-tetraazacyclododecane, tris(3-aminopropyl)amine, N,N-dimethylaniline, 1-ethylpyrrole, 2,5-dimethylpyrrole, 4-(dimethylamino)pyridine, 2,6-dichloropyridine, 2,6-diaminopyridine, 2,6-dimethyl-4-hydroxypyridine, diethyl 2,6-pyridinedicarboxylate, 2,4,6-trimethylpyridine, 4-vinylpyridine, 3-acetylpyridine, 2-benzoylpyridine, methyl nicotinate, 2,2'-bipyridyl, 2,2':6',2"-terpyridine, quinoline, isoquinoline, 8-quinolinol, acridine, 5-aminoindole, carbazole, phenanthridine, 9(10H)-acridone, 1,6-naphthyridine, 1,8-naphthyridine, 1,10-phenanthroline, quinacridone, and 1 H-pyrrolo[2,3-b]pyridine.

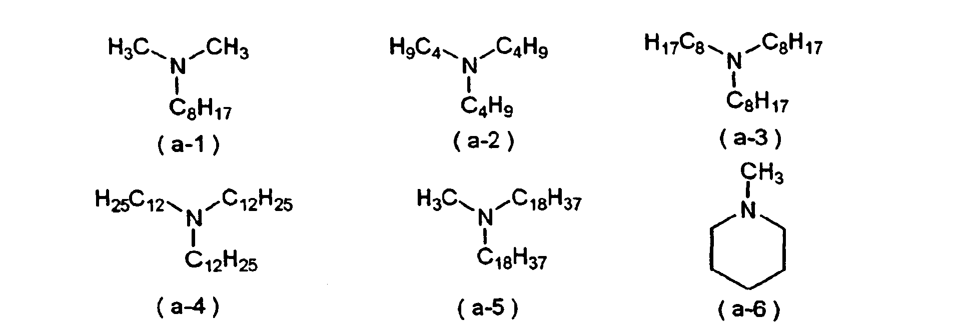

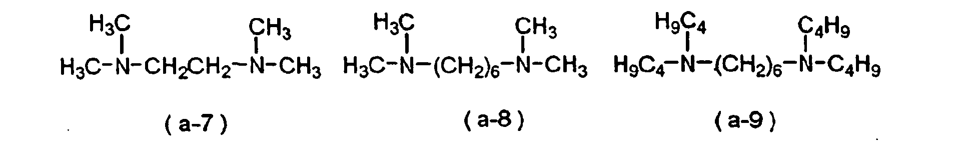

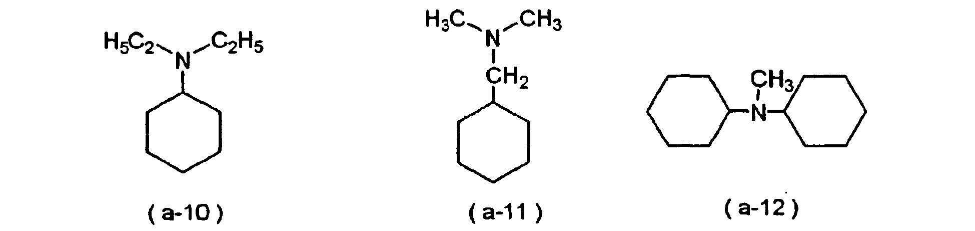

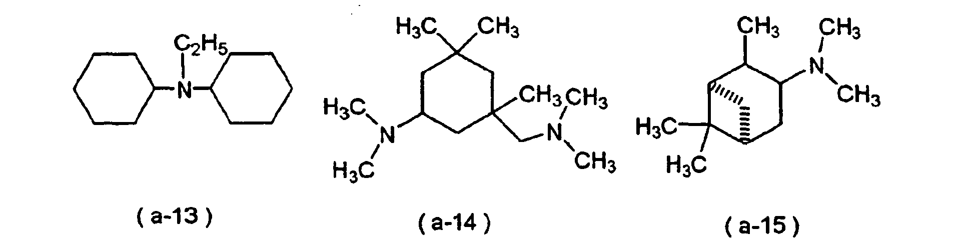

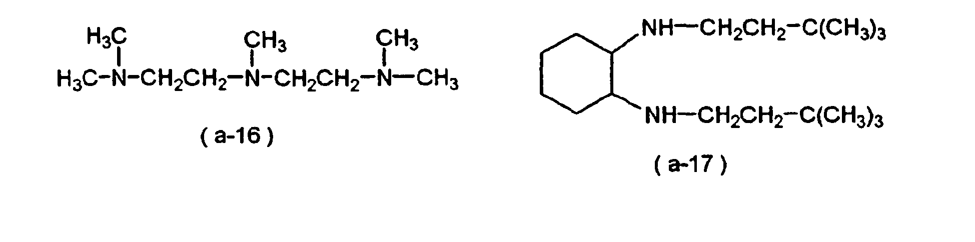

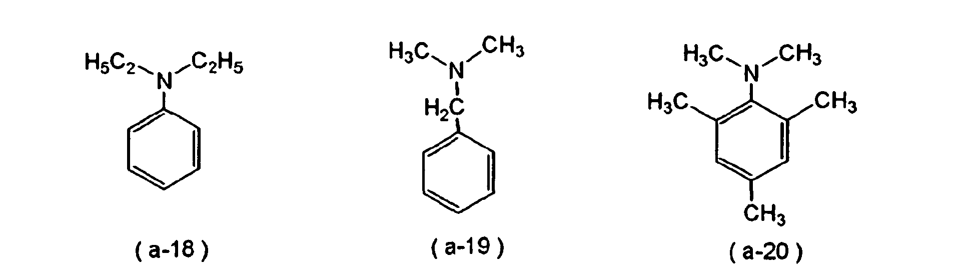

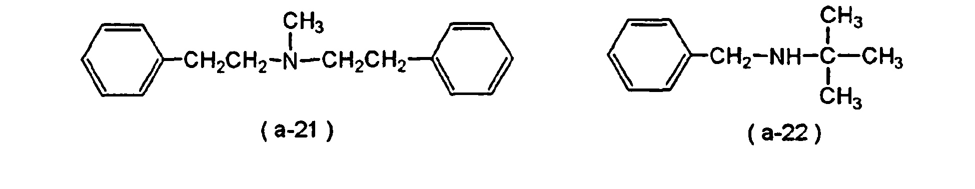

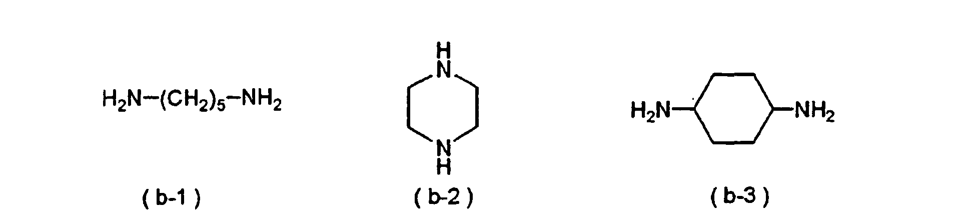

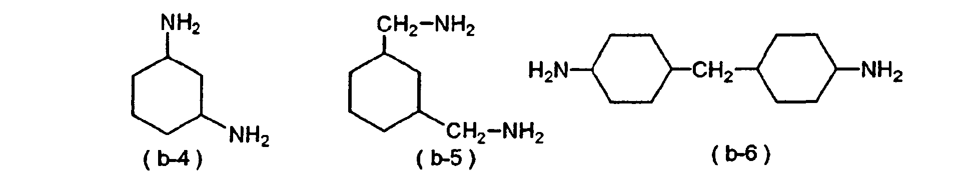

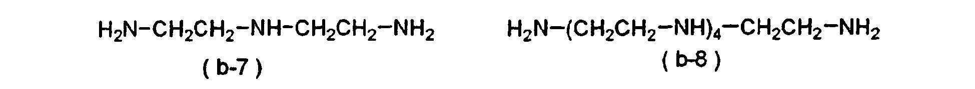

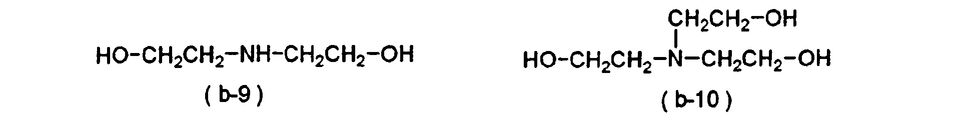

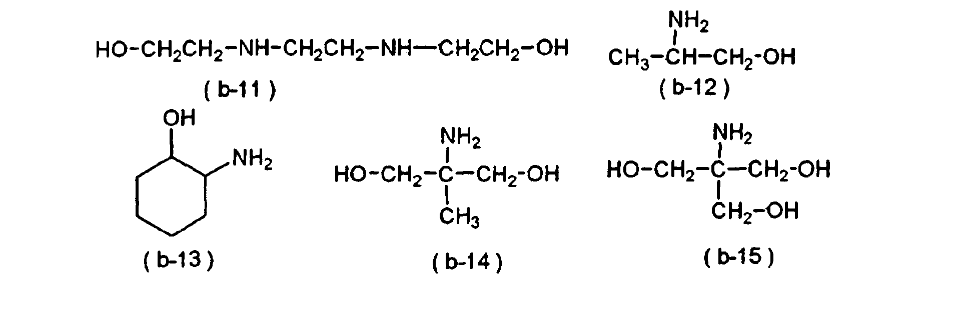

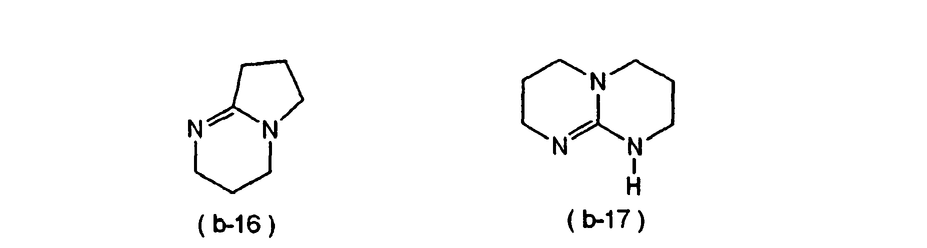

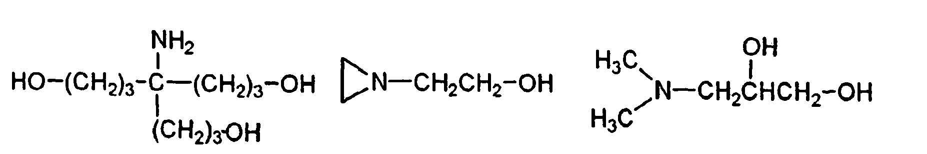

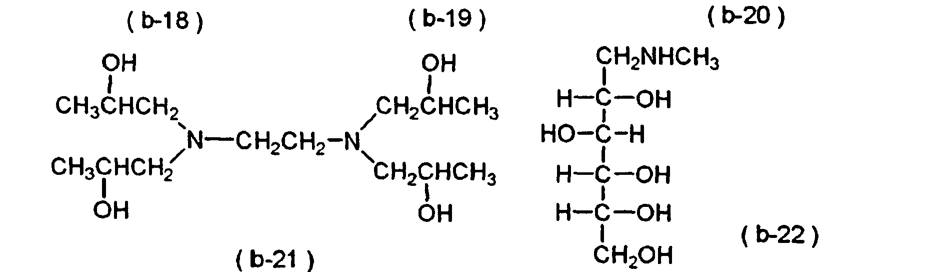

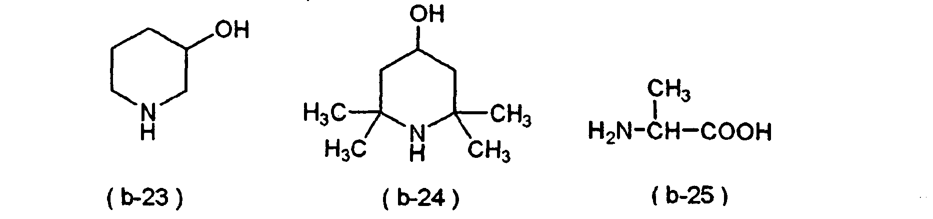

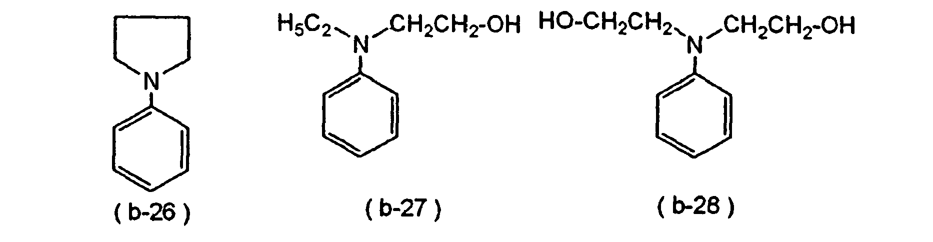

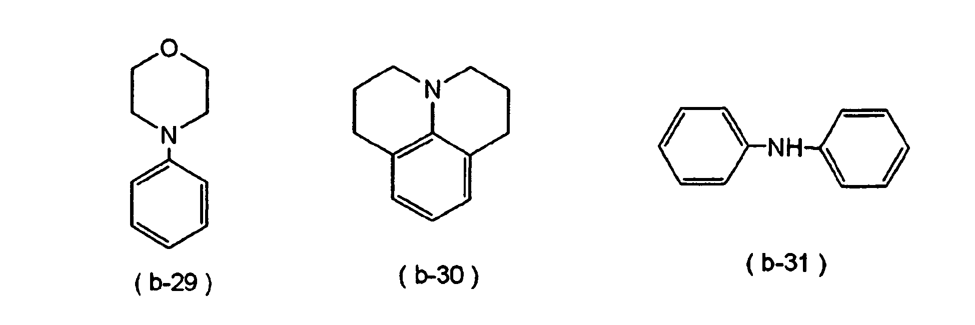

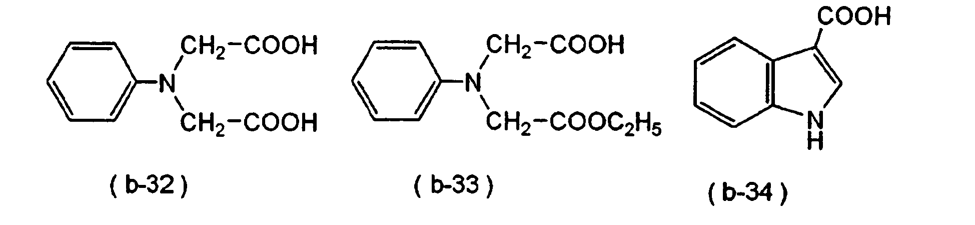

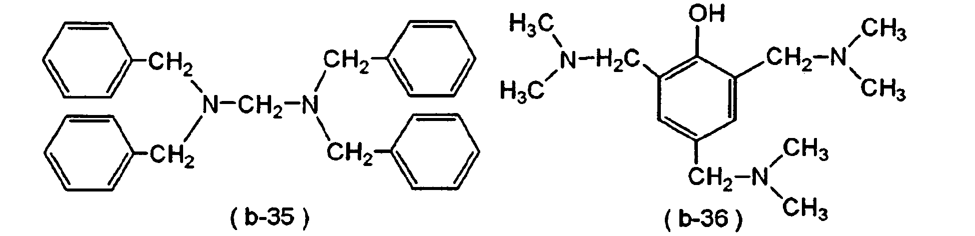

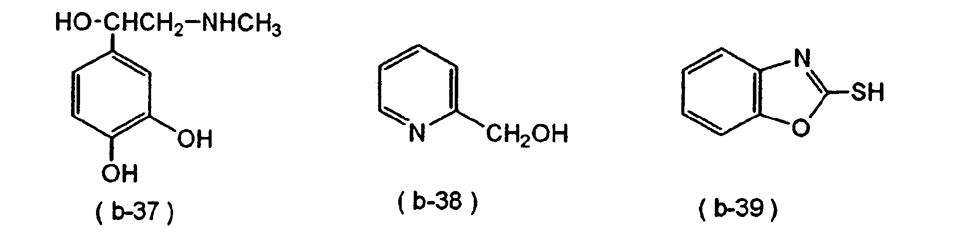

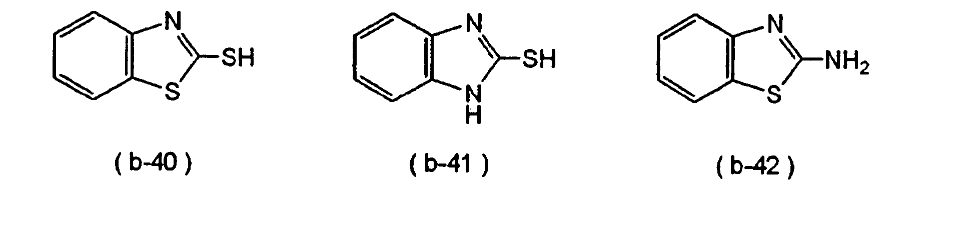

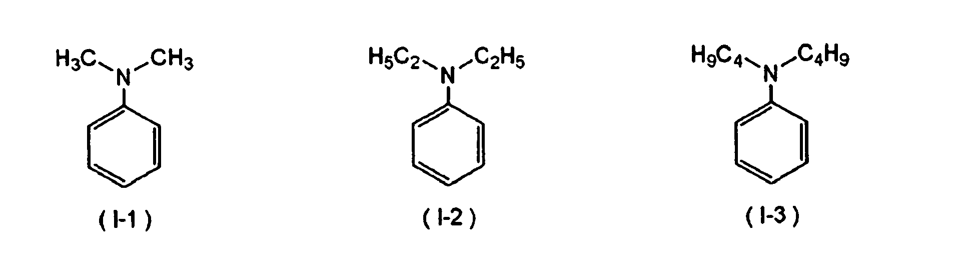

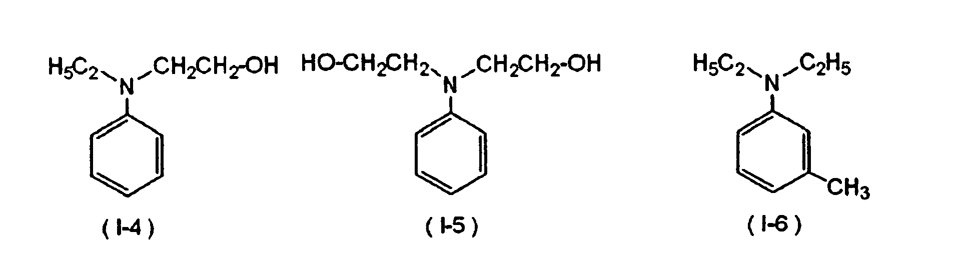

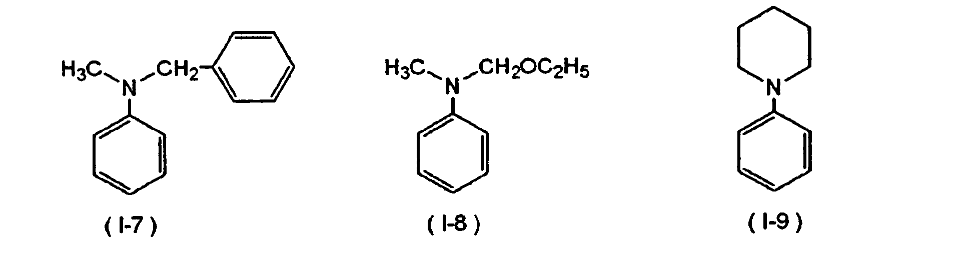

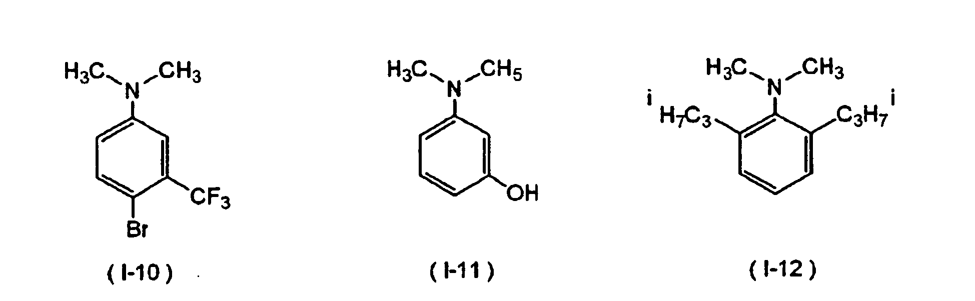

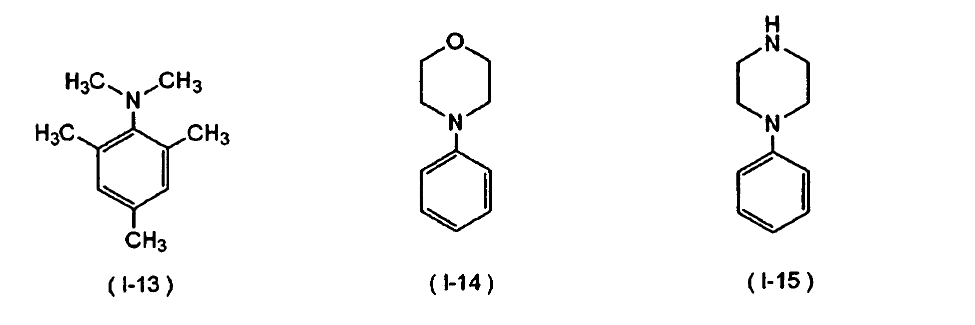

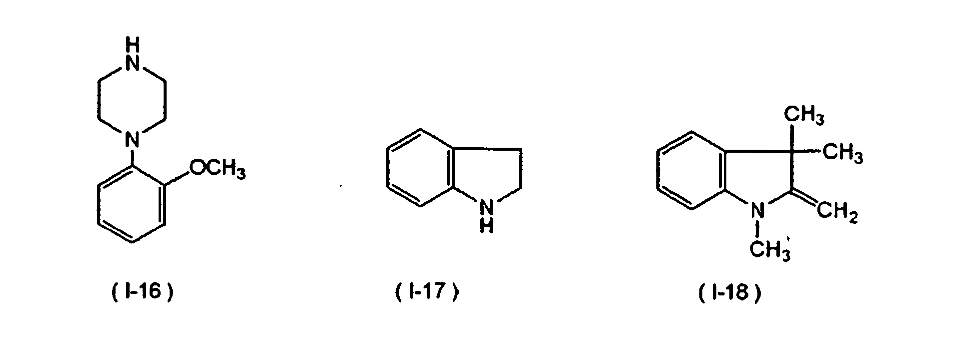

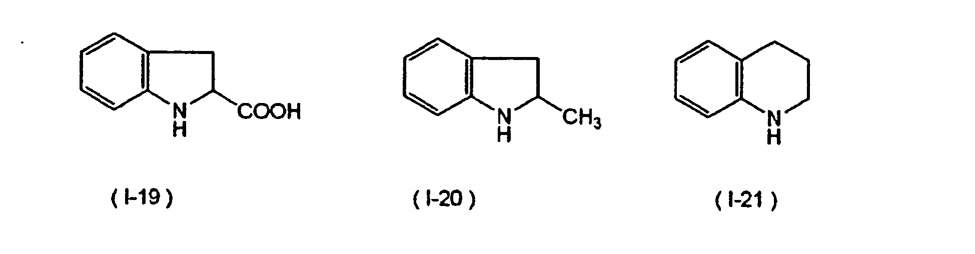

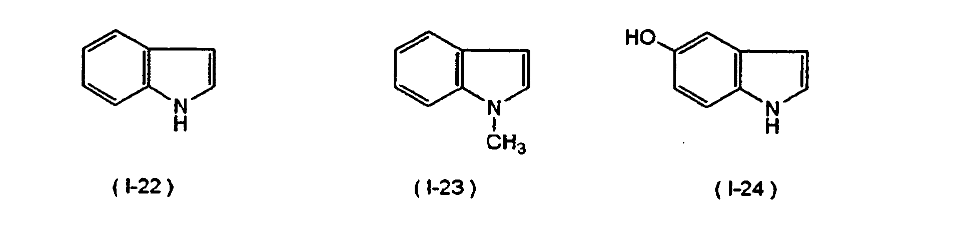

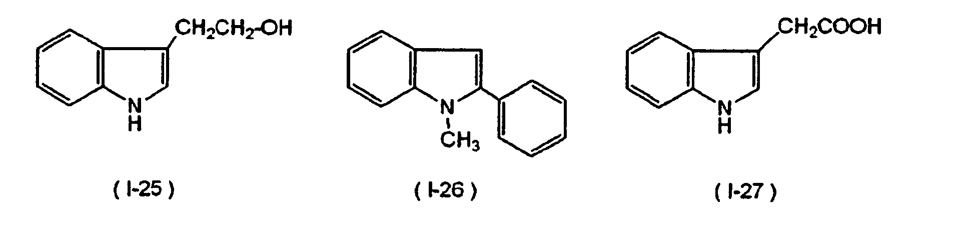

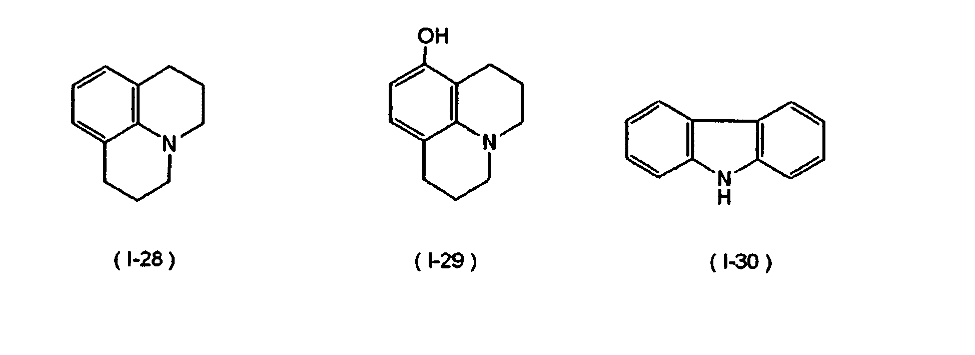

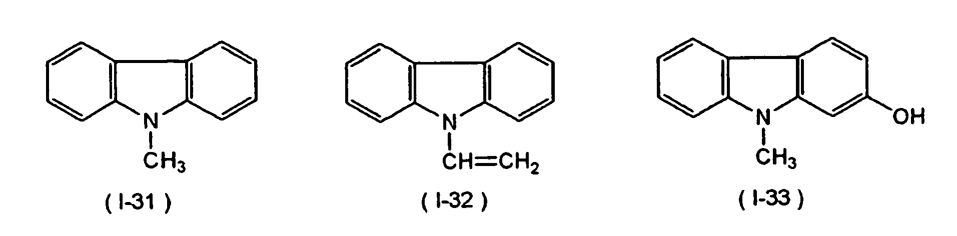

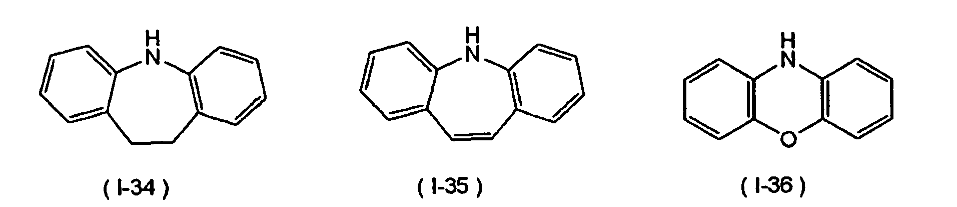

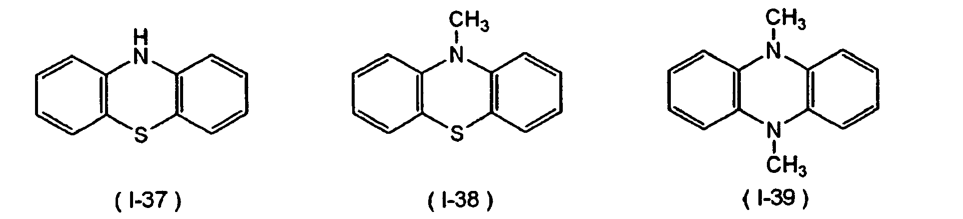

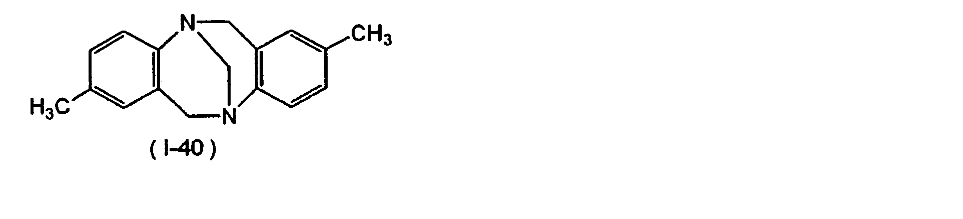

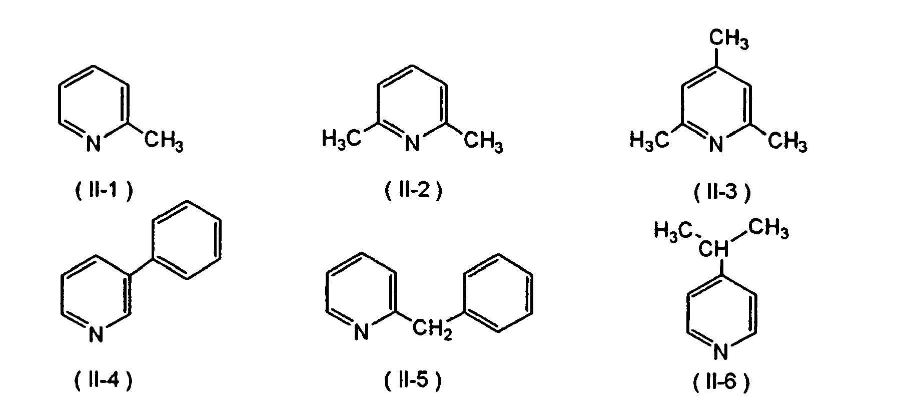

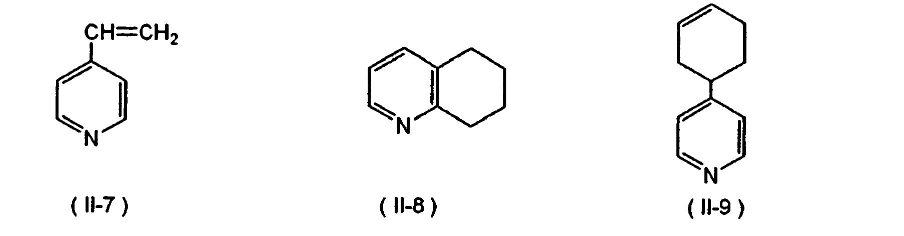

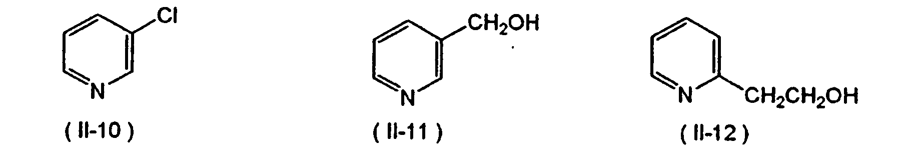

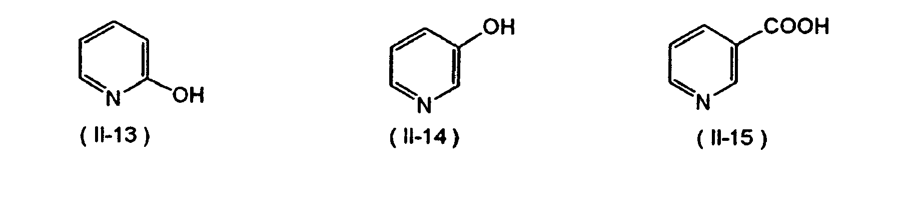

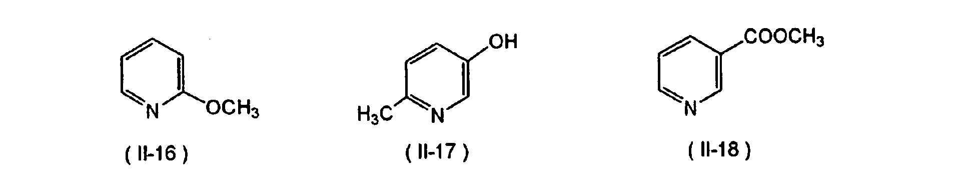

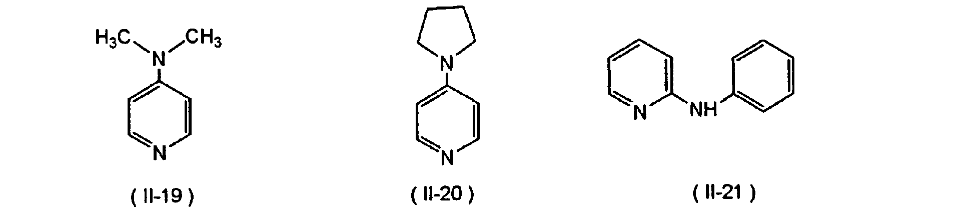

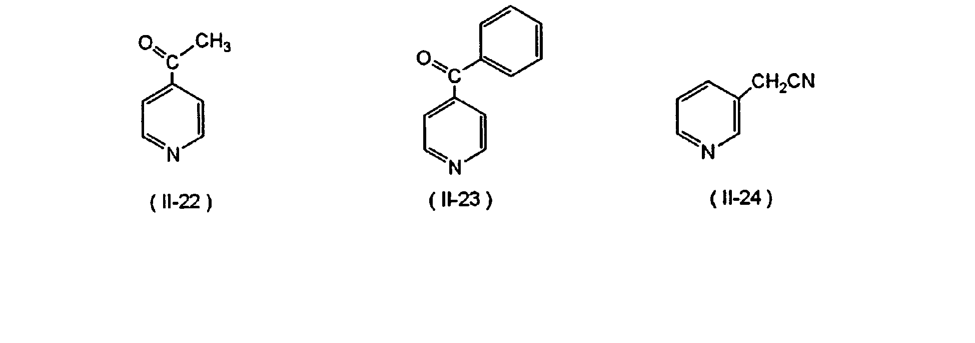

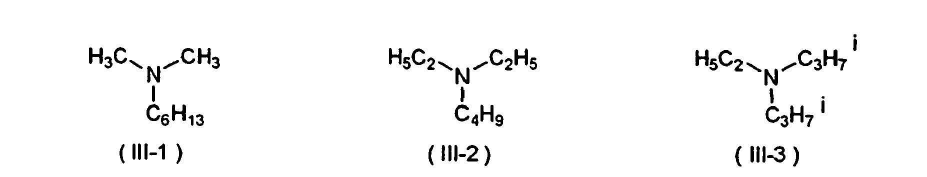

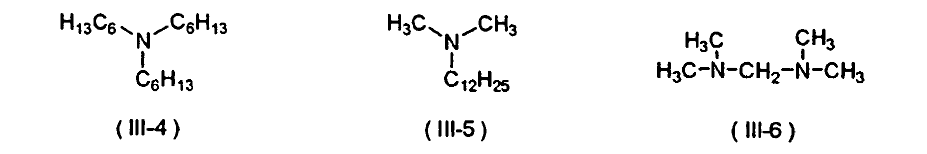

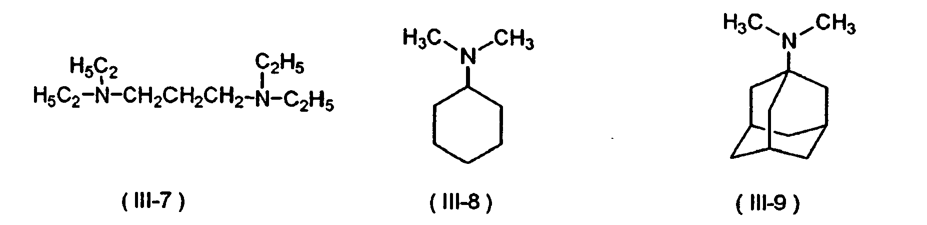

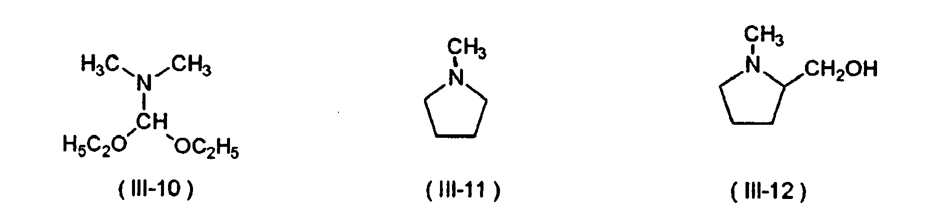

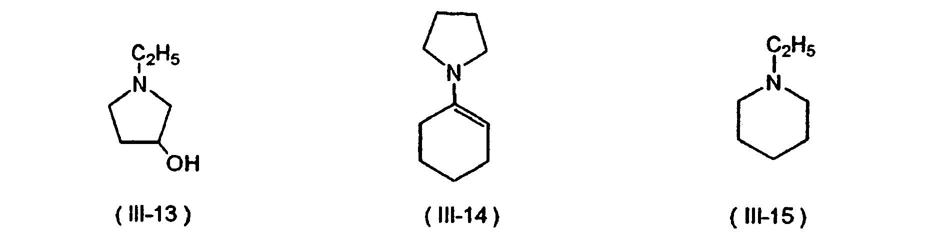

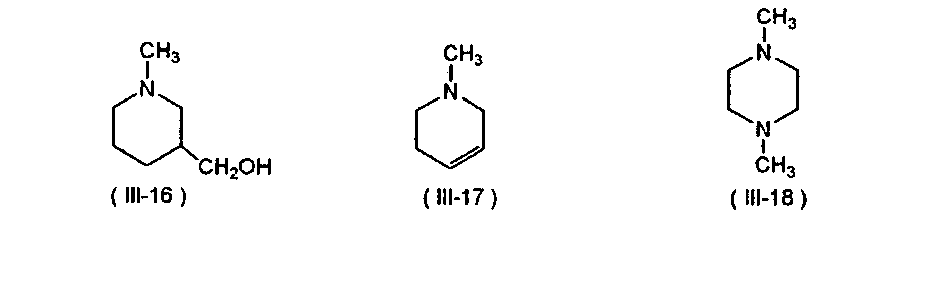

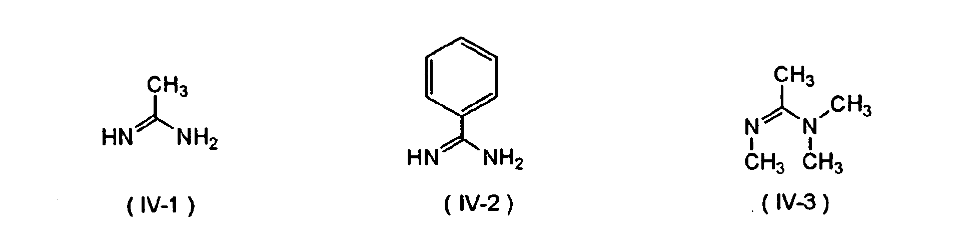

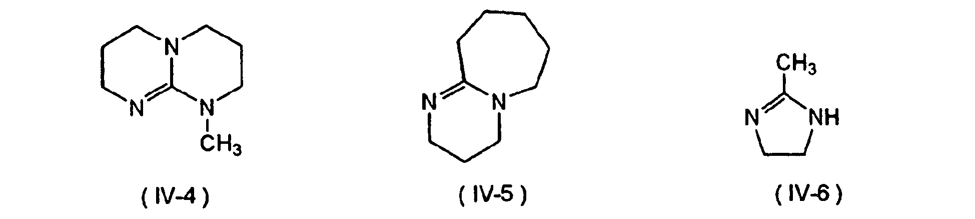

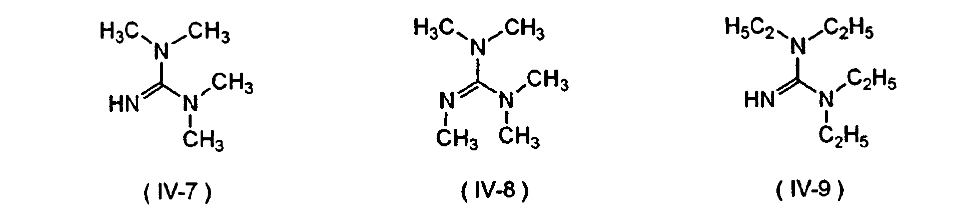

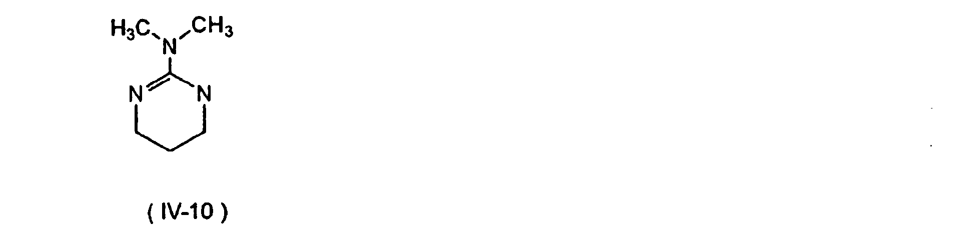

With regards to the examples of amine compounds usuable in the present invention, a hinderd amine compound is particularly preferable, and a hindered amine compound having no nucleophilic moiety in the molecule is most preferable.

The hindered amine compound having no nucleophilic moiety (hereinafter sometimes referred to as "a hindered amine compound having the specific structure"), is characterized by not having any nucleophilic moiety other than a basic nitrogen atom having large steric hindrance.

The "nucleophilic moiety" as used herein means a functional group having a nucleophilic property attributed to an unshared electron pair, with examples including an ester group, an ether group, a hydroxyl group, an amino group, a thiol group, a thiocarbonyl group and a thioester group. By using a hindered amine compound having the specific structure, it becomes possible to trap an acid produced in a trace amount without inhibiting a cationic polymerization reaction, so that stability over time and exposure stability can be improved since high sensitivity is maintained.

Commercially available light stabilizers such as HALS (manufactured by Ciba Specialty Chemicals Inc.) or SANOL (manufactured by Sankyo Lifetech Co., Ltd.), due to having an ester structure as a nucleophilic moiety in a molecule, are not included in the scope of the hindered amine compound having the specific structure in the present invention.

A hindered amine compound having the specific structure is required to have a sterically bulky substituent around the basic nitrogen atom so as to reduce to inhibiting a growth reaction at cationic terminals during cationic polymerization reaction. The steric hindrance effect caused by the sterically bulky substituent can suppress a reaction between the basic nitrogen atom and the cationic growth terminal, and thus can improve the stability with maintaining a high sensitivity.

A hindered amine compound having the specific structure in the present invention can improve stability because trace amounts of acids undesirably produced without exposure to light is trapped. Normally, when the curing is performed by exposure, it is surmised that the steric hindrance effect caused by the sterically bulky substituent can suppress a reaction between the basic nitrogen atom and the cationic growth terminal, thus can maintain a high sensitivity without inhibiting the progress of a cationic polymerization reaction.

The hindered amine compound having the specific structure has no nucleophilic moiety other than the basic nitrogen atom(s) in a molecule thereof, and is preferably a compound constituted of a carbon atom, a hydrogen atom and a nitrogen atom. The hindered amine compound having the specific structure is more preferably a compound represented by Formulae I to VII below.

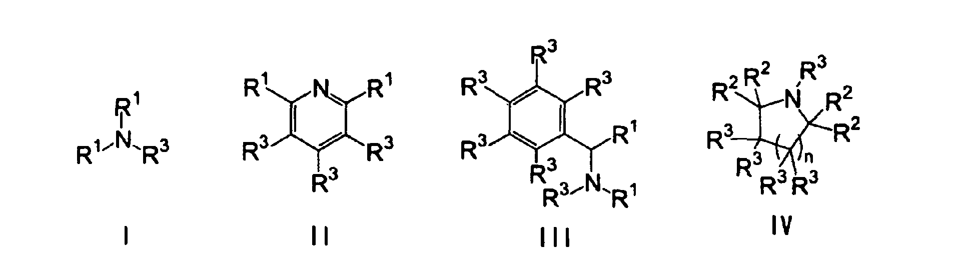

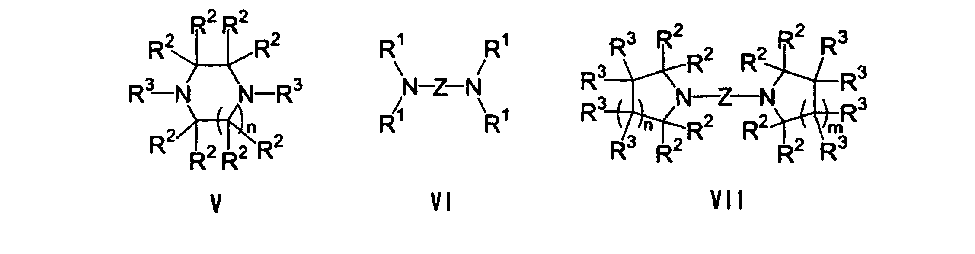

R¹ denotes a branched alkyl group having 3 to 8 carbons, a cycloalkyl group having 3 to 10 carbons or an aralkyl group having 7 to 20 carbons. R² denotes a linear alkyl group having 1 to 4 carbons, a branched alkyl group having 3 to 6 carbons or an aryl group having 6 to 12 carbons. R³ denotes a hydrogen atom, a linear alkyl group having 1 to 20 carbons, a branched alkyl group having 3 to 6 carbons, a cycloalkyl group having 3 to 10 carbons, an aryl group having 6 to 12 carbons, an aralkyl group having 7 to 20 carbons or an alkenyl group having 2 to 20 carbons. The two or more groups respectively denoted by R¹s or R²s in one molecule may be the same or different, and may be bonded with each other to form a ring structure. Z denotes a divalent organic group formed of hydrocarbons. n and m each denote an integer from 1 to 3.

Preferable examples of the branched alkyl group having 3 to 8 carbons denoted by R¹ include an isopropyl group, an isobutyl group, a tert-butyl group, an isopentyl group, a 2-methylbutyl group, a neopentyl group, a 4-methylpentyl group, a 3-methylpentyl group, a 2-methylpentyl group, a 3,3-dimethylbutyl group, a 1,1-dimethylbutyl group, a 1,3-dimethylbutyl group, a 2,3-dimethylbutyl group, a 1-ethylbutyl group, a 1-ethyl-2-methyl-propyl group, a 1-methyl-1-ethylpropyl group, a 1-methyl-2-ethylpropyl group, a 2-methyl-1-ethylpropyl group and a 2-methyl-2-ethylpropyl group, and more preferable examples include an isopropyl group, an isobutyl group, a tert-butyl group, an isopentyl group, a 2-methylbutyl group and a neopentyl group.

Preferable examples of the cycloalkyl group having 3 to 10 carbons denoted by R¹ include a cyclopropyl group, a cyclobutyl group, a cyclopentyl group, a cyclohexyl group and a norbornyl group, and more preferable examples include a cyclopentyl group, a cyclohexyl group and a norbornyl group.

Preferable examples of the aralkyl group having 7 to 20 carbons denoted by R¹ are substituted and unsubstituted aralkyl groups including a benzyl group, an α-methylbenzyl group, an α-ethylbenzyl group, a phenethyl group, an α-methylphenethyl group, an α-methylphenethyl group, an α,α-dimethylbenzyl group, a 4-methylphenethyl group, a 4-methylbenzyl group, a 3-methylbenzyl group, a 2-methylbenzyl group, a 4-ethylbenzyl group, a 2-ethylbenzyl group, a 4-isopropylbenzyl group, a 4-tert-butylbenzyl group, a 2-tert-butylbenzyl group, a 4-tert-pentylbenzyl group, a 4-cyclohexylbenzyl group, a 4-n-octylbenzyl group, a 4-tert-octylbenzyl group, a 4-allylbenzyl group, a 4-benzylbenzyl group, a 4-phenethylbenzyl group, a 4-phenylbenzyl group, a 4-(4'-methylphenyl)benzyl group, a 2-furfuryl group, a diphenylmethyl group, a 1-naphthylmethyl group and 2-naphthylmethyl group, and more preferable examples include a benzyl group, an α-methylbenzyl group, an α-ethylbenzyl group, a phenethyl group and an α-methylphenethyl group.

Preferable examples of the linear alkyl group having 1 to 4 carbons denoted by R² include a methyl group, an ethyl group, a butyl group and a propyl group.

Preferable examples of the branched alkyl group having 3 to 6 carbons denoted by R² include an isopropyl group, an isobutyl group, a tert-butyl group, an isopentyl group, a 2-methylbutyl group, a neopentyl group, a 4-methylpentyl group, a 3-methylpentyl group, a 2-methylpentyl group, a 3,3-dimethylbutyl group, a 1,1-dimethylbutyl group, a 1,3-dimethylbutyl group, a 2,3-dimethylbutyl group, a 1-ethylbutyl group, a 1-ethyl-2-methylpropyl group, a 1-methyl-1-ethylpropyl group, a 1-methyl-2-ethylpropyl group, a 2-methyl-1-ethylpropyl group and a 2-methyl-2-ethylpropyl group, and more preferable examples include an isopropyl group, an isobutyl group, a tert-butyl group, an isopentyl group, a 2-methylbutyl group and a neopentyl group.

Preferable examples of the aryl group having 6 to 12 carbons denoted by R² include a phenyl group, a tolyl group, a xylyl group, a 4-ethylphenyl group, a 4-tert-butylphenyl group and a naphthyl group.

Preferable examples of the linear alkyl group having 1 to 20 carbons and denoted by R³ include a methyl group, an ethyl group, a propyl group, a butyl group, a pentyl group, a hexyl group, a heptyl group, an octyl group, a nonyl group, a decyl group, a dodecyl group, a hexadecyl group and an octadecyl group, and more preferable examples include an octyl group, a nonyl group, a decyl group, a dodecyl group, a hexadecyl group and an octadecyl group.

Preferable examples of the linear alkenyl group having 2 to 20 carbons denoted by R³ include a vinyl group, an allyl group, a 1-propenyl group, an isopropenyl group, a 1-butenyl group, a 2-butenyl group, a 3-butenyl group, a 2-methyl-1-propenyl group, a 2-methylallyl group, a 1-methyl-1-propenyl group, a 1-methylallyl group, a 1-pentenyl group, a 2-pentenyl group and 1-hexenyl group, and more preferable examples include an allyl group, a 1-propenyl group, an isopropenyl group, a 1-butenyl group and a 2-butenyl group.

The branched alkyl group having 3 to 6 carbons denoted by R³, the cycloalkyl group having 3 to 10 carbons denoted by R³, the aryl group having 6 to 12 carbons denoted by R³ and the aralkyl group having 7 to 20 carbons denoted by R³ respectively have the same meanings and the same preferred ranges of those represented by R¹ or R², respectively.

The divalent organic group with a hydrocarbon denotes a divalent organic group having 1 to 30 carbons. In this case, the scope of the divalent organic group includes both an aliphatic group and an aromatic group. The aliphatic group may be a linear or cyclic, saturated or unsaturated divalent aliphatic hydrocarbon group. The number of carbons contained the divalent organic group is in a range of 1 to 30, and is preferably in a range of 2 to 22. The unsaturated aliphatic group may be an aliphatic group having a double bond or a triple bond. The scope of the divalent aromatic group includes a divalent hydrocarbon group derived from a monocyclic aromatic hydrocarbon having one benzene ring (such as benzene, toluene or xylene) and a divalent hydrocarbon group derived from a polycyclic aromatic hydrocarbon having two or more of benzene rings (such as naphthalene, biphenyl or terphenyl), which generally having 2 to 4 benzene rings.

Each of the groups described above may have a substituent formed of a hydrocarbon when the substituent can be introduced thereinto.

Examples of the hindered amine compound having the specific structure which can be used suitably in the present invention include compounds (A-1) to (A-50) illustrated below, while the present invention should not be construed as being limited to these examples.

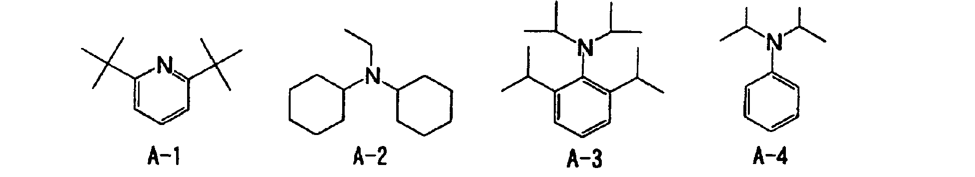

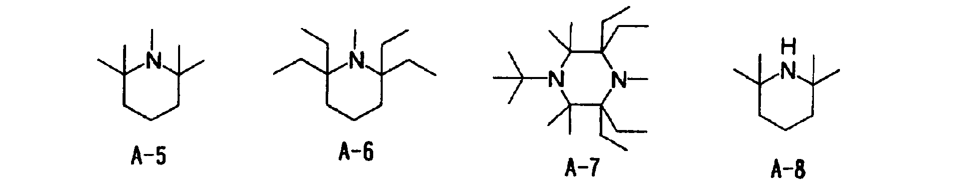

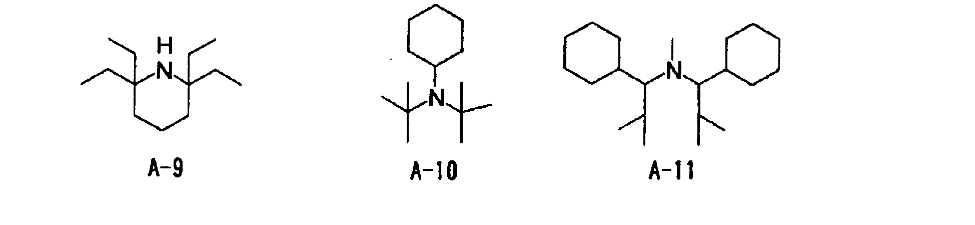

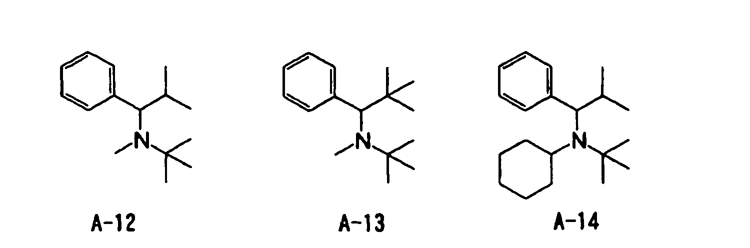

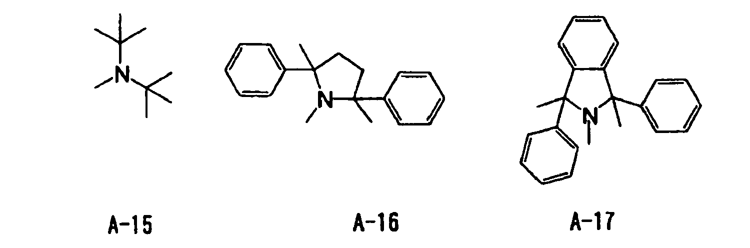

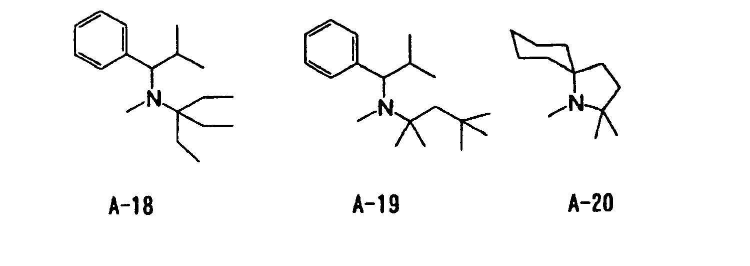

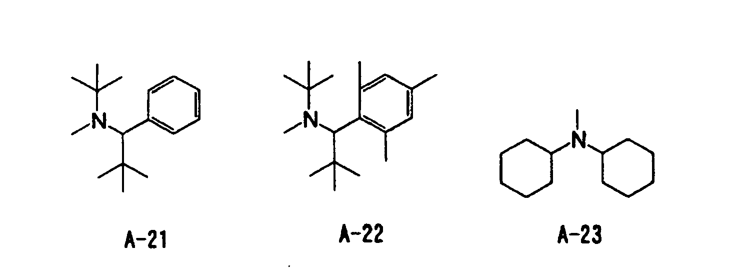

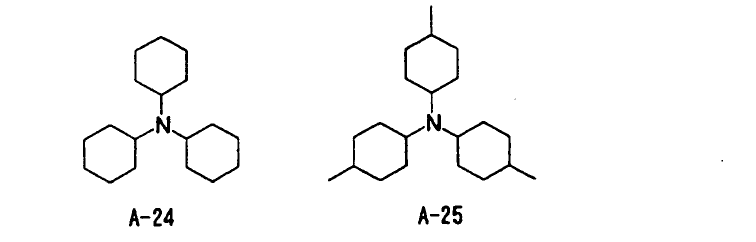

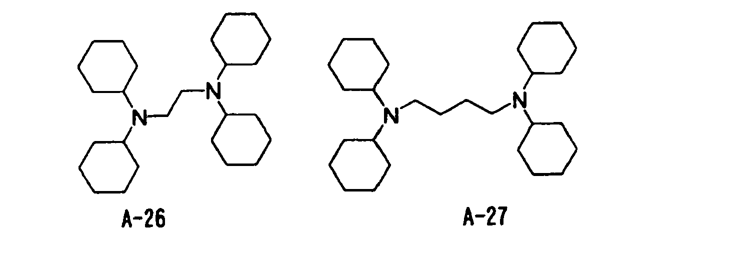

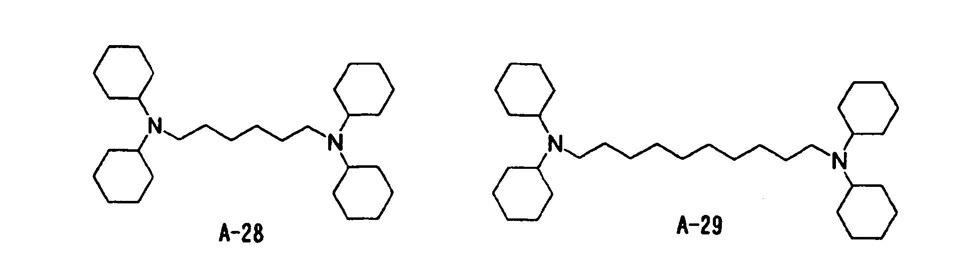

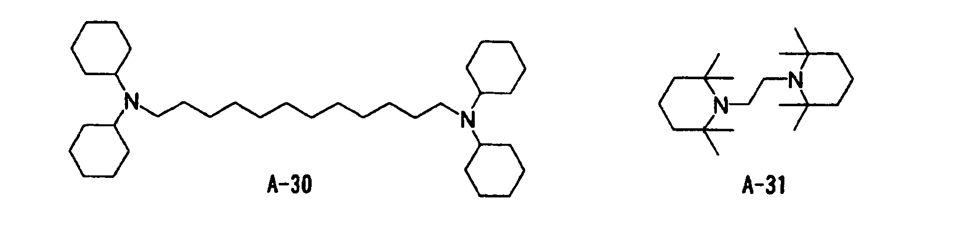

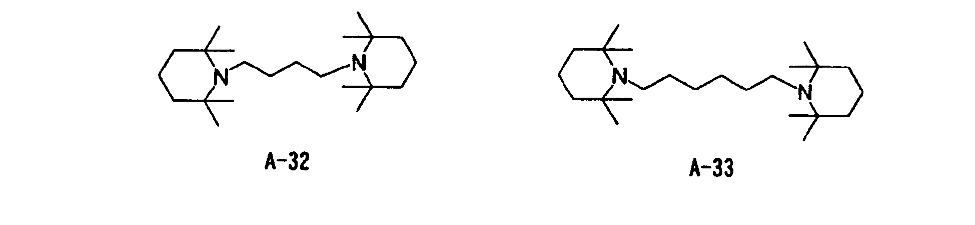

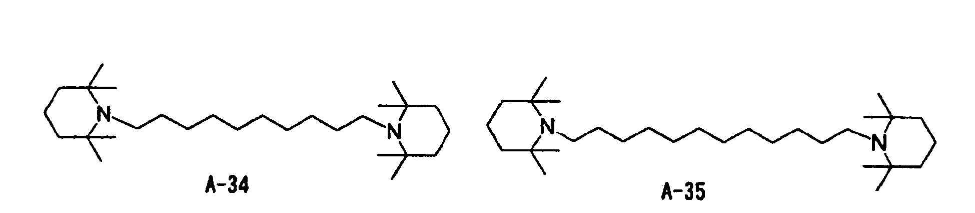

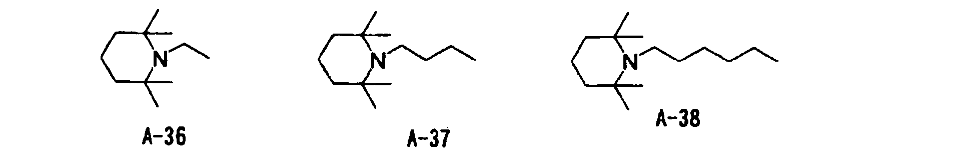

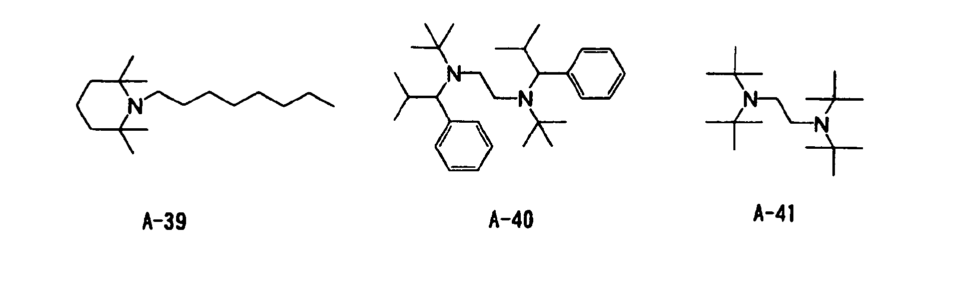

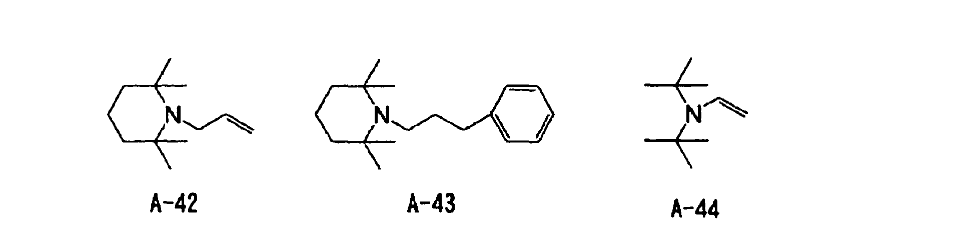

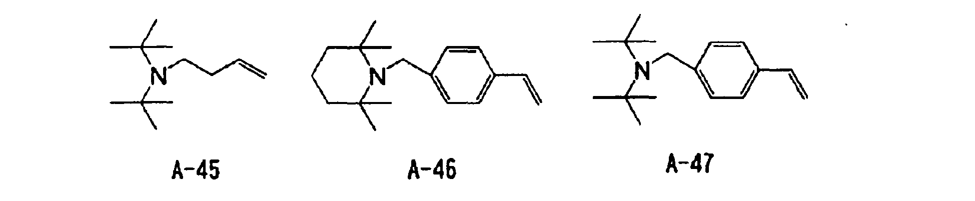

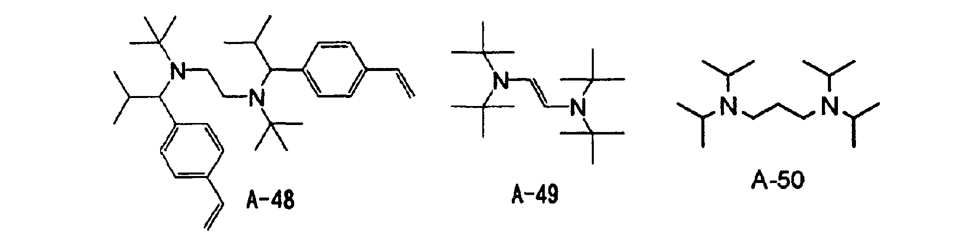

Among the above compounds (or among the compounds represented by Formulae I to VII), fron the viewpoint of inkjet dischargeability and curing speed, the compounds represented by Formula IV, VI or VII are more preferable, the compounds represented by Formula VI or VII are yet more preferable, and compound (A-26) is particularly preferable.

Furthermore, examples of other hindered amine compounds include the compounds listed below.

Examples thereof include bis(1,2,2,6,6-pentamethyl-4-piperidyl) sebacate (commercially available from Ciba Specialty Chemicals as 'TINUVIN 765' or from Sankyo as 'SANOL LS-765'), bis(2,2,6,6-tetramethyl-4-piperidyl) sebacate (commercially available from Ciba Specialty Chemicals as 'TINUVIN 770' or from Sankyo as 'SANOL LS-770'), 2,2,6,6-tetramethyl-4-piperidyl benzoate (commercially available from Sankyo as 'SANOL LS-744'), 1,2,2,6,6-pentamethyl-4-piperidyl methacrylate (commercially available from Adeka Corporation as 'ADEKA STAB LA-82'), 2,2,6,6-tetramethyl-4-piperidyl methacrylate (commercially available from Adeka Corporation as 'ADEKA STAB LA-87'), 1-[2-{3-(3,5-di-*tert*-butyl-4-hydroxyphenyl)propionyloxy}ethyl] -4-[3-(3,5-di-tert-butyl-4-hydroxyphenyl)propionyloxy]-2,2,6,6-tetramethylpiperidine (commercially available from Sankyo as 'SANOL LS-2626'), bis(1,2,2,6,6-pentamethyl-4-piperidyl) 2-*n*-butyl-2-(3,5-di-*tert*-butyl-4-hydroxybenzyl) malonate (commercially available from Ciba Specialty Chemicals as 'TINUVIN 144'), bis(1,2,2,6,6-pentamethyl-4-piperidyl) 4-methoxybenzylidene malonate (commercially available from Clariant as 'SANDUVOR PR-31'),
2",2",6",6"-tetramethylcyclododecanespiro-2'-oxazolidine-5'-spiro-4"-piperazin-4'-one (also called 1-oxa-3,8-diaza-2-undecamethyleno-4-oxo-7,7,9,9-tetramethylspiro[4.5]decane; commercially available from Hoechst as 'HOSTAVIN N 20'), 8-acetyl-3-dodecyl-7,7,9,9-tetramethyl-1,3,8-triazaspiro[4.5]decane-2,4-dione (commercially available from Sankyo as 'SANOL LS-440'),
tetrakis(1,2,2,6,6-pentamethyl-4-piperidyl) 1,2,3,4-butanetetracarboxylate (commercially available from Adeka Corporation as 'ADEKA STAB LA-52'), tetrakis(2,2,6,6-tetramethyl-4-piperidyl) 1,2,3,4-butanetetracarboxylate (commercially available from Adeka Corporation as 'ADEKA STAB LA-57'), a mixed ester of 1,2,3,4-butanetetracarboxylic acid with 1,2,2,6,6-pentamethyl-4-piperidinol and 1-tridecanol (commercially available from Adeka Corporation as 'ADEKA STAB LA-62'), a mixed ester of 1,2,3,4-butanetetracarboxylic acid with 2,2,6,6-tetramethyl-4-piperidinol and 1-tridecanol (commercially available from Adeka Corporation as 'ADEKA STAB LA-67'), a mixed ester of 1,2,3,4-butanetetracarboxylic acid with 1,2,2,6,6-pentamethyl-4-piperidinol and 3,9-bis(2-hydroxy-1,1-dimethylethyl)-2,4,8,10-tetraoxaspiro[5.5]undecane (commercially available from Adeka Corporation as 'ADEKA STAB LA-63'), a mixed ester of 1,2,3,4-butanetetracarboxylic acid with 2,2,6,6-tetramethyl-4-piperidinol and 3,9-bis(2-hydroxy-1,1-dimethylethyl)-2,4,8,10-tetraoxaspiro[5.5]undecane (commercially available from Adeka Corporation as 'ADEKA STAB LA-68'),
a polycondensate of dimethyl succinate and 1-(2-hydroxyethyl)-4-hydroxy-2,2,6,6-tetramethylpiperidine (also called 4-hydroxy-2,2,6,6-tetramethyl-1-piperidinoethanol/succinic acid copolymer; commercially available from Ciba Specialty Chemicals as TINUVIN 622'), a polycondensate of *N,N*'-bis(2,2,6,6-tetramethyl-4-piperidyl)hexamethylenediamine and 1,2-dibromoethane (also called poly[*N*,*N*'-di(2,2,6,6-tetramethyl-4-piperidyl) hexamethylenediamino-*N'*-ethylene]; commercially available from Montefluos as 'SPINUVEX A-36'), poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}] (commercially available from Ciba Specialty Chemicals as 'CHIMASSORB 944'), and poly[(6-morpholino-1,3,5-triazine-2,4-diyl){(2,2,6,6-tetramethyl-4-piperidyl)imino}hexamethylene{(2,2,6,6-tetramethyl-4-piperidyl)imino}] (commercially available from American Cyanamid as 'CYASORB UV 3346').

Only one type of amie compound may be added, or two or more types thereof may be used in combination.

The content of an amine compound (preferably a hindered amine compound having the specific structure) is preferably 0.1 to 10 wt % relative to the total amount of the ink composition, more preferably 0.3 to 8 wt %, and yet more preferably 0.5 to 6 wt %. When the content is in the above-described range, the ink composition with is excellent in fast curability, storage stability and discharge stability can be obtained.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (JP-W denotes Japanese translation of a PCT international application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in European Patent Nos. 223,739, 309,401, 309,402, 310,551, 310,552, and 459,416, German Patent No. 3,435,443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is generally on the order of 0.1 to 8 wt % on the basis of the solids content in the ink composition.

### Antifading agent

The ink composition of the present invention may employ various organic and metal complex antifading agents.

The organic antifading agents include hydroquinones, alkoxyphenols, dialkoxyphenols, phenols, anilines, amines, indanes, chromans, alkoxyanilines, and heterocycles.

The metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is generally on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 5 wt % or less relative to the total amount of the ink composition, and more preferably 3 wt % or less.

### High molecular weight compound

The ink composition may contain various types of high molecular weight compounds in order to adjust film physical properties.

Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins.

They may be used in a combination of two or more types. Among these, a vinylic copolymer obtained by copolymerization of an acrylic monomer is preferable.

Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

### Surfactant

A surfactant may be added to the ink composition of the present invention.

As a surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene / polyoxypropylene block copolymers, and cationic surfactants such as alkylamine salts and quaternary ammonium salts. Instead of the surfactant, an organofluoro compound may be used. The organofluoro compound is preferably hydrophobic. Examples of the organofluoro compound include fluorine-based surfactants, oil-like fluorine-based compounds (e.g. a fluorine oil), and solid fluorine compounds resin (e.g. tetrafluoroethylene resin), and those described in JP-B-57-9053 (8th to 17th columns) and JP-A-62-135826.

A sufactant is preferably a polyether-modified polysiloxane compounds.

Examples of the polyether-modified polysiloxane compounds include SILWET L-7604, SILWET L-7607N, SILWET FZ-2104, and SILWET FZ-2161 (manufactured by Nippon Unicar Co., Ltd.), BYK-306, BYK-307, BYK-331, BYK-333, BYK-347, and BYK-348 (manufactured by BYK Chemie), and KF-351A, KF-352A, KF-353, KF-354L, KF-355A, KF-615A, KF-945, KF-640, KF-642, KF-643, KF-6020, X-22-6191, X-22-4515, KF-6011, KF-6012, KF-6015, and KF-6017 (manufactured by Shin-Etsu Chemical Co., Ltd.).

The content of the surfactant in the ink composition of the present invention is appropriately selected so as to adjust the surface tension suitable for jetting of an inkjet head, and is preferably 0 to 6 wt %, more preferably 0 to 4 wt %, and yet more preferably 0 to 2 wt %.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Sensitizer

The ink composition of the present invention may contain a sensitizer as necessary for the purpose of improving the acid generating efficiency of the photo-acid generator and and increasing the photosensitive wavelength.

Any sensitizer may be used as long as the photo-acid generator is sensitized by virtue of an electron transfer mechanism or an energy transfer mechanism.

Preferred examples thereof include aromatic polycondensed compounds such as anthracene, 9,10-dialkoxyanthracene, pyrene, and perylene, aromatic ketone compounds such as acetophenone, benzophenone, thioxanthone, and Michler's ketone, and heterocyclic compounds such as phenothiazine and N-aryloxazolidinone.

The amount thereof added is appropriately selected according to the intended application, and it is generally used at 0.01 to 1 mol % relative to the photo-acid generator, and preferably 0.1 to 0.5 mol %.

Preferred examples of the sensitizing dye include compounds represented by Formulae (IX) to (XIII) below.

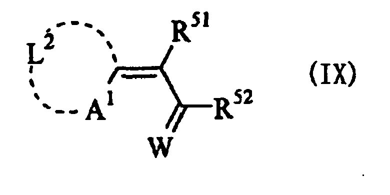

In Formula (IX), A¹ denotes a sulfur atom or NR⁵⁰, R⁵⁰ denotes an alkyl group or an aryl group, L² denotes a non-metallic atomic group forming a basic center of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic center of a dye. W denotes an oxygen atom or a sulfur atom.

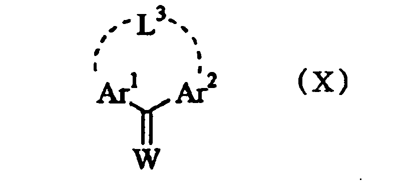

In Formula (X), Ar¹ and Ar² independently denote an aryl group and are connected to each other via a bond of -L³-. Here, L³ denotes -O- or -S-. W has the same meaning as that shown in Formula (IX).

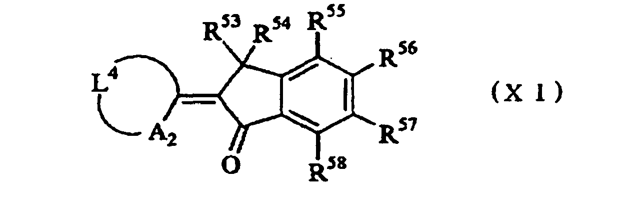

In Formula (XI), A₂ denotes a sulfur atom or NR⁵⁹, L⁴ denotes a non-metallic atomic group forming a basic center of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

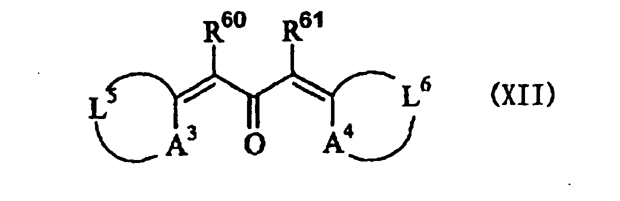

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic center of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

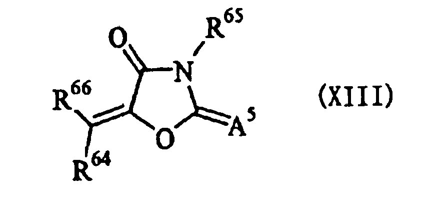

In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Preferable specific examples of the compounds represented by Formulae (IX) to (XIII) include (E-1) to (E-20) listed below.

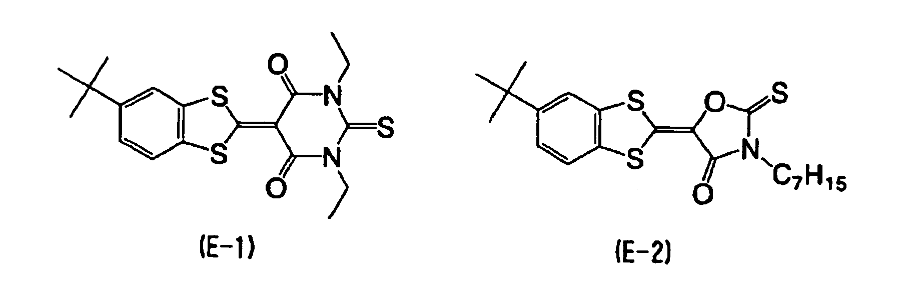

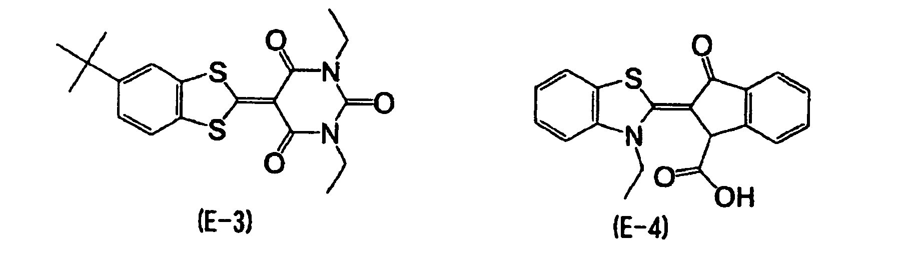

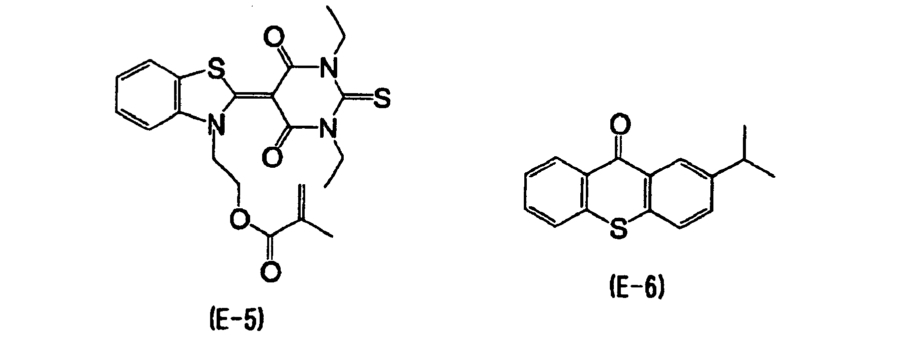

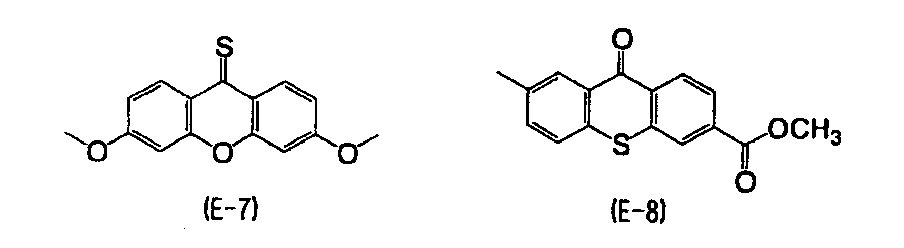

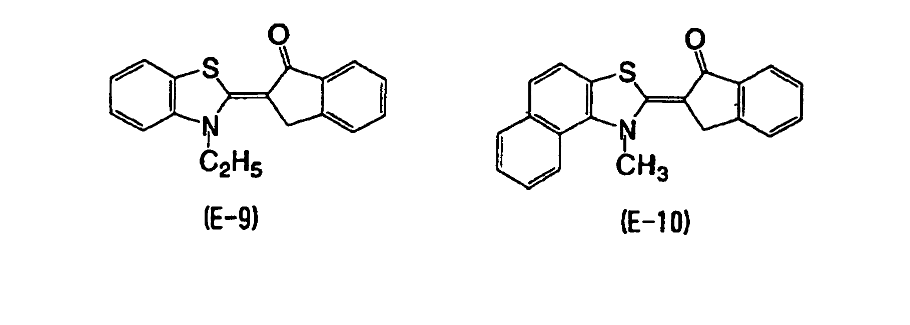

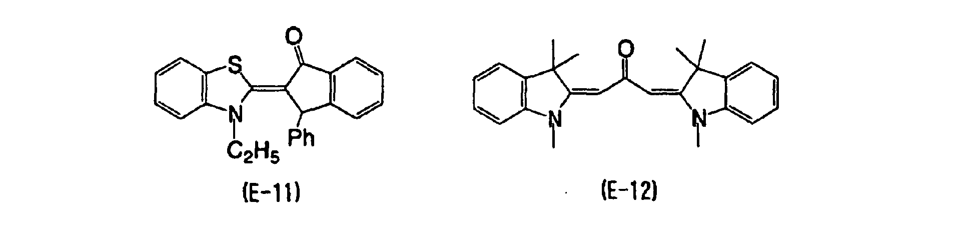

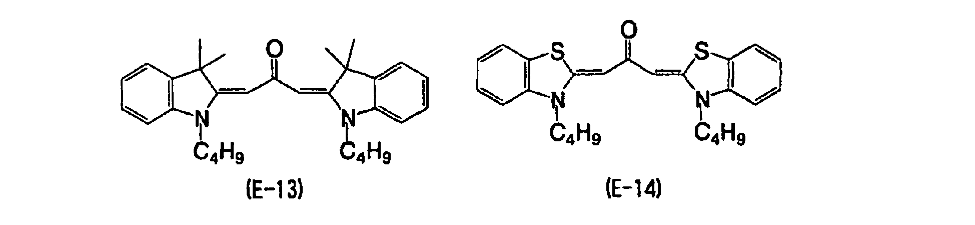

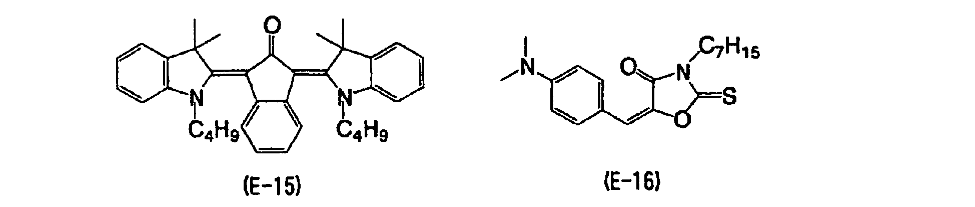

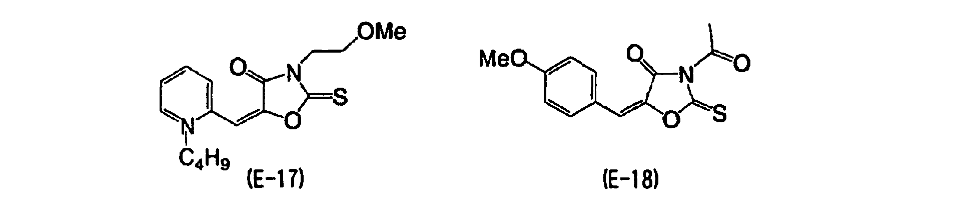

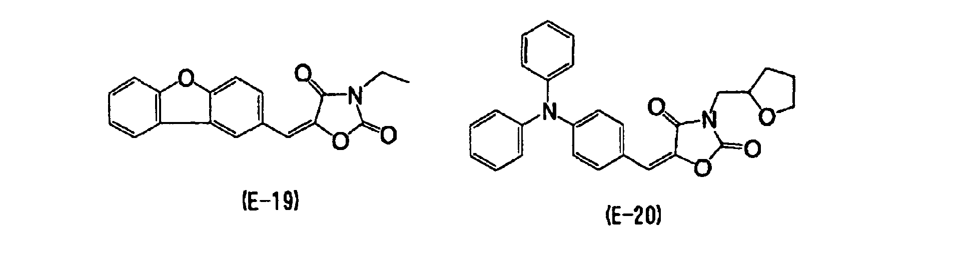

The content of the sensitizer in the ink composition of the present invention is appropriately selected according to the intended purpose, but it is generally preferably 0.05 to 4 wt % relative to the weight of the entire ink composition

### Properties of ink composition

In the present invention, the ink composition has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (e.g. preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink composition droplets have landed can be suppressed, and as a result there is the advantage that the image quality is improved.

The surface tension of the ink composition of the present invention at 25°C is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (2) Inkjet recording method, inkjet recording device, and printed material

The inkjet recording method of the present invention is a method in which the ink composition of the present invention is discharged onto a recording medium (support, recording material, etc.) for inkjet recording, and the ink composition discharged onto the recording medium is irradiated with actinic radiation so as to cure the ink composition and form an image.

More specifically, the inkjet recording method of the present invention comprises (a¹) a step of discharging the ink composition of the present invention onto a recording medium, and (b¹) a step of curing the ink composition by irradiating the discharged ink composition with actinic radiation.

Since the inkjet recording method of the present invention comprises the steps above, an image is formed by the ink composition cured on a recording medium.

Furthermore, the printed material of the present invention is a printed material that has been recorded by the inkjet recording method of the present invention.

The inkjet recording method of the present invention may employ an inkjet recording device that is described in detail below.

### Inkjet recording device

An inkjet recording device that can be used in the inkjet recording method of the present invention is not particularly limited, and a known inkjet recording device that can achieve a target resolution may be freely selected and used. That is, any known inkjet recording device, including a commercial device, may be used for carrying out ink composition discharge onto a recording medium in step (a¹) of the inkjet recording method of the present invention.

Examples of an inkjet recording device that can be used in the present invention include a device equipped with an ink supply system, a temperature sensor, and an actinic radiation source.

The ink supply system comprises, for example, a main tank containing the ink composition of the present invention, a supply pipe, an ink supply tank immediately before an inkjet head, a filter, and a piezo type inkjet head. The piezo type inkjet head may be driven so as to discharge multisize dots of preferably 1 to 100 pL, and more preferably 8 to 30 pL, at a resolution of preferably 320 x 320 to 4,000 x 4,000 dpi, more preferably 400 x 400 to 1,600 x 1,600 dpi, and yet more preferably 720 x 720 dpi. Here, dpi referred to in the present invention means the number of dots per 2.54 cm.

As described above, since for a radiation-curing ink, such as the ink composition of the present invention, the temperature of the discharged ink is desirably constant, the inkjet recording device is preferably equipped with means for stabilizing the temperature of the ink composition. The section for which the temperature is made constant includes the whole of a piping system and all of the members from an ink tank (middle tank where it is present) to a nozzle injection face. That is, a section from an ink supply tank to an inkjet head portion can be thermally insulated and heated.

A method of controlling temperature is not particularly limited, but it is preferable to provide, for example, temperature sensors at a plurality of piping locations, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition is discharged using the above-mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use an ink composition having an ink viscosity at 25°C of no greater than 50 mP·s as the ink composition of the present invention since discharging can be carried out well. By employing this method, high discharge stability can be realized.

An actinic radiation curing type inkjet recording ink composition such as the ink composition of the present invention generally has a viscosity that is higher than that of a water-based ink composition usually used for an inkjet recording ink composition, and variation in viscosity due to changes in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of the ink composition is preferably ±5°C of a set temperature, more preferably ±2°C of the set temperature, and yet more preferably ±1°C of the set temperature.

The step (b') of curing the ink composition by irradiating the discharged ink composition with radiation is now explained.

The ink composition discharged onto a recording medium cures upon exposure to radiation. This is because a cationic polymerization initiator contained in the ink composition of the present invention decomposes upon exposure to radiation and generates a cation, and the cation causes and promotes a polymerization reaction of a cationically polymerizable compound. In this process, if a sensitizer is present together with the cationic polymerization initiator in the ink composition, the sensitizer in the system absorbs radiation, attains an excited state, and by contacting the cationic polymerization initiator promotes decomposition of the cationic polymerization initiator, thus achieving a curing reaction with higher sensitivity.

The actinic radiation used here is α rays, γ rays, an electron beam, X-rays, ultraviolet rays, visible light, infrared light, etc. The peak wavelength of actinic radiation depends on the absorption characteristics of the sensitizer and, for example, is preferably 200 to 600 nm, more preferably 300 to 450 nm, and yet more preferably 350 to 420 nm.

Moreover, the ink composition of the present invention has sufficient sensitivity even for low output actinic radiation. It is therefore desirable to cure it with an exposure area illumination intensity of preferably 10 to 4,000 mW/cm², and more preferably 20 to 2,500 mW/cm².

As an actinic radiation source, a mercury lamp, a gas/solid laser, etc. are mainly used, and as a light source used for curing of a UV-curable inkjet recording ink composition, a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, other violet LEDs are available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention is desirably exposed to such actinic radiation preferably for 0.01 to 120 sec, and more preferably 0.1 to 90 sec.

Irradiation conditions for the actinic radiation and basic irradiation methods are disclosed in JP-A-60-132767. Specifically, light sources are provided on opposite sides of a head unit comprising an ink composition discharge system, and the head unit and the light sources are made to scan by a so-called shuttle system. Irradiation with actinic radiation is carried out after a fixed period of time (preferably 0.01 to 0.5 sec, more preferably 0.01 to 0.3 sec, and particularly preferably 0.01 to 0.15 sec) has elapsed after the ink composition has landed. By controlling the time from after the ink composition has landed until before the irradiation so that it is a very short time, it is possible to prevent the ink composition that has landed on a recording medium from spreading before being cured. Furthermore, when a porous recording medium is used, since exposure can be carried out before the ink composition penetrates to a deep part where the light source cannot reach, it is possible to suppress residual unreacted monomer, which is preferable.

Moreover, curing may be completed by another light source that is not driven. International patent application WO 99/54415 discloses as an irradiation method a method employing optical fiber or a method in which a collimated light source is shone on a mirror surface provided on a side face of a head unit and a recording area is irradiated with UV rays, and such a curing method can also be applied to the inkjet recording method of the present invention.

By employing the above-mentioned inkjet recording method, it is possible to keep the diameter of landed ink composition dots constant even for various recording media having different surface wettabilities, thus improving the image quality.

The ink composition of the present invention may employ a plurality of colors of ink compositions in combination as an ink set. For example, a cyan ink composition, a magenta ink composition, and a yellow ink composition may be used.

Furthermore, they may be used as an ink set together with black and white ink compositions, or together with light magenta, light cyan, etc. ink compositions. In order to obtain a color image, it is preferable to superimpose in order from low lightness colors. By superimposing in order from low lightness inks, it becomes easy for radiation to reach ink in a lower part, and good curing sensitivity, reduction of residual monomer, and improvement in adhesion can be expected. Although it is possible to carry out irradiation all at once after all colors are discharged, it is preferable in terms of promoting curing that exposure to light is carried out for each color.

In this way, the ink composition of the present invention cures with high sensitivity upon exposure to actinic radiation, thereby forming an image on the surface of a recording medium.

The inkjet recording method of the present invention may suitably employ an ink set comprising the ink composition of the present invention. The order in which colored ink compositions are discharged is not particularly limited, but it is preferable for them to be to applied onto a recording medium from a colored ink composition having a low lightness; when yellow, cyan, magenta, and black are used, they are preferably applied on top of the recording medium in the order yellow → cyan → magenta → black. Furthermore, the present invention is not limited thereto, and an ink set comprising a total of seven colors, that is, light cyan and light magenta ink compositions and cyan, magenta, black, white, and yellow dark ink compositions may be used, and in this case they are applied on top of the recording medium in the order white → light cyan → light magenta → yellow → cyan → magenta → black.

In the present invention, a recording medium is not particularly limited, and a recording medium known as a support or a recording material may be used.

Examples thereof include paper, paper laminated with a plastic (e.g. polyethylene, polypropylene, polystyrene, etc.), a metal sheet (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, etc.), and paper or plastic film on which the above-mentioned metal is laminated or vapor-deposited. Furthermore, as a recording medium in the present invention, a non-absorbing recording medium may suitably be used.

### EXAMPLES

The present invention is explained in further detail by reference to Examples and Comparative Examples. However, the present invention should not be construed as being limited to these Examples.

'Parts' described below means 'parts by weight' unless otherwise specified.

The materials used in the Examples and Comparative Examples are as shown below.
NOVOPERM YELLOW H2G (yellow pigment, Clariant)
NOVOPERM YELLOW 4G01 (yellow pigment, Clariant)
NOVOPERM YELLOW P-HG (yellow pigment, Clariant)
CINQUASIA MAGENTA RT-335 D (magenta pigment, Ciba Specialty Chemicals)
IRGALITE BLUE GLVO (cyan pigment, Ciba Specialty Chemicals)
SPECIAL BLACK 250 (black pigment, C.I. Pigment Black 7, Ciba Specialty Chemicals) DISPERBYK-168 (pigment dispersant, BYK Chemie)
DISPERBYK-2001 (pigment dispersant, BYK Chemie)
AJISPER PB822 (pigment dispersant, Ajinomoto Fine-Techno Co., Ltd.) SOLSPERSE 5000 (pigment dispersant, Lubrizol)
SOLSPERSE 22000 (pigment dispersant, Lubrizol)
SOLSPERSE 32000 (pigment dispersant, Lubrizol)
RAPI-CURE DVE-3 (triethylene glycol divinyl ether, ISP)
CELLOXIDE 2021 P ((3',4'-epoxycyclohexane)methyl 3,4-epoxycyclohexanecarboxylate, DAICEL-CYTEC Company Ltd.)
CELLOXIDE 2000 (1,2-epoxy-4-vinylcyclohexane, DAICEL-CYTEC Company Ltd.)
CELLOXIDE 3000 (1,2:8,9-diepoxylimonene, DAICEL-CYTEC Company Ltd.)
ARON OXETANE OXT-221 (bis(3-ethyl-3-oxetanylmethyl) ether, Toagosei Co., Ltd.) ARON OXETANE OXT-101 (3-ethyl-3-hydroxymethyloxetane, Toagosei Co., Ltd.) 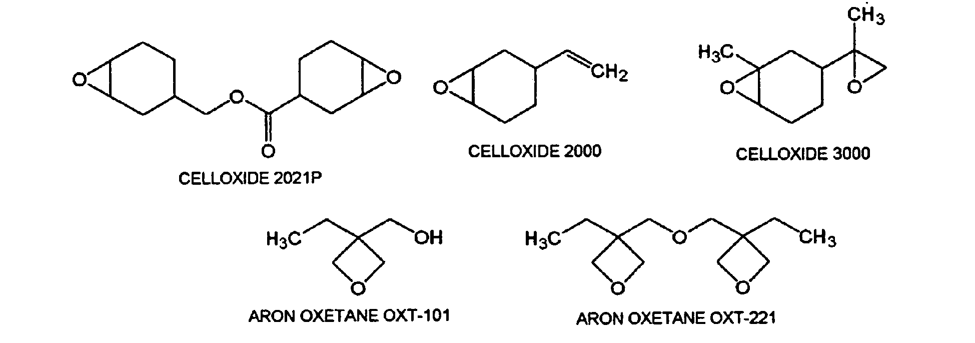 UVI-6992 (sulfonium salt photo-acid generator (triarylsulfonium hexafluoroantimonate salts in propylene carbonate (mixed)), Dow Chemical)
Tri-*p*-tolylsulfonium hexafluorophosphate (sulfonium salt photo-acid generator, Tokyo Chemical Industry Co., Ltd.)
IRGACURE 250 (iodonium salt photo-acid generator, Ciba Specialty Chemicals) ANTHRACURE UVS-1331 (9,10-dibutoxyanthracene, Kawasaki Kasei Chemicals Ltd.) BYK-307 (silicone-based surfactant, BYK Chemie)
BYK-331 (silicone-based surfactant, BYK Chemie)
KF-351A (silicone-based surfactant, Shin-Etsu Chemical Co., Ltd.)
TINUVIN 770 DF (bis(2,2,6,6-tetramethyl-4-piperidyl) sebacate, hindered amine-based light stabilizer, Ciba Specialty Chemicals)
*N,N*-Dicyclohexylmethylamine (Tokyo Chemical Industry Co., Ltd.)

### Compounds A to C and R (Compounds below)

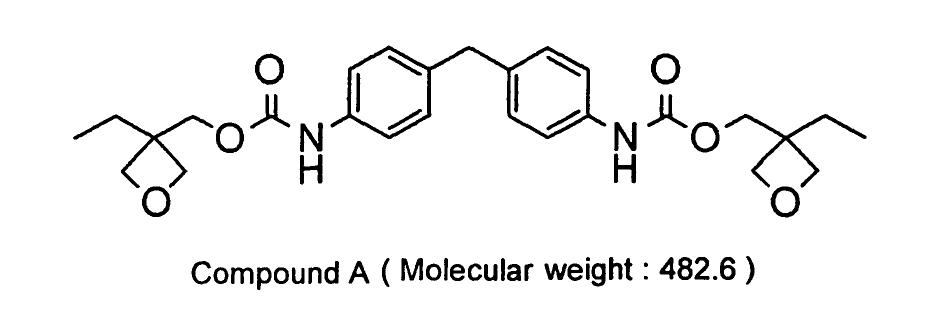

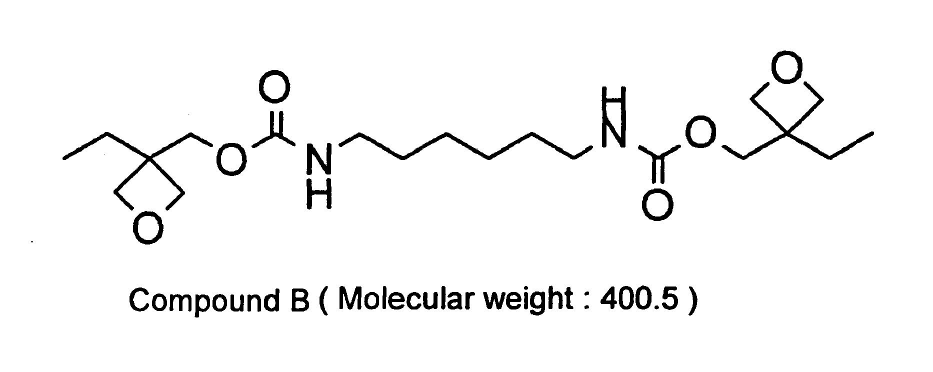

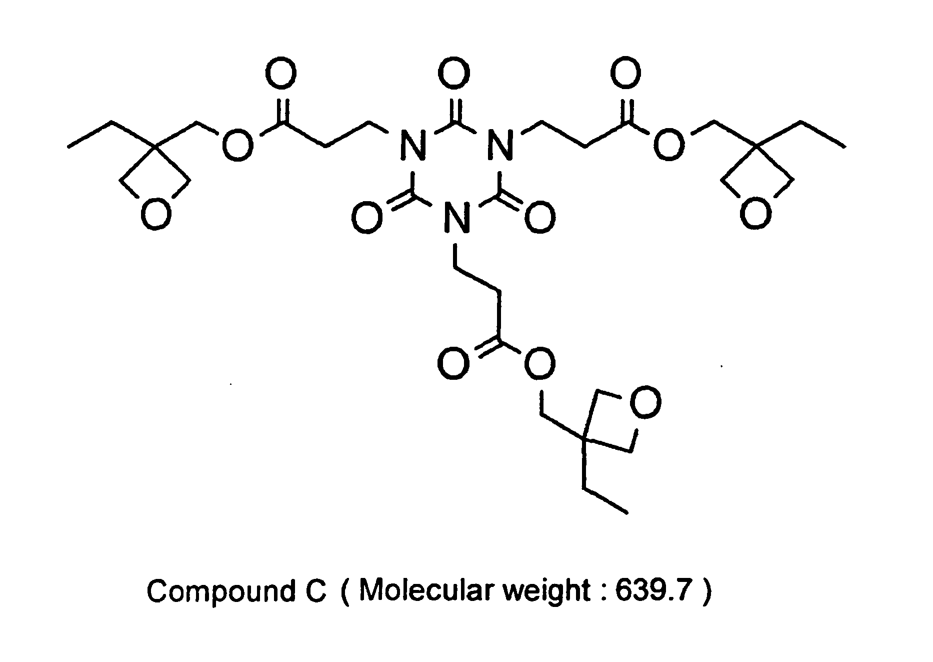

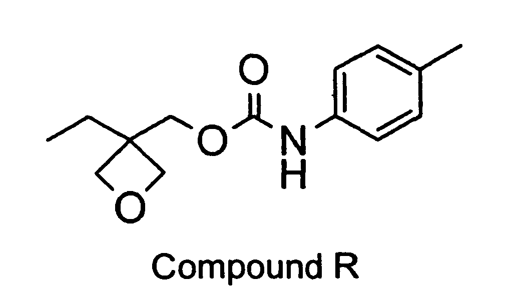

### Synthesis of compound D

In a three-necked round-bottom flask equipped with a Dimroth condenser and a stirrer, 37.7 parts of *m*-xylene diisocyanate (Tokyo Chemical Industry Co., Ltd.) and 0.2 parts of di-*n*-butyltin dilaurate (Tokyo Chemical Industry Co., Ltd.) were dissolved in 445 parts of tetrahydrofuran (Kanto Kagaku). While heating at 50°C, a solution of 100 parts of polypropylene glycol (diol type, average molecular weight 1,000, Wako Pure Chemical Industries, Ltd.) in 89 parts of tetrahydrofuran (Kanto Kagaku) was added dropwise to the above solution over 1 hour. After the dropwise addition was completed, stirring was carried out for a further 2 hours while heating and refluxing; 24.0 parts of 3-ethyl-3-hydroxymethyloxetane (ARON OXETANE OXT-101, Toagosei Co., Ltd.) was then added, and heating and refluxing were carried out for a further 30 minutes. This solution was poured into 5,000 parts of water while stirring, thus precipitating a white solid. The solid was filtered, washed with water, and then dried under vacuum, thus giving compound D having the structure below (molecular weight about 1,600).

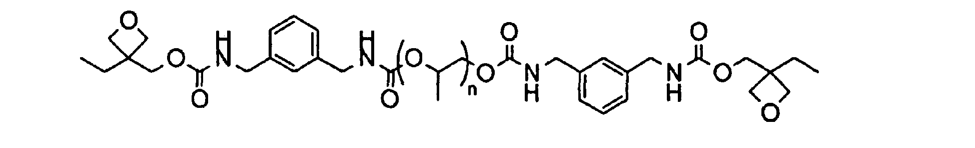

### Synthesis of compound E

In a round-bottom flask equipped with a stirrer, 53.0 parts of polycaprolactone diol having a molecular weight of 530 (PLACCEL 205U, Daicel Chemical Industries, Ltd.) was dissolved in 469 parts of *N,N*-dimethylacetamide (Kanto Kagaku). 8.5 parts of hexamethylene diisocyanate (Tokyo Chemical Industry Co., Ltd.), 12.6 parts of 4,4'-diphenylmethane diisocyanate (Tokyo Chemical Industry Co., Ltd.), and 0.2 parts of di*n*-butyltin dilaurate (Tokyo Chemical Industry Co., Ltd.) were added thereto, and heating and stirring were carried out at 100°C for 1 hour; 10.0 g of 3-ethyl-3-hydroxymethyloxetane (ARON OXETANE OXT-101, Toagosei Co., Ltd.) was then added thereto, and heating and stirring were carried out at 50°C for a further 30 minutes. Subsequently, 234 parts of *N,N*-dimethylacetamide was further added for dilution, and this solution was poured into 5,000 parts of water while stirring, thus precipitating a white polymer. This polymer was filtered, washed with water, and then dried under vacuum, thus giving a polyurethane polymer having oxetanyl groups at two termini. The weight-average molecular weight of this polymer measured by a gel permeation chromatography method was 9,000 on a polystyrene basis.

### Synthesis of compounds F, G, H, and I

Compounds F, G, H, and I were synthesized in the same manner as for compound E except that the stirring time before adding the 3-ethyl-3-hydroxymethyloxetane in the synthesis of compound E was changed to 2 hours, 4 hours, 6 hours, and 8 hours respectively. The weight-average molecular weights were 18,000, 27,000, 41,000, and 52,000 respectively.

### Preparation of pigment dispersion (mill base)

### Preparation of yellow mill base YM1

The components below were stirred using a mixer (L4R, Silverson) at 3,000 revolutions/min for 10 minutes. Subsequently, the mixture was placed in a DISPERMAT SL bead mill disperser (VMA-GETZMANN GmbH), and dispersion was carried out using zirconia beads having a diameter of 0.65 mm (YTZ ball, Nikkato Corporation) at a bead packing ratio of 80 vol % at 2,500 revolutions/min for 6 hours, thus giving yellow mill base YM1.

| | |
|---|---|
| NOVOPERM YELLOW H2G | 30.0 parts |
| RAPI-CURE DVE-3 | 28.0 parts |
| DISPERBYK-168 | 42.0 parts |

### Example 1

The components below were stirred using a mixer (L4R, Silverson) at 2,500 revolutions/min for 15 minutes, thus giving a yellow ink composition. The viscosity at 25°C measured using a TVE-22LT (Toki Sangyo Co., Ltd.) was 27.5 mPa·s. The surface tension at 25°C measured using a CBVP-Z fully automatic surface tensiometer (Kyowa Interface Science Co., Ltd.) was 26.6 mN/m.

| | |
|---|---|
| CELLOXIDE 2021 P | 25.0 parts |
| ARON OXETANE OXT-221 | 39.5 parts |
| RAPI-CURE DVE-3 | 8.6 parts |
| Compound A | 4.0 parts |
| UVI-6992 | 9.0 parts |
| ANTHRACURE UVS-1331 | 3.0 parts |
| *N*,*N*-Dicyclohexylmethylamine | 0.8 parts |
| BYK-307 | 0.1 parts |
| Yellow mill base YM1 | 10.0 parts |

### Inkjet dischargeability

An inkjet recording device formed from an ink tank, a supply pipe, a front chamber ink tank immediately before a head, and a KM512L piezo type inkjet head (Konica Minolta Holdings, Inc.) was loaded with yellow radiation-curable ink composition 1, and the temperature of the front chamber tank and head section was controlled at 50°C. While automatically feeding recording medium (100 µm thick polyethylene terephthalate (PET) film) using this inkjet recording device, a solid image was printed continuously for 30 minutes on the recording medium. The printed recording medium was transported to an exposure section, and then irradiated with an energy of 200 mJ/cm² using a super high pressure mercury lamp having an output of 200 W. The device was controlled so that irradiation was carried out about 0.5 seconds after printing.

Inkjet dischargeability was evaluated using the criteria below by examining a printed material after 30 minutes. The results are given in Table 1.
Excellent: printing was normal. Inkjet dischargeability was very good.

Good: there were a few print dropouts. Inkjet dischargeability was good.
Fair: there were some print dropouts. Inkjet dischargeability was rather poor.
Poor: there were many print dropouts. Inkjet dischargeability was poor.

### Curing speed

The tackiness (stickiness) of the surface of a solid image prepared for evaluation of inkjet dischargeability was examined by touch, and curing speed was evaluated using the criteria below. The lower the surface tackiness (stickiness), the quicker the polymerization of monomer, and the higher the curing speed. The results are given in Table 1.
Excellent: there was no surface tackiness. Curing speed was very high.
Good: there was slight surface tackiness. Curing speed was high.
Fair: there was some surface tackiness. Curing speed was rather slow.
Poor: there was considerable surface tackiness. Curing speed was slow.

### Scratch resistance

The ink composition was applied at a wet film thickness of 12 µm on the surface of polyvinyl chloride (thickness 220 µm) as a recording medium using a K hand coater (bar No. 2). Subsequently, it was passed repeatedly through the interior of a CSOT UV conveyor device (GS Yuasa Lighting) equipped with a MAN125L ozoneless metal halide lamp and set at a conveyor speed of 6 m/min and an exposure intensity of 1,800 W/cm² until the stickiness of the coated surface disappeared, thus carrying out radiation curing. The strength of this cured coating was evaluated using the criteria below in accordance with ISO 15184 (scratch hardness - pencil method). The results are given in Table 1.
Excellent: at least 4H, scratch resistance was very good.
Good: at least F but no greater than 3H, scratch resistance was good.
Fair: at least 3B but no greater than HB, scratch resistance was slightly poor.
Poor: no greater than 4B, scratch resistance was poor.

### Flexibility

The ink composition was applied at a wet film thickness of 12 µm on the surface of polyvinyl chloride (thickness 220 µm) as a recording medium using a K hand coater (bar No. 2). Subsequently, it was passed repeatedly through the interior of a CSOT UV conveyor device (GS Yuasa Lighting) equipped with a MAN125L ozoneless metal halide lamp and set at a conveyor speed of 6 m/min and an exposure intensity of 1,800 W/cm² until the stickiness of the coated surface disappeared, thus carrying out radiation curing. The flexibility was evaluated using the criteria below with respect to the degree of cracking caused in the cured coating after bending the same place of the coating back and forth 5 times. The results are given in Table 1.
Excellent: no cracking occurred at all. Flexibility was very high.
Good: only slight cracking occurred. Flexibility was high.
Fair: rather large cracks occurred. Flexibility was somehow low.
Poor: completely cracked. Flexibility was low.

### Examples 2 to 5 and Comparative Example 1

Ink compositions 2 to 5 and comparative ink composition C1 were prepared and evaluated in the same manner as for ink composition 1 except that the amount of compound A and the amount of ARON OXETANE OXT-221 in ink composition 1 were changed as described in Table 1. The results are given in Table 1.

### Comparative Example 2

Ink composition C2 was prepared and evaluated in the same manner as for ink composition 2 except that compound A of ink composition 2 was changed to compound R (a monofunctional oxetane compound having an -NHCO- bond). The results are given in Table 1.

**(Table 1)**

| | Example | | | | | Comp. Ex. | |
|---|---|---|---|---|---|---|---|
| | 1 | 2 | 3 | 4 | 5 | 1 | 2 |
| Ink composition | 1 | 2 | 3 | 4 | 5 | C1 | C2 |
| Compound A | 4.0 parts | 9.0 parts | 14.0 parts | 19.0 parts | 24.0 parts | 0 parts | 0 parts |
| Compound R | 0 parts | 0 parts | 0 parts | 0 parts | 0 parts | 0 parts | 9.0 parts |
| ARON OXETANE OXT-221 | 39. 5 parts | 34. 5 parts | 29. 5 parts | 24. 5 parts | 19. 5 parts | 43. 5 parts | 34. 5 parts |
| Inkjet dischargeability | Excellent | Excellent | Good | Fair | Fair | Excellent | Excellent |
| Curing speed | Fair | Good | Good | Good | Good | Poor | Poor |
| Scratch resistance | Fair | Good | Good | Good | Good | Poor | Fair |
| Flexibility | Fair | Good | Good | Good | Fair | Poor | Fair |

### Examples 6 to 13

Ink compositions 6 to 13 were prepared and evaluated in the same manner as for ink composition 2 of Example 2 except that compound A of ink composition 2 was changed to a compound shown in Table 2. The results are given in Table 2.

**(Table 2)**

| | Example | | | | | | | |
|---|---|---|---|---|---|---|---|---|
| | 6 | 7 | 8 | 9 | 10 | 11 | 12 | 13 |
| Ink composition | 6 | 7 | 8 | 9 | 10 | 11 | 12 | 13 |
| Compound used | B | C | D | E | F | G | H | I |
| Inkjet dischargeability | Excellent | Excellent | Excellent | Excellent | Excellent | Good | Fair | Fair |
| Curing speed | Good | Good | Good | Excellent | Excellent | Excellent | Excellent | Excellent |
| Scratch resistance | Good | Excellent | Excellent | Excellent | Excellent | Excellent | Good | Good |
| Flexibility | Good | Good | Excellent | Excellent | Excellent | Good | Good | Fair |

### Preparation of pigment dispersion (mill base)

Mill bases having the formulations below were prepared in the same manner as for yellow mill base YM1.

| Yellow mill base YM2 | |
|---|---|
| NOVOPERM YELLOW 4G01 | 30.0 parts |
| SOLSPERSE 22000 | 0.5 parts |
| DISPERBYK-168 | 30.5 parts |
| ARON OXETANE OXT-101 | 39.0 parts |

| Yellow mill base YM3 | |
|---|---|
| NOVOPERM YELLOW P-HG | 30.0 parts |
| DISPERBYK-168 | 32.0 parts |
| CELLOXIDE 3000 | 37.0 parts |

| Cyan mill base CM1 | |
|---|---|
| IRGALITE BLUE GLVO | 30.0 parts |
| SOLSPERSE 5000 | 1.0 part |
| SOLSPERSE 32000 | 13.0 parts |
| CELLOXIDE 2021 P | 56.0 parts |

| Magenta mill base MM1 | |
|---|---|
| CINQUASIA MAGENTA RT-335 D | 30.0 parts |
| SOLSPERSE 32000 | 14.0 parts |
| ARON OXETANE OXT-221 | 56.0 parts |

| Black mill base BM1 | |
|---|---|
| SPECIAL BLACK 250 | 40.0 parts |
| SOLSPERSE 32000 | 15.0 parts |
| CELLOXIDE 3000 | 45.0 parts |

### Example 14

An ink composition having the formulation below was prepared and evaluated in the same manner as in Example 1. The results are given in Table 3.

| | |
|---|---|
| CELLOXIDE 3000 | 40.1 parts |
| ARON OXETANE OXT-221 | 20.0 parts |
| Compound D | 10.0 parts |
| RAPI-CURE DVE-3 | 5.0 parts |
| UVI-6992 | 10.0 parts |
| ANTHRACURE UVS-133 | 1.8 parts |
| BYK-331 | 0.1 parts |
| Yellow mill base YM2 | 13.0 parts |

### Example 15

An ink composition having the formulation below was prepared and evaluated in the same manner as in Example 1. The results are given in Table 3.

| | |
|---|---|
| CELLOXIDE 2000 | 20.0 parts |
| ARON OXETANE OXT-101 | 38.0 parts |
| ARON OXETANE OXT-221 | 15.5 parts |
| Tri-*p*-tolylsulfonium hexafluorophosphate | 8.0 parts |
| Compound E | 7.0 parts |
| ANTHRACURE UVS-1331 | 2.0 parts |
| KF-351A | 0.5 parts |
| Yellow mill base YM3 | 9.0 parts |

### Example 16

An ink composition having the formulation below was prepared and evaluated in the same manner as in Example 1. The results are given in Table 3.

| | |
|---|---|
| ARON OXETANE OXT-221 | 24.4 parts |
| ARON OXETANE OXT-101 | 23.0 parts |
| RAPI-CURE DVE-3 | 10.3 parts |
| Compound C | 6.0 parts |
| Compound R | 6.0 parts |
| UVI-6992 | 7.0 parts |
| IRGACURE 250 | 2.0 parts |
| ANTHRACURE UVS-1331 | 3.2 parts |
| BYK-307 | 0.1 parts |
| *N*,*N*-Dicyclohexylmethylamine | 5.0 parts |
| Magenta mill base MM1 | 13.0 parts |

### Example 17

An ink composition having the formulation below was prepared and evaluated in the same manner as in Example 1. The results are given in Table 3.

| | |
|---|---|
| CELLOXIDE 2000 | 20.0 parts |
| CELLOXIDE 3000 | 19.0 parts |
| ARON OXETANE OXT-101 | 15.0 parts |
| RAPI-CURE DVE-3 | 19.7 parts |
| Compound F | 9.0 parts |
| IRGACURE 250 | 7.0 parts |
| ANTHRACURE UVS-1331 | 2.2 parts |
| BYK-307 | 0.1 parts |
| TINUVIN 770 DF | 2.0 parts |
| Cyan mill base CM1 | 6.0 parts |

### Example 18

An ink composition having the formulation below was prepared and evaluated in the same manner as in Example 1. The results are given in Table 3.

| | |
|---|---|
| CELLOXIDE 3000 | 25.9 parts |
| ARON OXETANE OXT-101 | 21.2 parts |
| ARON OXETANE OXT-221 | 16.2 parts |
| Compound G | 16.0 parts |
| UVI-6992 | 10.0 parts |
| ANTHRACURE UVS-1331 | 1.6 parts |
| BYK-307 | 0.1 parts |
| Black mill base BM1 | 9.0 parts |

**(Table 3)**

| | Example | | | | |
|---|---|---|---|---|---|
| | 14 | 15 | 16 | 17 | 18 |
| Inkjet dischargeability | Excellent | Good | Excellent | Excellent | Fair |
| Curing speed | Good | Excellent | Good | Excellent | Excellent |
| Scratch resistance | Excellent | Excellent | Excellent | Excellent | Excellent |
| Flexibility | Excellent | Excellent | Good | Excellent | Good |

## Claims

1. An ink composition comprising:
(A) a cationically polymerizable compound;
(B) a compound that generates an acid upon exposure to radiation; and
(C) a colorant,
the cationically polymerizable compound (A) comprising a polyfunctional oxetane compound having an -NRCO- bond, wherein R denotes a hydrogen atom or a monovalent organic group, and
wherein at least one of the groups, other than the carboxyl group, which are bonded to the nitrogen atom of the -NRCO- bond, is not a hydrogen atom.

2. The ink composition according to Claim 1, wherein the polyfunctional oxetane compound having an -NRCO- bond has a content of 2 to 30 wt % relative to the total weight of the ink composition.

3. The ink composition according to Claim 2, wherein the polyfunctional oxetane compound having an -NRCO- bond has a content of 5 to 15 wt % relative to the total weight of the ink composition.

4. The ink composition according to any one of Claims 1 to 3, wherein the polyfunctional oxetane compound having an -NRCO- bond has a molecular weight of 400 to 100,000.

5. The ink composition according to any one of Claims 1 to 4, wherein the polyfunctional oxetane compound having an -NRCO- bond is a compound represented by Formula (L), 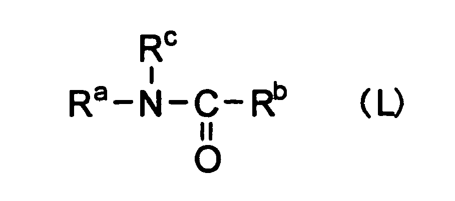 wherein R^{a}, R^{b}, and R^{c} independently denote a hydrogen atom or a monovalent organic group formed from elements selected from the group consisting of carbon, hydrogen, nitrogen, oxygen, and sulfur (not all of R^{a}, R^{b}, and R^{c} being hydrogen atoms), any one or two or more of R^{a}, R^{b}, and R^{c} have at least two oxetanyl groups represented by Formula (P) or Formula (Q) as the total for R^{a}, R^{b}, and R^{c}, and at least two selected from the group consisting of R^{a}, R^{b}, and R^{c} may be bonded to form a ring, 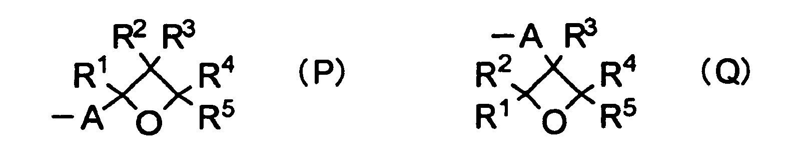 wherein A denotes a single bond or a divalent organic group formed from elements selected from the group consisting of carbon, hydrogen, nitrogen, oxygen, and sulfur, and R¹ to R⁵ independently denote a hydrogen atom or a hydrocarbon group having 1 to 20 carbon atoms.

6. The ink composition according to any one of Claims 1 to 5, wherein the polyfunctional oxetane compound having an -NRCO- bond is a compound having at least one structure represented by Formula (R) or Formula (S) below as the -NRCO-bond, 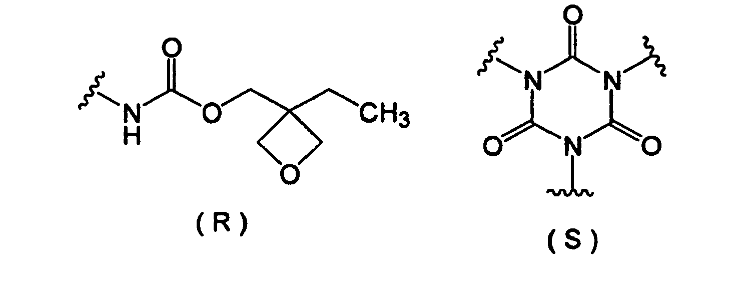 wherein wavy line portions independently denote a bond portion to another portion.

7. The ink composition according to any one of Claims 1 to 6, wherein the ink composition comprises three or more types of cationically polymerizable compounds.

8. The ink composition according to any one of Claims 1 to 7, wherein the ink composition comprises one or more types of polyfunctional oxetane compounds having an -NRCO- bond and two or more types of cationically polymerizable compounds other than a polyfunctional oxetane compound having an -NRCO- bond.

9. The ink composition according to any one of Claims 1 to 8, wherein the ink composition comprises an amine compound.

10. An inkjet recording method comprising:
(a¹) a step of discharging the ink composition according to any one of Claims 1 to 9 onto a recording medium; and
(b¹) a step of curing the ink composition by irradiating the discharged ink composition with actinic radiation.

## Patentansprüche

1. Tintenzusammensetzung, umfassend:
(A) eine kationisch polymerisierbare Verbindung;
(B) eine Verbindung, die bei Einwirkung von Strahlung eine Säure erzeugt; und
(C) ein Färbemittel,
wobei die kationisch polymerisierbare Verbindung (A) eine polyfunktionelle Oxetanverbindung umfasst, die eine -NRCO- Bindung besitzt, wobei R ein Wasserstoffatom oder eine monovalente organische Gruppe darstellt, und
wobei mindestens eine der Gruppen, außer der Carboxylgruppe, die an das Stickstoffatom der -NRCO- Bindung gebunden sind, nicht ein Wasserstoffatom ist.

2. Tintenzusammensetzung gemäß Anspruch 1, wobei die polyfunktionelle Oxetanverbindung, die eine -NRCO- Bindung besitzt, einen Anteil von 2 bis 30 Gew.%, relativ zum Gesamtgewicht der Tintenzusammensetzung, besitzt.

3. Tintenzusammensetzung gemäß Anspruch 2, wobei die polyfunktionelle Oxetanverbindung, die eine -NRCO- Bindung besitzt, einen Anteil von 5 bis 15 Gew.%, relativ zum Gesamtgewicht der Tintenzusammensetzung, besitzt.

4. Tintenzusammensetzung gemäß einem der Ansprüche 1 bis 3, wobei die polyfunktionelle Oxetanverbindung, die eine -NRCO- Bindung besitzt, ein Molekulargewicht von 400 bis 100.000 besitzt.

5. Tintenzusammensetzung gemäß einem der Ansprüche 1 bis 4, wobei die polyfunktionelle Oxetanverbindung, die eine -NRCO- Bindung besitzt, eine Verbindung ist, die dargestellt ist durch die Formel (L), 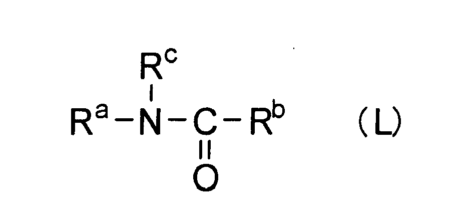 wobei R^{a}, R^{b} und R^{c} unabhängig voneinander ein Wasserstoffatom oder eine monovalente organische Gruppe darstellen, die aus Elementen gebildet ist, die ausgewählt sind aus der Gruppe, bestehend aus Kohlenstoff, Wasserstoff, Stickstoff, Sauerstoff und Schwefel (wobei nicht alle der R^{a}, R^{b} und R^{c} Wasserstoffatome sind), wobei irgend eine oder zwei oder mehr der R^{a}, R^{b} und R^{c} mindestens zwei Oxetanylgruppen besitzen, die dargestellt sind durch die Formel (P) oder Formel (Q) als die Gesamtheit für R^{a}, R^{b} und R^{c}, und wobei mindestens zwei, die ausgewählt sind aus der Gruppe, bestehend aus R^{a}, R^{b} und R^{c}, aneinander gebunden sein können, so dass sie einen Ring bilden, 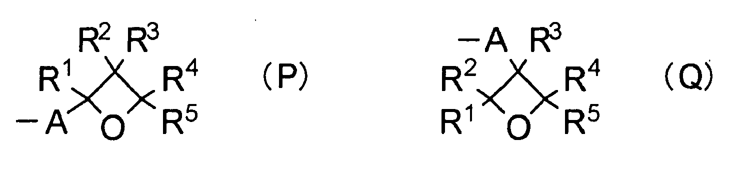 wobei A eine Einfachbindung oder eine divalente organische Gruppe darstellt, die aus Elementen gebildet ist, die ausgewählt sind aus der Gruppe, bestehend aus Kohlenstoff, Wasserstoff, Stickstoff, Sauerstoff und Schwefel, wobei R¹ bis R⁵ unabhängig voneinander ein Wasserstoffatom oder eine Kohlenwasserstoffgruppe, die 1 bis 20 Kohlenstoffatome besitzt, darstellen.

6. Tintenzusammensetzung gemäß einem der Ansprüche 1 bis 5, wobei die polyfunktionelle Oxetanverbindung, die eine -NRCO- Bindung besitzt, eine Verbindung ist, die mindestens eine Struktur als die -NRCO- Bindung besitzt, die dargestellt ist durch die untenstehende Formel (R) oder Formel (S), 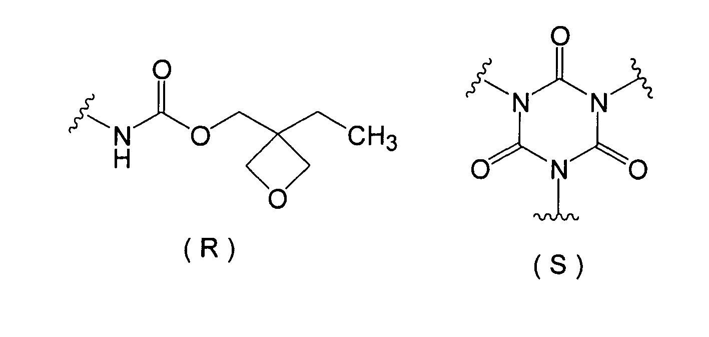 wobei gewellte Linien unabhängig voneinander einen Bindungsanteil zu einem anderen Anteil darstellen.

7. Tintenzusammensetzung gemäß einem der Ansprüche 1 bis 6, wobei die Tintenzusammensetzung drei oder mehr Arten von kationisch polymerisierbaren Verbindungen umfasst.

8. Tintenzusammensetzung gemäß einem der Ansprüche 1 bis 7, wobei die Tintenzusammensetzung einen oder mehrere Arten von polyfunktionellen Oxetanverbindungen, die eine -NRCO- Bindung besitzen, und zwei oder mehr Arten von kationisch polymerisierbaren Verbindungen, außer der polyfunktionellen Oxetanverbindung, die eine -NRCO- Bindung besitzt, umfassen.

9. Tintenzusammensetzung gemäß einem der Ansprüche 1 bis 8, wobei die Tintenzusammensetzung eine Aminverbindung umfasst.

10. Verfahren zum Aufzeichnen von Tintenstrahlen, umfassend:
(a¹) einen Schritt des Ausgebens der Tintenzusammensetzung gemäß einem der Ansprüche 1 bis 9 auf ein Aufzeichnungsmedium; und
(b¹) einen Schritt des Härtens der Tintenzusammensetzung durch Bestrahlen der ausgegebenen Tintenzusammensetzung mit aktinischer Strahlung.

## Revendications

1. Composition d'encre comprenant :
(A) un composé cationiquement polymérisable ;
(B) un composé qui produit un acide par exposition à un rayonnement ; et
(C) un colorant,
le composé cationiquement polymérisable (A) comprenant un composé d'oxétane polyfonctionnel présentant une liaison -NRCO-, dans laquelle R représente un atome d'hydrogène ou un groupe organique monovalent, et dans laquelle au moins un des groupes, différents du groupe carboxyle, qui sont liés à l'atome d'azote de la liaison -NRCO-, n'est pas un atome d'hydrogène.

2. Composition d'encre selon la revendication 1, dans laquelle le composé d'oxétane polyfonctionnel présentant une liaison -NRCO-présente une teneur de 2 à 30 % en masse par rapport à la masse totale de la composition d'encre.

3. Composition d'encre selon la revendication 2, dans laquelle le composé d'oxétane polyfonctionnel présentant une liaison -NRCO-présente une teneur de 5 à 15 % en masse par rapport à la masse totale de la composition d'encre.

4. Composition d'encre selon l'une quelconque des revendications 1 à 3, dans laquelle le composé d'oxétane polyfonctionnel présentant une liaison -NRCO- présente une masse moléculaire de 400 à 100 000.

5. Composition d'encre selon l'une quelconque des revendications 1 à 4, dans laquelle le composé d'oxétane polyfonctionnel présentant une liaison -NRCO- est un composé représenté par la formule (L), 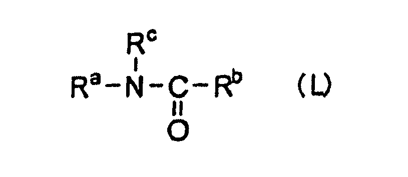 dans laquelle R^{a}, R^{b} et R^{c} représentent indépendamment un atome d'hydrogène ou un groupe organique monovalent formé à partir d'éléments choisis dans le groupe constitué du carbone, de l'hydrogène, de l'azote, de l'oxygène et du soufre (tous les R^{a}, R^{b} et R^{c} n'étant pas des atomes d'hydrogène), l'un ou deux ou plusieurs parmi R^{a}, R^{b} et R^{c} présentent au moins deux groupes oxétanyle représentés par la formule (P) ou la formule (Q) alors que tous les R^{a}, R^{b} et R^{c}, et au moins deux choisis dans le groupe constitué de R^{a}, R^{b} et R^{c} peuvent être liés pour former un cycle, 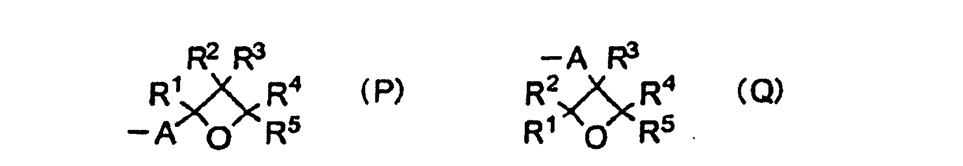 où A représente une liaison simple ou un groupe organique divalent formé à partir d'éléments choisis dans le groupe constitué du carbone, de l'hydrogène, de l'azote, de l'oxygène et du soufre, et R¹ à R⁵ représentent indépendamment un atome d'hydrogène ou un groupe hydrocarboné ayant de 1 à 20 atomes de carbone.

6. Composition d'encre selon l'une quelconque des revendications 1 à 5, dans laquelle le composé d'oxétane polyfonctionnel présentant une liaison -NRCO- est un composé présentant au moins une structure représentée par la formule (R) ou la formule (S) ci-dessous comme la liaison -NRCO-, 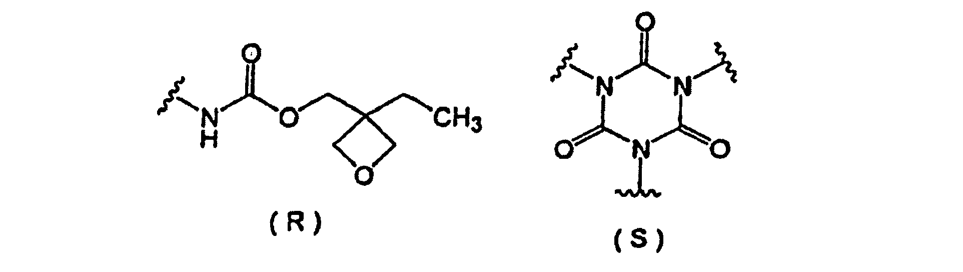 où les parties de lignes ondulées représentent indépendamment une portion de liaison à une autre portion.

7. Composition d'encre selon l'une quelconque des revendications 1 à 6, dans laquelle la composition d'encre comprend trois ou plusieurs types de composés cationiquement polymérisables.

8. Composition d'encre selon l'une quelconque des revendications 1 à 7, dans laquelle la composition d'encre comprend un ou plusieurs types de composés d'oxétane polyfonctionnels présentant une liaison -NRCO- et deux ou plusieurs types de composés cationiquement polymérisables différents d'un composé d'oxétane polyfonctionnel présentant une liaison -NRCO-.

9. Composition d'encre selon l'une quelconque des revendications 1 à 8, dans laquelle la composition d'encre comprend un composé d'amine.

10. Procédé d'enregistrement à jet d'encre comprenant :
(a¹) une étape de décharge de la composition d'encre selon l'une quelconque des revendications 1 à 9 sur un support d'enregistrement ; et
(b¹) une étape de durcissement de la composition d'encre par irradiation de la composition d'encre déchargée avec un rayonnement actinique.
